(19)

**Europäisches Patentamt**
**European Patent Office**
**Office européen des brevets**

(11)  **EP 4 258 039 B1**

(12)  # EUROPEAN PATENT SPECIFICATION

(45) Date of publication and mention
of the grant of the patent:
**27.05.2026   Bulletin 2026/22**

(51) International Patent Classification (IPC):
*G02B 27/01* (2006.01)      *G06F 3/01* (2006.01)
*H04N 13/344* (2018.01)

(21) Application number: **21909280.6**

(52) Cooperative Patent Classification (CPC):
**G02B 27/0172;** G02B 2027/0185; H04N 13/344

(22) Date of filing: **17.12.2021**

(86) International application number:
**PCT/CN2021/139033**

(87) International publication number:
**WO 2022/135284 (30.06.2022 Gazette 2022/26)**

(54)  **METHOD AND APPARATUS FOR ADJUSTING POSITION OF VIRTUAL IMAGE**

VERFAHREN UND VORRICHTUNG ZUR EINSTELLUNG DER POSITION EINES VIRTUELLEN
BILDES

PROCÉDÉ ET APPAREIL POUR RÉGLER LA POSITION D'UNE IMAGE VIRTUELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.12.2020   CN 202011554651**

(43) Date of publication of application:
**11.10.2023   Bulletin 2023/41**

(73) Proprietor: **Huawei Technologies Co., Ltd.**
**Shenzhen**
**Guangdong 518129 (CN)**

(72) Inventors:
• **GAO, Shaorui**
**Shenzhen, Guangdong 518129 (CN)**
• **WU, Jushuai**
**Shenzhen, Guangdong 518129 (CN)**
• **LUO, Weicheng**
**Shenzhen, Guangdong 518129 (CN)**

• **QIU, Meng**
**Shenzhen, Guangdong 518129 (CN)**
• **YU, Hui**
**Shenzhen, Guangdong 518129 (CN)**
• **MO, Yunneng**
**Shenzhen, Guangdong 518129 (CN)**
• **WANG, Tizheng**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
CN-A- 105 068 648      CN-A- 108 124 509
CN-A- 108 663 803      CN-A- 108 700 745
CN-A- 109 188 688      CN-A- 110 543 021
US-A1- 2013 241 805    US-A1- 2019 293 942
US-A1- 2020 166 757

**EP 4 258 039 B1**

**Description**

**TECHNICAL FIELD**

This disclosure relates to the field of display technologies, and in particular, to a display module, and a virtual image location adjustment method and apparatus.

**BACKGROUND**

With continuous development of science and technologies, an increasingly strong need for a virtual reality (virtual reality, VR) technology emerges in the fields of films and televisions, gaming, online education, web conferencing, digital exhibitions, social networking, shopping, and the like. The VR technology combines virtuality and reality, and generates a virtual world in three-dimensional space based on display optics, to provide a user with simulation of senses such as vision, so that the user has an immersive feeling and can observe objects in the three-dimensional space in real time without limitations.

However, an increasing number of researchers have found that people suffer from eye fatigue, blurred vision, headache, or dizziness when watching related content for a long time, and even found in specific cases that long-time wearing causes esotropia (esotropia) or hyperopic changes (hyperopic changes), especially during watching of three-dimensional (three dimensional, 3D) content. Researchers have then analyzed the comfort issue in depth and found that one of major factors causing the phenomenon is a vergence and accommodation conflict (vergence and accommodation conflict, VAC).

A cause of the vergence and accommodation conflict is as follows: When human eyes are observing 3D content, correct crystalline lens accommodation distances of both eyes are always fixed on a screen. However, vergences of both eyes converge at a target distance defined by a parallax, and a vergence convergence point may be in front of the screen or behind the screen. A mismatch between an accommodation distance and a vergence distance causes the vergence and accommodation conflict. The VAC is a phenomenon that occurs during watching of most 3D content, regardless of whether the 3D content is watched by using a near-eye display device or 3D glasses.

Document US 2019/293942 A1 discloses virtual reality (VR) glasses, and a lens barrel adjustment method and apparatus, and relates to the field of VR technologies. The VR glasses includes a glasses body and two lens barrels that are symmetrically disposed within the glasses body. Each of the two lens barrels includes a lens barrel body and a lens barrel kit. The lens barrel kit is provided with a first adjustment component. The lens barrel body is provided with a second adjustment component. The lens barrel kit and the lens barrel body are configured to perform relative movement through coordination of the first adjustment component and the second adjustment component.

Document US 2013/241805 A1 describes a wearable computing system which includes a head-mounted display (HMD). The HMD is configured to present a field of view that could include views of the real world environment as well as displayed images. As the viewer attempts to see objects at different real or apparent depths within the field of view, the brain may generally coordinate the eyes to jointly change a vergence angle. If the depth is known, because it may be generated by a user interface (UI), and the user is wearing an eye-tracking system, it is possible to determine at which of the objects the user intends to look. This may allow the interface to place UI elements in locations that are perceived to be very close, or even overlapping, while the wearer may be able to discriminate the object of interest, which is generally not possible with non-stereoscopic displays.

**SUMMARY**

This disclosure provides a display module, and a virtual image location adjustment methods to automatically adjust a location of a virtual image based on different preset scene types, and help alleviate a vergence and accommodation conflict. The present invention is set out by the set of appended claims. In the following, parts of the description and drawing referring to implementations or examples, which are not covered by the claims are not presented as embodiments of the invention, but as illustrative examples useful for understanding the invention. The embodiments of the invention are defined by the appended claims.

According to a first embodiment, this disclosure provides a display module. The display module may include a display assembly, an optical imaging assembly, and a virtual image location adjustment assembly. The display assembly is configured to display an image. The optical imaging assembly is configured to form a virtual image based on the image. The virtual image location adjustment assembly is configured to adjust the optical imaging assembly and/or the display assembly to adjust the virtual image to a target location, where the target location of the virtual image is related to a preset scene type to which the image belongs. For example, the optical imaging assembly may change a propagation path of light carrying the image, to form the virtual image at the target location based on the image.

According to this solution, the virtual image location adjustment assembly adjusts the optical imaging assembly

2

and/or the display assembly, so that virtual images in different preset scene types can be accurately adjusted to different locations, and a user can clearly see the image displayed by the display module. A location of the virtual image is automatically adjusted based on different preset scene types. This helps alleviate a vergence and accommodation conflict.

The preset scene type to which the image belongs is a preset scene type to which content of the image belongs, or is a preset scene type to which an object corresponding to the image belongs.

The display module may further include a control assembly. The control assembly is configured to obtain the target location of the virtual image, and control the virtual image location adjustment assembly to adjust the optical imaging assembly and/or the display assembly, to adjust the virtual image to the target location.

The control assembly controls the virtual image location adjustment assembly to adjust the optical imaging assembly and/or the display assembly, so as to adjust the virtual image to the target location.

Further, optionally, the control assembly may be configured to obtain a first preset scene type to which the image displayed by the display assembly belongs, and a correspondence between a preset scene type and a virtual image location; and determine, based on the correspondence between a preset scene type and a virtual image location, a target location corresponding to the first preset scene type.

The control assembly is configured to obtain a vision parameter, a first preset scene type to which the image displayed by the display assembly belongs, and a correspondence between a preset scene type and a virtual image location; and determine, based on the vision parameter and the correspondence between a preset scene type and a virtual image location, a target location corresponding to the first preset scene type.

When the image belongs to different preset scene types, the display module presents the virtual image at different target locations. In this way, virtual images can be formed at different target locations based on images belonging to different preset scene types. This helps reduce the vergence and accommodation conflict.

The preset scene type is an office scene type, a reading scene type, a conference scene type, an interactive game scene type, or a video scene type.

When the preset scene type to which the image belongs is the office scene type, a range of a distance between the optical imaging assembly and the target location at which the head-mounted display device presents the virtual image is [0.1, 10] diopters D; when the preset scene type to which the image belongs is the reading scene type, a range of a distance between the optical imaging assembly and the target location at which the head-mounted display device presents the virtual image is [0.5, 10] diopters D; when the preset scene type to which the image belongs is the conference scene type, a range of a distance between the optical imaging assembly and the target location at which the head-mounted display device presents the virtual image is [0.1, 7.1] diopters D; when the preset scene type to which the image belongs is the interactive game scene type, a range of a distance between the optical imaging assembly and the target location at which the head-mounted display device presents the virtual image is [0.5, 7.5] diopters D; or when the preset scene type to which the image belongs is the video scene type, a range of a distance between the optical imaging assembly and the target location at which the head-mounted display device presents the virtual image is [0.1, 7] diopters D.

Further, optionally, when the preset scene type to which the image belongs is the conference scene type, a range of a distance between the optical imaging assembly and the target location at which the head-mounted display device presents the virtual image is [0.1, 3.0] diopters D; when the preset scene type to which the image belongs is the interactive game scene type, a range of a distance between the optical imaging assembly and the target location at which the head-mounted display device presents the virtual image is [3.0, 5.0] diopters D; or when the preset scene type to which the image belongs is the video scene type, a range of a distance between the optical imaging assembly and the target location at which the head-mounted display device presents the virtual image is (5.0, 7] diopters D.

In a possible implementation, a distance between the optical imaging assembly and a target location of the virtual image that corresponds to the video scene type is greater than a distance between the optical imaging assembly and a target location of the virtual image that corresponds to the conference scene type; or a distance between the optical imaging assembly and a target location of the virtual image that corresponds to the conference scene type is greater than a distance between the optical imaging assembly and a target location of the virtual image that corresponds to the reading scene type.

In another possible implementation, a distance between the optical imaging assembly and a target location of the virtual image that corresponds to the video scene type is greater than a distance between the optical imaging assembly and a target location of the virtual image that corresponds to the conference scene type; a distance between the optical imaging assembly and a target location of the virtual image that corresponds to the conference scene type is greater than a distance between the optical imaging assembly and a target location of the virtual image that corresponds to the office scene type; or a distance between the optical imaging assembly and a target location of the virtual image that corresponds to the office scene type is greater than a distance between the optical imaging assembly and a target location of the virtual image that corresponds to the reading scene type.

In a possible implementation, the virtual image location adjustment assembly includes a driving assembly, and the driving assembly is configured to drive the optical imaging assembly and/or the display assembly to move, to adjust the

EP 4 258 039 B1

virtual image to the target location.

In a possible implementation, the virtual image location adjustment assembly includes a driving assembly and a location sensing assembly. The location sensing assembly may be configured to determine locations of the optical imaging assembly and/or the display assembly, where the locations of the optical imaging assembly and/or the display assembly are used to determine a first distance between the display assembly and the optical imaging assembly, and the first distance is used to determine to-move distances of the optical imaging assembly and/or the display assembly. Alternatively, the location sensing assembly may be configured to determine a first distance between the optical imaging assembly and/or the display assembly. The driving assembly may be configured to drive, based on the to-move distances, the optical imaging assembly and/or the display assembly to move, to adjust the virtual image to the target location.

In a possible implementation, adjustment precision of the virtual image location adjustment assembly is determined based on a driving error of the driving assembly and a location measurement error of the location sensing assembly.

For example, the adjustment precision of the virtual image location adjustment assembly is not greater than 0.2 diopter D. Further, optionally, the optical imaging assembly includes a semi-transparent and semi-reflective mirror. The driving error of the driving assembly is less than $\frac{1}{4000} \times \left( \frac{r1r2}{(1-n) \times r1 + 2n \times r2} \right)^2$, and the location measurement error of the location sensing assembly is less than $\frac{1}{10000} \times \left( \frac{r1r2}{(1-n) \times r1 + 2n \times r2} \right)^2$, where r1 is a most approximate spherical radius of a refracting surface of the semi-transparent and semi-reflective mirror, r2 is a most approximate spherical radius of a semi-transparent and semi-reflective surface of the semi-transparent and semi-reflective mirror, and n is a refractive index of a material of the semi-transparent and semi-reflective mirror. In a possible implementation, an adjustment range of the virtual image location adjustment assembly is determined based on a driving range of the driving assembly and a measurement range of the location sensing assembly.

For example, the adjustment range of the virtual image location adjustment assembly is not less than 5 diopters D. Further, optionally, the optical imaging assembly includes a semi-transparent and semi-reflective mirror. The driving range of the driving assembly is greater than or equal to $\frac{1}{300} \times \left( \frac{r1r2}{(1-n) \times r1 + 2n \times r2} \right)^2$, and the measurement range of the location sensing assembly is greater than or equal to $2 \times \frac{1}{300} \times \left( \frac{r1r2}{(1-n) \times r1 + 2n \times r2} \right)^2$, where r1 is a most approximate spherical radius of a refracting surface of the semi-transparent and semi-reflective mirror, r2 is a most approximate spherical radius of a semi-transparent and semi-reflective surface of the semi-transparent and semi-reflective mirror, and n is a refractive index of a material of the semi-transparent and semi-reflective mirror.

In a possible implementation, the virtual image location adjustment assembly includes a driving assembly, and the optical imaging assembly includes a zoom lens. The driving assembly is configured to change a voltage signal or a current signal that is applied to the zoom lens, to change a focal length of the zoom lens, so as to adjust the virtual image to the target location.

Further, optionally, the zoom lens may be a liquid crystal lens, a liquid lens, or a geometric phase lens.

In another possible implementation, the virtual image location adjustment assembly includes a driving assembly and a location sensing assembly, and the optical imaging assembly includes a zoom lens. The location sensing assembly may be configured to determine a first focal length of the zoom lens, where the first focal length is used to determine a focal length adjustment amount of the zoom lens. The driving assembly may be configured to change, based on the focal length adjustment amount, a voltage signal or a current signal that is applied to the zoom lens, to adjust the virtual image to the target location.

In a possible implementation, the virtual image location adjustment assembly includes a driving assembly and a location sensing assembly, and the optical imaging assembly includes a first diffractive optical element and a second diffractive optical element. The location sensing assembly is configured to determine relative angles of the first diffractive optical element and the second diffractive optical element, where the relative angles of the first diffractive optical element and the second diffractive optical element are used to determine to-rotate angles of the first diffractive optical element and/or the second diffractive optical element. The driving assembly is configured to drive, based on the to-rotate angles, the first diffractive optical element and/or the second diffractive optical element to rotate, to adjust the virtual image to the target location.

In a possible implementation, the virtual image location adjustment assembly includes a driving assembly and a location sensing assembly, and the optical imaging assembly includes a first refractive optical element and a second refractive optical element. The location sensing assembly is configured to: in a direction perpendicular to a principal optical axis of the first refractive optical element and the second refractive optical element, determine a first distance between the first refractive optical element and the second refractive optical element, where the first distance is used to determine to-move distances of the first refractive optical element and/or the second refractive optical element. The driving assembly is

4

configured to drive, based on the to-move distances, the first refractive optical element and/or the second refractive optical element to move in the direction perpendicular to the principal optical axis, to adjust the virtual image to the target location.

In a possible implementation, the display module further includes an eye tracking assembly. The eye tracking assembly is configured to determine a convergence depth of both eyes focused on the image. The virtual image location adjustment assembly is configured to drive, based on the convergence depth, the optical imaging assembly and/or the display assembly to move, to adjust the virtual image to the target location.

The virtual image location adjustment assembly adjusts the location of the virtual image, so that the user can clearly see the image displayed by the display assembly. In addition, this can help alleviate the vergence and accommodation conflict.

In a possible implementation, an absolute value of a difference that is between a binocular convergence depth of human eyes and a distance between the target location of the virtual image and the human eyes is less than a threshold. In this way, the virtual image is adjusted to the target location. This helps alleviate the vergence and accommodation conflict.

Further, optionally, a range of the threshold is [0 diopters D, 1 diopter D].

In a possible implementation, the display module may further include a cylindrical lens and a rotary driving assembly, and the rotary driving assembly is configured to change an optical axis of the cylindrical lens.

Further, the cylindrical lens is located between the display assembly and the optical imaging assembly, or is located on a side, away from the display assembly, of the optical imaging assembly.

According to a second embodiment, this disclosure provides a virtual image location adjustment method. The method may be applied to a head-mounted display device. The method may include: obtaining an image displayed by a head-mounted display device and a target location of a virtual image corresponding to the image; and forming a virtual image at a target location based on the image, where the target location of the virtual image is related to a preset scene type to which the image belongs.

The preset scene type to which the image belongs is a preset scene type to which content of the image belongs, or is a preset scene type to which an object corresponding to the image belongs.

When the image belongs to different preset scene types, the head-mounted display device presents the virtual image at different target locations.

The preset scene type includes an office scene type, a reading scene type, a conference scene type, an interactive game scene type, or a video scene type.

When the preset scene type to which the image belongs is the office scene type, a range of a distance between the optical imaging assembly and the target location at which the head-mounted display device presents the virtual image is [0.1, 10] diopters D; when the preset scene type to which the image belongs is the reading scene type, a range of a distance between the optical imaging assembly and the target location at which the head-mounted display device presents the virtual image is [0.5, 10] diopters D; when the preset scene type to which the image belongs is the conference scene type, a range of a distance between the optical imaging assembly and the target location at which the head-mounted display device presents the virtual image is [0.1, 7.1] diopters D; when the preset scene type to which the image belongs is the interactive game scene type, a range of a distance between the optical imaging assembly and the target location at which the head-mounted display device presents the virtual image is [0.5, 7.5] diopters D; or when the preset scene type to which the image belongs is the video scene type, a range of a distance between the optical imaging assembly and the target location at which the head-mounted display device presents the virtual image is [0.1, 7] diopters D.

Based on whether the head-mounted display device includes a control assembly, two manners of obtaining the target location corresponding to the image may be described as examples.

Manner 1: based on that the head-mounted display device includes a control assembly

In a possible implementation, a first preset scene type to which the image displayed by the head-mounted display device belongs, and a correspondence between a preset scene type and a virtual image location may be obtained; and a target location corresponding to the first preset scene type is determined based on the correspondence between a preset scene type and a virtual image location. Further, optionally, the first preset scene type to which the image belongs and that is sent by a terminal device may be received; or the first preset scene type to which the image belongs may be determined.

Manner 2: based on that the head-mounted display device does not include a control assembly

In a possible implementation, the target location, sent by a terminal device, of the virtual image corresponding to the image may be received.

The following describes four possible implementations of forming the virtual image at the target location based on the image as examples.

Implementation 1: The head-mounted display device determines to-move distances of a display assembly and/or an optical imaging assembly.

In a possible implementation, the head-mounted display device includes the display assembly and the optical imaging assembly. Further, a first distance between the display assembly and the optical imaging assembly may be obtained; the to-move distances of the display assembly and/or the optical imaging assembly are determined based on the first distance and the target location; and the display assembly and/or the optical imaging assembly are driven based on the to-move distances to move, to adjust the virtual image to the target location.

Implementation 2: The head-mounted display device receives to-move distances, sent by the terminal device, of a display assembly and/or an optical imaging assembly.

In a possible implementation, the head-mounted display device includes the display assembly and the optical imaging assembly. Further, optionally, the to-move distances, sent by the terminal device, of the display assembly and/or the optical imaging assembly may be received; and the display assembly and/or the optical imaging assembly are driven based on the to-move distances to move, to adjust the virtual image to the target location.

Implementation 3: The head-mounted display device determines a focal length adjustment amount of a zoom lens.

In a possible implementation, the head-mounted display device includes a display assembly and an optical imaging assembly, and the optical imaging assembly includes the zoom lens. Further, optionally, a first focal length of the zoom lens may be determined; the focal length adjustment amount of the zoom lens is determined based on the first focal length and the target location; and a voltage signal or a current signal that is applied to the zoom lens is changed based on the focal length adjustment amount, to adjust the virtual image to the target location.

Implementation 4: The head-mounted display device receives a focal length adjustment amount, sent by the terminal device, of a zoom lens.

In a possible implementation, the head-mounted display device includes a display assembly and an optical imaging assembly, and the optical imaging assembly includes the zoom lens. Further, optionally, the focal length adjustment amount, sent by the terminal device, of the zoom lens may be received; and a voltage signal or a current signal that is applied to the zoom lens is changed based on the focal length adjustment amount, to adjust the virtual image to the target location.

A vision parameter, a first preset scene type to which the image displayed by the display assembly belongs, and a correspondence between a preset scene type and a virtual image location are obtained; and a target location corresponding to the first preset scene type is determined based on the vision parameter and the correspondence between a preset scene type and a virtual image location. In a possible implementation, an absolute value of a difference that is between a binocular convergence depth of human eyes and a distance between the target location of the virtual image and the human eyes is less than a threshold.

Further, optionally, a range of the threshold is [0 diopters D, 1 diopter D].

In a possible implementation, an operation mode of the virtual image location adjustment assembly is determined. The operation mode includes an automatic mode and a manual mode. In the automatic mode, a driving assembly adjusts the virtual image to the target location based on a to-move distance, a voltage signal, or a current signal. In the manual mode, a user adjusts the virtual image to the target location by using a rotary cam focusing mechanism.

In a possible implementation, M preset scenes and virtual image locations respectively corresponding to the M preset scenes are obtained, where M is an integer greater than 1; statistics are collected on a distribution relationship between the M preset scenes and the virtual image locations respectively corresponding to the M preset scenes; and the correspondence between a preset scene and a virtual image location is determined based on the distribution relationship.

In a possible implementation, M preset scenes and virtual image locations respectively corresponding to the M preset scenes are obtained, where M is an integer greater than 1; and the M preset scenes and the virtual image locations respectively corresponding to the M preset scenes are input to an artificial intelligence algorithm, to obtain the correspondence between a preset scene and a virtual image location.

Further, optionally, virtual image locations that correspond to the M preset scenes and that are input by a user are received; or binocular parallaxes for images in the M preset scenes are obtained, and the virtual image locations corresponding to the M preset scenes are respectively determined based on the binocular parallaxes for the images in the M preset scenes.

According to a third embodiment, this disclosure provides a virtual image location adjustment method. The method may be applied to a terminal device, and the method may include: determining a first preset scene type to which an image belongs, where the image is displayed by a head-mounted display device; obtaining a correspondence between a preset scene type and a virtual image location; determining, based on the correspondence between a preset scene type and a virtual image location, a target location that corresponds to the first preset scene type and at which the head-mounted display device presents a virtual image; and controlling, based on the target location, the head-mounted display device to form the virtual image at the target location based on the image, where the target location of the virtual image is related to a preset scene type to which the image belongs.

The following describes two methods for controlling the head-mounted display device to form the virtual image at the target location based on the image as examples.

Method 1.1: A first control instruction is sent to the head-mounted display device.

In a possible implementation, a first distance between a display assembly and an optical imaging assembly in the head-mounted display device is obtained; to-move distances of the display assembly and/or the optical imaging assembly are determined based on the first distance and the target location; and the first control instruction is generated based on the to-move distances, and the first control instruction is sent to the head-mounted display device, where the first control instruction is used to control the display assembly and/or the optical imaging assembly to move, to adjust the virtual image to the target location.

Further, optionally, locations, sent by a virtual image location adjustment assembly in the head-mounted display device, of the optical imaging assembly and/or the display assembly may be received; and the first distance is determined based on the locations of the optical imaging assembly and/or the display assembly.

Method 1.2: A second control instruction is sent to the head-mounted display device.

In a possible implementation, a first focal length of an optical imaging assembly in the head-mounted display device is obtained; a focal length adjustment amount of the optical imaging assembly is determined based on the first focal length and the target location; and the second control instruction is generated based on the focal length adjustment amount, and the second control instruction is sent to the head-mounted display device, where the second control instruction is used to control a voltage signal or a current signal that is applied to the optical imaging assembly, to adjust a focal length of the optical imaging assembly, so as to adjust the virtual image to the target location.

According to a fourth embodiment, this disclosure provides a virtual image location adjustment method. The method may be applied to a head-mounted display device. The method may include: displaying a first interface; when a user selects a first object on the first interface, obtaining a target location of a virtual image corresponding to the first object, where the target location of the virtual image is related to a preset scene type to which the first object belongs; and for an image displayed upon triggering by the selection of the first object, forming the virtual image at the target location based on the image.

An object may be an application.

When the first object belongs to different preset scene types, the head-mounted display device presents the virtual image at different target locations.

The preset scene type includes an office scene type, a reading scene type, a conference scene type, an interactive game scene type, or a video scene type.

When the preset scene type to which the image belongs is the office scene type, a range of a distance between the optical imaging assembly and the target location at which the head-mounted display device presents the virtual image is [0.1, 10] diopters D; when the preset scene type to which the image belongs is the reading scene type, a range of a distance between the optical imaging assembly and the target location at which the head-mounted display device presents the virtual image is [0.5, 10] diopters D; when the preset scene type to which the image belongs is the conference scene type, a range of a distance between the optical imaging assembly and the target location at which the head-mounted display device presents the virtual image is [0.1, 7.1] diopters D; when the preset scene type to which the image belongs is the interactive game scene type, a range of a distance between the optical imaging assembly and the target location at which the head-mounted display device presents the virtual image is [0.5, 7.5] diopters D; or when the preset scene type to which the image belongs is the video scene type, a range of a distance between the optical imaging assembly and the target location at which the head-mounted display device presents the virtual image is [0.1, 7] diopters D.

The following describes two manners of obtaining the target location corresponding to the first object as examples.

Manner a: The head-mounted display device includes a control assembly.

In a possible implementation, a second preset scene type to which the first object belongs, and a correspondence between a preset scene type and a virtual image location are obtained; and a target location corresponding to the second preset scene type is determined based on the correspondence between a preset scene type and a virtual image location.

Manner b: The head-mounted display device does not include a control assembly.

In a possible implementation, the target location, sent by a terminal device, of the virtual image corresponding to the first object is received.

The following describes four possible implementations of forming the virtual image at the target location based on the image as examples.

Implementation A: The head-mounted display device determines to-move distances of a display assembly and/or an optical imaging assembly.

In a possible implementation, the head-mounted display device includes the display assembly and the optical imaging assembly. Further, a first distance between the display assembly and the optical imaging assembly may be obtained; the to-move distances of the display assembly and/or the optical imaging assembly are determined based on the first distance and the target location; and the display assembly and/or the optical imaging assembly are driven based on the to-move distances to move, to adjust the virtual image to the target location.

Implementation B: The head-mounted display device receives to-move distances, sent by the terminal device, of a display assembly and/or an optical imaging assembly.

In a possible implementation, the head-mounted display device includes the display assembly and the optical imaging assembly. Further, optionally, the to-move distances, sent by the terminal device, of the display assembly and/or the optical imaging assembly may be received; and the display assembly and/or the optical imaging assembly are driven based on the to-move distances to move, to adjust the virtual image to the target location.

Implementation C: The head-mounted display device determines a focal length adjustment amount of a zoom lens.

In a possible implementation, the head-mounted display device includes a display assembly and an optical imaging assembly, and the optical imaging assembly includes the zoom lens. Further, optionally, a first focal length of the zoom lens may be determined; the focal length adjustment amount of the zoom lens is determined based on the first focal length and the target location; and a voltage signal or a current signal that is applied to the zoom lens is changed based on the focal length adjustment amount, to adjust the virtual image to the target location.

Implementation D: The head-mounted display device receives a focal length adjustment amount, sent by the terminal device, of a zoom lens.

In a possible implementation, the head-mounted display device includes a display assembly and an optical imaging assembly, and the optical imaging assembly includes the zoom lens. Further, optionally, the focal length adjustment amount, sent by the terminal device, of the zoom lens may be received; and a voltage signal or a current signal that is applied to the zoom lens is changed based on the focal length adjustment amount, to adjust the virtual image to the target location.

A vision parameter, a second preset scene type to which the first object belongs, and a correspondence between a preset scene type and a virtual image location are obtained; and a target location corresponding to the second preset scene type is determined based on the vision parameter and the correspondence between a preset scene type and a virtual image location.

In a possible implementation, an absolute value of a difference that is between a binocular convergence depth of human eyes and a distance between the target location of the virtual image and the human eyes is less than a threshold. Further, optionally, a range of the threshold is [0 diopters D, 1 diopter D].

In a possible implementation, an absolute value of a difference that is between a binocular convergence depth of human eyes and a distance between the target location of the virtual image and the human eyes is less than a threshold.

In a possible implementation, a range of the threshold is [0 diopters D, 1 diopter D].

In a possible implementation, an operation mode of the virtual image location adjustment assembly is determined. The operation mode includes an automatic mode and a manual mode. In the automatic mode, a driving assembly adjusts the virtual image to the target location based on a to-move distance, a voltage signal, or a current signal. In the manual mode, a user adjusts the virtual image to the target location by using a rotary cam focusing mechanism.

In a possible implementation, M preset scenes and virtual image locations respectively corresponding to the M preset scenes are obtained, where M is an integer greater than 1; statistics are collected on a distribution relationship between the M preset scenes and the virtual image locations respectively corresponding to the M preset scenes; and the correspondence between a preset scene and a virtual image location is determined based on the distribution relationship.

In a possible implementation, M preset scenes and virtual image locations respectively corresponding to the M preset scenes are obtained, where M is an integer greater than 1; and the M preset scenes and the virtual image locations respectively corresponding to the M preset scenes are input to an artificial intelligence algorithm, to obtain the correspondence between a preset scene and a virtual image location.

According to a fifth embodiment, this disclosure provides a virtual image location adjustment method. The method may be applied to a terminal device. The method may include: obtaining a first object selected by a user on a first interface displayed by a head-mounted display device, a second preset scene type to which the first object belongs, and a correspondence between a preset scene type and a virtual image location; determining, based on the correspondence between a preset scene type and a virtual image location, a target location that corresponds to the second preset scene type and at which the head-mounted display device presents a virtual image; and controlling, based on the target location, the head-mounted display device to form the virtual image at the target location based on the image, where the target location of the virtual image is related to a preset scene type to which the first object belongs.

The following describes two methods for controlling the head-mounted display device to form the virtual image at the target location based on the image as examples.

Method 2.1: A first control instruction is sent to the head-mounted display device.

In a possible implementation, a first distance between a display assembly and an optical imaging assembly in the head-mounted display device is obtained; to-move distances of the display assembly and/or the optical imaging assembly are determined based on the first distance and the target location; and the first control instruction is generated based on the to-move distances, and the first control instruction is sent to the head-mounted display device, where the first control instruction is used to control the display assembly and/or the optical imaging assembly to move, to adjust the virtual image to the target location.

Further, optionally, locations, sent by a virtual image location adjustment assembly in the head-mounted display device, of the optical imaging assembly and/or the display assembly may be received; and the first distance is determined based on the locations of the optical imaging assembly and/or the display assembly.

Method 2.2: A second control instruction is sent to the head-mounted display device.

In a possible implementation, a first focal length of an optical imaging assembly in the head-mounted display device is obtained; a focal length adjustment amount of the optical imaging assembly is determined based on the first focal length and the target location; and the second control instruction is generated based on the focal length adjustment amount, and the second control instruction is sent to the head-mounted display device, where the second control instruction is used to control a voltage signal or a current signal that is applied to the optical imaging assembly, to adjust a focal length of the optical imaging assembly, so as to adjust the virtual image to the target location.

According to a sixth embodiment, this disclosure provides a virtual image location adjustment method, applied to a display module. The display module may include a display assembly, an optical imaging assembly, and a virtual image location adjustment assembly. The display assembly is configured to display an image. The optical imaging assembly is configured to form a virtual image based on the image. The virtual image location adjustment assembly is configured to adjust the optical imaging assembly and/or the display assembly. The method may include: obtaining the image displayed by the display assembly and a target location of the virtual image corresponding to the image, where the target location of the virtual image is related to a preset scene type to which the image belongs; and controlling the virtual image location adjustment assembly to adjust the optical imaging assembly and/or the display assembly, to form the virtual image at the target location based on the image.

The preset scene type to which the image belongs is a preset scene type to which content of the image belongs, or is a preset scene type to which an object corresponding to the image belongs.

When the image belongs to different preset scene types, the display module presents the virtual image at different target locations. The preset scene type includes an office scene type, a reading scene type, a conference scene type, an interactive game scene type, or a video scene type.

When the preset scene type to which the image belongs is the office scene type, a range of a distance between the optical imaging assembly and the target location at which the head-mounted display device presents the virtual image is [0.1, 10] diopters D; when the preset scene type to which the image belongs is the reading scene type, a range of a distance between the optical imaging assembly and the target location at which the head-mounted display device presents the virtual image is [0.5, 10] diopters D; when the preset scene type to which the image belongs is the conference scene type, a range of a distance between the optical imaging assembly and the target location at which the head-mounted display device presents the virtual image is [0.1, 7.1] diopters D; when the preset scene type to which the image belongs is the interactive game scene type, a range of a distance between the optical imaging assembly and the target location at which the head-mounted display device presents the virtual image is [0.5, 7.5] diopters D; or when the preset scene type to which the image belongs is the video scene type, a range of a distance between the optical imaging assembly and the target location at which the head-mounted display device presents the virtual image is [0.1, 7] diopters D.

Based on whether the display module includes a control assembly, two manners of obtaining the target location corresponding to the image may be described as examples.

Manner 1: based on that the display module includes a control assembly

In a possible implementation, the control assembly may obtain a first preset scene type to which the image displayed by the display module belongs, and a correspondence between a preset scene type and a virtual image location; and determine, based on the correspondence between a preset scene type and a virtual image location, a target location corresponding to the first preset scene type.

Further, optionally, the control assembly may receive the first preset scene type to which the image belongs and that is sent by a terminal device; or the control assembly may determine the first preset scene type to which the image belongs.

Manner 2: based on that the display module does not include a control assembly

In a possible implementation, the target location, sent by a terminal device, of the virtual image corresponding to the image may be received.

The following describes four possible implementations of forming the virtual image at the target location based on the image as examples.

Implementation 1: To-move distances of the display assembly and/or the optical imaging assembly are determined.

In a possible implementation, a first distance between the display assembly and the optical imaging assembly may be obtained; the to-move distances of the display assembly and/or the optical imaging assembly are determined based on the first distance and the target location; and the display assembly and/or the optical imaging assembly are driven based on the to-move distances to move, to adjust the virtual image to the target location.

Implementation 2: To-move distances, sent by the terminal device, of the display assembly and/or the optical imaging assembly are received.

In a possible implementation, the to-move distances, sent by the terminal device, of the display assembly and/or the optical imaging assembly may be received; and the display assembly and/or the optical imaging assembly are driven based on the to-move distances to move, to adjust the virtual image to the target location.

Implementation 3: The optical imaging assembly includes a zoom lens, and a focal length adjustment amount of the zoom lens is determined.

In a possible implementation, a first focal length of the zoom lens may be determined; the focal length adjustment amount of the zoom lens is determined based on the first focal length and the target location; and a voltage signal or a current signal that is applied to the zoom lens is changed based on the focal length adjustment amount, to adjust the virtual image to the target location.

Implementation 4: The optical imaging assembly includes a zoom lens, and a focal length adjustment amount, sent by the terminal device, of the zoom lens is received.

In a possible implementation, the focal length adjustment amount, sent by the terminal device, of the zoom lens may be received; and a voltage signal or a current signal that is applied to the zoom lens is changed based on the focal length adjustment amount, to adjust the virtual image to the target location.

A vision parameter, a first preset scene type to which the image displayed by the display assembly belongs, and a correspondence between a preset scene type and a virtual image location are obtained; and a target location corresponding to the first preset scene type is determined based on the vision parameter and the correspondence between a preset scene type and a virtual image location. In a possible implementation, an absolute value of a difference that is between a binocular convergence depth of human eyes and a distance between the target location of the virtual image and the human eyes is less than a threshold. Further, optionally, a range of the threshold is [0 diopters D, 1 diopter D].

According to a seventh embodiment, this disclosure provides a virtual image location adjustment method, applied to a display module. The display module includes a display assembly, an optical imaging assembly, and a virtual image location adjustment assembly. The display assembly is configured to display an image. The optical imaging assembly is configured to form a virtual image based on the image. The virtual image location adjustment assembly is configured to adjust the optical imaging assembly and/or the display assembly. The method includes: displaying a first interface; when a user selects a first object on the first interface, obtaining a target location of a virtual image corresponding to the first object, where the target location of the virtual image is related to a preset scene type to which the first object belongs; and for an image displayed by the display assembly upon triggering by the selection of the first object, controlling the virtual image location adjustment assembly to adjust the optical imaging assembly and/or the display assembly, to form the virtual image at the target location based on the image.

An object may be an application.

When the first object belongs to different preset scene types, the display module presents the virtual image at different target locations.

The preset scene type includes an office scene type, a reading scene type, a conference scene type, an interactive game scene type, or a video scene type.

When the preset scene type to which the image belongs is the office scene type, a range of a distance between the optical imaging assembly and the target location at which the head-mounted display device presents the virtual image is [0.1, 10] diopters D; when the preset scene type to which the image belongs is the reading scene type, a range of a distance between the optical imaging assembly and the target location at which the head-mounted display device presents the virtual image is [0.5, 10] diopters D; when the preset scene type to which the image belongs is the conference scene type, a range of a distance between the optical imaging assembly and the target location at which the head-mounted display device presents the virtual image is [0.1, 7.1] diopters D; when the preset scene type to which the image belongs is the interactive game scene type, a range of a distance between the optical imaging assembly and the target location at which the head-mounted display device presents the virtual image is [0.5, 7.5] diopters D; or when the preset scene type to which the image belongs is the video scene type, a range of a distance between the optical imaging assembly and the target location at which the head-mounted display device presents the virtual image is [0.1, 7] diopters D.

The following describes two manners of obtaining the target location corresponding to the first object as examples.

Manner a: The display module includes a control assembly.

In a possible implementation, a second preset scene type to which the first object belongs, and a correspondence between a preset scene type and a virtual image location are obtained; and a target location corresponding to the second preset scene type is determined based on the correspondence between a preset scene type and a virtual image location.

Manner b: The display module does not include a control assembly.

In a possible implementation, the target location, sent by a terminal device, of the virtual image corresponding to the first object is received.

The following describes four possible implementations of forming the virtual image at the target location based on the image as examples.

Implementation A: To-move distances of the display assembly and/or the optical imaging assembly are determined.

In a possible implementation, a first distance between the display assembly and the optical imaging assembly may be obtained; the to-move distances of the display assembly and/or the optical imaging assembly are determined based on the first distance and the target location; and the display assembly and/or the optical imaging assembly are driven based on the to-move distances to move, to adjust the virtual image to the target location.

Implementation B: To-move distances, sent by the terminal device, of the display assembly and/or the optical imaging assembly may be received.

In a possible implementation, the to-move distances, sent by the terminal device, of the display assembly and/or the optical imaging assembly may be received; and the display assembly and/or the optical imaging assembly are driven based on the to-move distances to move, to adjust the virtual image to the target location.

Implementation C: The optical imaging assembly includes a zoom lens, and a focal length adjustment amount of the zoom lens is determined.

In a possible implementation, a first focal length of the zoom lens may be determined; the focal length adjustment amount of the zoom lens is determined based on the first focal length and the target location; and a voltage signal or a current signal that is applied to the zoom lens is changed based on the focal length adjustment amount, to adjust the virtual image to the target location.

Implementation D: The optical imaging assembly includes a zoom lens, and a focal length adjustment amount, sent by the terminal device, of the zoom lens may be received.

In a possible implementation, the focal length adjustment amount, sent by the terminal device, of the zoom lens may be received; and a voltage signal or a current signal that is applied to the zoom lens is changed based on the focal length adjustment amount, to adjust the virtual image to the target location.

A vision parameter, a second preset scene type to which the first object belongs, and a correspondence between a preset scene type and a virtual image location are obtained; and a target location corresponding to the second preset scene type is determined based on the vision parameter and the correspondence between a preset scene type and a virtual image location.

In a possible implementation, an absolute value of a difference that is between a binocular convergence depth of human eyes and a distance between the target location of the virtual image and the human eyes is less than a threshold. Further, optionally, a range of the threshold is [0 diopters D, 1 diopter D].

According to an eighth embodiment, this disclosure provides a virtual image location adjustment apparatus. The virtual image location adjustment apparatus is configured to implement the second embodiment or any method in the second embodiment, and includes corresponding functional modules that are respectively configured to implement steps in the method. A function may be implemented by hardware, or may be implemented by hardware executing corresponding software. The hardware or the software includes one or more modules corresponding to the function.

In a possible implementation, the virtual image location adjustment apparatus may be used in a head-mounted display device, and may include an obtaining module and a virtual image forming module. The obtaining module is configured to obtain an image displayed by the head-mounted display device and a target location of a virtual image corresponding to the image. The virtual image forming module is configured to form a virtual image at a target location based on the image, where the target location of the virtual image is related to a preset scene type to which the image belongs.

When the image belongs to different preset scene types, the virtual image location adjustment apparatus presents the virtual image at different target locations.

The preset scene type includes an office scene type, a reading scene type, a conference scene type, an interactive game scene type, or a video scene type.

When the preset scene type to which the image belongs is the office scene type, a range of a distance between the optical imaging assembly and the target location at which the head-mounted display device presents the virtual image is [0.1, 10] diopters D; when the preset scene type to which the image belongs is the reading scene type, a range of a distance between the optical imaging assembly and the target location at which the head-mounted display device presents the virtual image is [0.5, 10] diopters D; when the preset scene type to which the image belongs is the conference scene type, a range of a distance between the optical imaging assembly and the target location at which the head-mounted display device presents the virtual image is [0.1, 7.1] diopters D; when the preset scene type to which the image belongs is the interactive game scene type, a range of a distance between the optical imaging assembly and the target location at which the head-mounted display device presents the virtual image is [0.5, 7.5] diopters D; or when the preset scene type to which the image belongs is the video scene type, a range of a distance between the optical imaging assembly and the target location at which the head-mounted display device presents the virtual image is [0.1, 7] diopters D.

The preset scene type to which the image belongs includes any one of the following: a preset scene type to which content of the image belongs, or a preset scene type to which an object corresponding to the image belongs.

In a possible implementation, the obtaining module is configured to obtain a first preset scene type to which the image displayed by the head-mounted display device belongs; obtain a correspondence between a preset scene type and a virtual image location; and determine, based on the correspondence between a preset scene type and a virtual image location, a target location corresponding to the first preset scene type.

In a possible implementation, the obtaining module is configured to receive the first preset scene type to which the image belongs and that is sent by a terminal device, or determine the first preset scene type to which the image belongs.

In a possible implementation, the obtaining module is configured to receive the target location, sent by a terminal device, of the virtual image corresponding to the image.

In a possible implementation, the obtaining module is configured to obtain a first distance between a display assembly and an optical imaging assembly in the head-mounted display device, and determine to-move distances of the display assembly and/or the optical imaging assembly based on the first distance and the target location; and the virtual image forming module is configured to drive, based on the to-move distances, the display assembly and/or the optical imaging assembly included in the virtual image location adjustment apparatus to move, to adjust the virtual image to the target location.

In a possible implementation, the obtaining module is configured to receive to-move distances, sent by the terminal device, of a display assembly and/or an optical imaging assembly in the head-mounted display device; and the virtual image forming module is configured to drive, based on the to-move distances, the display assembly and/or the optical imaging assembly to move, to adjust the virtual image to the target location.

In a possible implementation, the obtaining module is configured to determine a first focal length of a zoom lens in the head-mounted display device, and determine a focal length adjustment amount of the zoom lens based on the first focal length and the target location; and the virtual image forming module is configured to change, based on the focal length adjustment amount, a voltage signal or a current signal that is applied to the zoom lens, to adjust the virtual image to the target location.

In a possible implementation, the obtaining module is configured to receive a focal length adjustment amount, sent by the terminal device, of a zoom lens in the head-mounted display device; and the virtual image forming module is configured to change, based on the focal length adjustment amount, a voltage signal or a current signal that is applied to the zoom lens, to adjust the virtual image to the target location.

The obtaining module is configured to obtain a vision parameter, a first preset scene type to which the image displayed by the head-mounted display device belongs, and a correspondence between a preset scene type and a virtual image location; and determine, based on the vision parameter and the correspondence between a preset scene type and a virtual image location, a target location corresponding to the first preset scene type.

In a possible implementation, an absolute value of a difference that is between a binocular convergence depth of human eyes and a distance between the target location of the virtual image and the human eyes is less than a threshold. Further, optionally, a range of the threshold is [0 diopters D, 1 diopter D].

According to a ninth embodiment, this disclosure provides a virtual image location adjustment apparatus. The virtual image location adjustment apparatus is configured to implement the third embodiment or any method in the third embodiment, and includes corresponding functional modules that are respectively configured to implement steps in the method. A function may be implemented by hardware, or may be implemented by hardware executing corresponding software. The hardware or the software includes one or more modules corresponding to the function.

In a possible implementation, the virtual image location adjustment apparatus may be used in a terminal device, and the virtual image location adjustment apparatus may include a determining module, an obtaining module, and a control module. The determining module is configured to determine a first preset scene type to which an image belongs, where the image is displayed by a head-mounted display device. The obtaining module is configured to obtain a correspondence between a preset scene type and a virtual image location. The determining module is further configured to determine, based on the correspondence between a preset scene type and a virtual image location, a target location that corresponds to the first preset scene type and at which the head-mounted display device presents a virtual image, where the target location of the virtual image is related to a preset scene type to which the image belongs. The control module is configured to control, based on the target location, the head-mounted display device to form the virtual image at the target location based on the image.

In a possible implementation, the obtaining module is configured to obtain a first distance between a display assembly and an optical imaging assembly in the head-mounted display device; the determining module is configured to determine to-move distances of the display assembly and/or the optical imaging assembly based on the first distance and the target location; and the control module is configured to generate a first control instruction based on the to-move distances, and send the first control instruction to the head-mounted display device, where the first control instruction is used to control the display assembly and/or the optical imaging assembly to move, to adjust the virtual image to the target location.

In a possible implementation, the obtaining module is configured to receive locations, sent by the head-mounted display device, of the optical imaging assembly and/or the display assembly; and the determining module is configured to determine the first distance based on the locations of the optical imaging assembly and/or the display assembly.

In a possible implementation, the obtaining module is configured to obtain a first focal length of a zoom lens in the head-mounted display device; the determining module is configured to determine a focal length adjustment amount of the zoom lens based on the first focal length and the target location; and the control module is configured to generate a second control instruction based on the focal length adjustment amount, and send the second control instruction to the head-mounted display device, where the second control instruction is used to control a voltage signal or a current signal that is applied to the zoom lens, to adjust a focal length of the zoom lens, so as to adjust the virtual image to the target location.

According to a tenth embodiment, this disclosure provides a virtual image location adjustment apparatus. The virtual image location adjustment apparatus is configured to implement the fourth embodiment or any method in the fourth embodiment, and includes corresponding functional modules that are respectively configured to implement steps in the method. A function may be implemented by hardware, or may be implemented by hardware executing corresponding software. The hardware or the software includes one or more modules corresponding to the function.

In a possible implementation, the virtual image location adjustment apparatus may be used in a head-mounted display device, and the virtual image location adjustment apparatus may include a display module, an obtaining module, and a virtual image forming module. The display module is configured to display a first interface. When a user selects a first object on the first interface, the obtaining module is configured to obtain a target location of a virtual image corresponding to the first object, where the target location of the virtual image is related to a preset scene type to which the first object belongs. For an image displayed upon triggering by the selection of the first object, the virtual image forming module is configured to form the virtual image at the target location based on the image.

When the first object belongs to different preset scene types, the head-mounted display device presents the virtual image at different target locations.

The preset scene type includes an office scene type, a reading scene type, a conference scene type, an interactive game scene type, or a video scene type.

When the preset scene type to which the image belongs is the office scene type, a range of a distance between the optical imaging assembly and the target location at which the head-mounted display device presents the virtual image is [0.1, 10] diopters D; when the preset scene type to which the image belongs is the reading scene type, a range of a distance between the optical imaging assembly and the target location at which the head-mounted display device presents the virtual image is [0.5, 10] diopters D; when the preset scene type to which the image belongs is the conference scene type, a range of a distance between the optical imaging assembly and the target location at which the head-mounted display device presents the virtual image is [0.1, 7.1] diopters D; when the preset scene type to which the image belongs is the interactive game scene type, a range of a distance between the optical imaging assembly and the target location at which the head-mounted display device presents the virtual image is [0.5, 7.5] diopters D; or when the preset scene type to which the image belongs is the video scene type, a range of a distance between the optical imaging assembly and the target location at which the head-mounted display device presents the virtual image is [0.1, 7] diopters D.

In a possible implementation, the first object is an application.

In a possible implementation, the obtaining module is configured to obtain a second preset scene type to which the first object belongs, and a correspondence between a preset scene type and a virtual image location; and determine, based on the correspondence between a preset scene type and a virtual image location, a target location corresponding to the second preset scene type.

In a possible implementation, the obtaining module is configured to receive the target location, sent by a terminal device, of the virtual image corresponding to the first object.

In a possible implementation, the obtaining module is configured to obtain a first distance between a display assembly and an optical imaging assembly in the head-mounted display device, and determine to-move distances of the display assembly and/or the optical imaging assembly based on the first distance and the target location; and the virtual image forming module is configured to drive, based on the to-move distances, the display assembly and/or the optical imaging assembly to move, to adjust the virtual image to the target location.

In a possible implementation, the obtaining module is configured to receive to-move distances, sent by the terminal device, of a display assembly and/or an optical imaging assembly in the head-mounted display device; and the virtual image forming module is configured to drive, based on the to-move distances, the display assembly and/or the optical imaging assembly to move, to adjust the virtual image to the target location.

In a possible implementation, the obtaining module is configured to determine a first focal length of a zoom lens in the head-mounted display device, and determine a focal length adjustment amount of the zoom lens based on the first focal length and the target location; and the virtual image forming module is configured to change, based on the focal length adjustment amount, a voltage signal or a current signal that is applied to the zoom lens, to adjust the virtual image to the target location.

In a possible implementation, the obtaining module is configured to receive a focal length adjustment amount, sent by the terminal device, of a zoom lens in the head-mounted display device; and the virtual image forming module is configured to change, based on the focal length adjustment amount, a voltage signal or a current signal that is applied to the zoom lens, to adjust the virtual image to the target location.

The obtaining module is configured to obtain a vision parameter and a second preset scene type to which the first object belongs; obtain a correspondence between a preset scene type and a virtual image location; and determine, based on the vision parameter and the correspondence between a preset scene type and a virtual image location, a target location corresponding to the second preset scene type.

According to an eleventh embodiment, this disclosure provides a virtual image location adjustment apparatus. The virtual image location adjustment apparatus is configured to implement the fifth embodiment or any method in the fifth embodiment, and includes corresponding functional modules that are respectively configured to implement steps in the method. A function may be implemented by hardware, or may be implemented by hardware executing corresponding software. The hardware or the software includes one or more modules corresponding to the function.

In a possible implementation, the virtual image location adjustment apparatus may be a terminal device, and may include an obtaining module, a determining module, and a control module. The obtaining module is configured to obtain a first object selected by a user on a first interface displayed by a head-mounted display device, a second preset scene type to which the first object belongs, and a correspondence between a preset scene type and a virtual image location. The determining module is configured to determine, based on the correspondence between a preset scene type and a virtual image location, a target location that corresponds to the second preset scene type and at which the head-mounted display device presents a virtual image, where the target location of the virtual image is related to a preset scene type to which the first object belongs. The control module is configured to control, based on the target location, the head-mounted display device to form the virtual image at the target location based on the image. In a possible implementation, the obtaining module is configured to obtain a first distance between a display assembly and an optical imaging assembly in the head-mounted display device; the determining module is configured to determine to-move distances of the display assembly and/or the optical imaging assembly based on the first distance and the target location; and the control module is configured to generate a first control instruction based on the to-move distances, and send the first control instruction to the head-mounted display device, where the first control instruction is used to control the display assembly and/or the optical imaging assembly to move, to adjust the virtual image to the target location.

In a possible implementation, the obtaining module is configured to receive locations, sent by the head-mounted display device, of the optical imaging assembly and/or the display assembly; and the determining module is configured to determine the first distance based on the locations of the optical imaging assembly and/or the display assembly.

In a possible implementation, the obtaining module is configured to obtain a first focal length of a zoom lens in the head-mounted display device; the determining module is configured to determine a focal length adjustment amount of the zoom lens based on the first focal length and the target location; and the control module is configured to generate a second control instruction based on the focal length adjustment amount, and send the second control instruction to the head-mounted display device, where the second control instruction is used to control a voltage signal or a current signal that is applied to the zoom lens, to adjust a focal length of the zoom lens, so as to adjust the virtual image to the target location.

For technical effects that can be achieved in any one of the second embodiment to the eleventh embodiment, refer to the descriptions of the beneficial effects in the first embodiment. Details are not described herein again.

According to a twelfth embodiment, this disclosure provides a computer-readable storage medium. The computer-readable storage medium stores a computer program or instructions. When the computer program or instructions are executed by a head-mounted display device, the head-mounted display device is enabled to perform the method in any one of the second embodiment or the possible implementations of the second embodiment, or the head-mounted display device is enabled to perform the method in any one of the fourth embodiment or the possible implementations of the fourth embodiment.

According to a thirteenth embodiment, this disclosure provides a computer-readable storage medium. The computer-readable storage medium stores a computer program or instructions. When the computer program or instructions are executed by a terminal device, the terminal device is enabled to perform the method in any one of the third embodiment or the possible implementations of the third embodiment, or the terminal device is enabled to perform the method in any one of the fifth embodiment or the possible implementations of the fifth embodiment.

According to a fourteenth embodiment, this disclosure provides a computer program product. The computer program product includes a computer program or instructions. When the computer program or instructions are executed by a terminal device, the method in any one of the second embodiment or the possible implementations of the second embodiment is implemented, or the method in any one of the fourth embodiment or the possible implementations of the fourth embodiment is implemented.

According to a fifteenth embodiment, this disclosure provides a computer program product. The computer program product includes a computer program or instructions. When the computer program or instructions are executed by a terminal device, the method in any one of the third embodiment or the possible implementations of the third embodiment is implemented, or the method in any one of the fifth embodiment or the possible implementations of the fifth embodiment is implemented.

## BRIEF DESCRIPTION OF DRAWINGS

FIG. 1a is a schematic diagram of a relationship between an object distance and an image distance according to this disclosure;
FIG. 1b is a schematic diagram of an optical path diagram of a triangular ranging laser radar according to this disclosure;
FIG. 1c is a schematic diagram of a principle of a vergence and accommodation conflict according to this disclosure;
FIG. 2a is a schematic diagram of an application scenario according to this disclosure;
FIG. 2b is a schematic diagram of a relationship between an application scenario and a target location of a virtual image according to this disclosure;
FIG. 3 is a schematic diagram of a structure of a display module according to this disclosure;
FIG. 4a is a schematic diagram of a first interface according to this disclosure;
FIG. 4b is a schematic diagram of a settings interface of an application scenario according to this disclosure;
FIG. 4c is a schematic diagram of a third interface according to this disclosure;
FIG. 4d is a schematic diagram of a second interface according to this disclosure;
FIG. 4e is a schematic diagram of another second interface according to this disclosure;
FIG. 4f is a schematic diagram of a fourth interface according to this disclosure;
FIG. 5 is a schematic diagram of a first lens fastened by a snap ring according to this disclosure;
FIG. 6a is a schematic diagram of a structure of an optical imaging assembly according to this disclosure;
FIG. 6b is a schematic diagram of an optical path of an optical imaging assembly according to this disclosure;
FIG. 6c is a schematic diagram of an optical imaging assembly fastened by a lens tube according to this disclosure;
FIG. 6d is a schematic diagram of a structure of a semi-transparent and semi-reflective mirror according to this disclosure;
FIG. 7 is a schematic diagram of a structure of another optical imaging assembly according to this disclosure;
FIG. 8 is a schematic diagram of a structure of still another optical imaging assembly according to this disclosure;
FIG. 9 is a schematic diagram of a structure of still another optical imaging assembly according to this disclosure;
FIG. 10 is a schematic diagram of a structure of still another optical imaging assembly according to this disclosure;
FIG. 11 is a schematic diagram of a structure of still another optical imaging assembly according to this disclosure;
FIG. 12a is a schematic diagram of a structure of a liquid crystal lens according to this disclosure;
FIG. 12b is a schematic diagram of a structure of a liquid crystal lens according to this disclosure;
FIG. 12c is a schematic diagram of a structure of a liquid crystal lens according to this disclosure;
FIG. 13a is a schematic diagram of changing a polarization state of incident light according to this disclosure;
FIG. 13b is a schematic diagram of a structure in which a polarization state of incident light is changed by electrically controlled twisted liquid crystals according to this disclosure;
FIG. 14a is a schematic diagram of a structure of a liquid lens according to this disclosure;
FIG. 14b is a schematic diagram of a structure of a liquid lens according to this disclosure;
FIG. 15 is a schematic diagram of a structure of a deformable reflector according to this disclosure;
FIG. 16a is a schematic diagram in which a display assembly moves and an optical imaging assembly remains stationary according to this disclosure;
FIG. 16b is a schematic diagram in which a display assembly remains stationary and an optical imaging assembly moves according to this disclosure;
FIG. 16c is a schematic diagram in which both a display assembly and an optical imaging assembly move according to this disclosure;
FIG. 17a is a schematic diagram of a structure of a display module according to this disclosure;
FIG. 17b is a schematic diagram of a structure of a display module according to this disclosure;
FIG. 17c is a schematic diagram of a structure of a display module according to this disclosure;
FIG. 17d is a schematic diagram of a relationship between a moving distance of an optical imaging assembly and a moving distance of a virtual image according to this disclosure;
FIG. 18a is a schematic diagram of a structure of a first knob according to this disclosure;
FIG. 18b is a schematic diagram of a structure of a cam focusing mechanism according to this disclosure;
FIG. 18c is a schematic diagram of a structure of a second knob according to this disclosure;
FIG. 19 is a schematic diagram of a structure of a display assembly according to this disclosure;
FIG. 20 is a schematic flowchart of another virtual image location adjustment method according to this disclosure;
FIG. 21 is a schematic flowchart of another virtual image location adjustment method according to this disclosure;

FIG. 22 is a schematic flowchart of another virtual image location adjustment method according to this disclosure;

FIG. 23 is a schematic flowchart of another virtual image location adjustment method according to this disclosure;

FIG. 24 is a schematic flowchart of another virtual image location adjustment method according to this disclosure;

FIG. 25 is a schematic flowchart of another virtual image location adjustment method according to this disclosure;

FIG. 26 is a schematic flowchart of another virtual image location adjustment method according to this disclosure;

FIG. 27 is a schematic diagram of a structure of a virtual image location adjustment apparatus according to this disclosure;

FIG. 28 is a schematic diagram of a structure of a virtual image location adjustment apparatus according to this disclosure;

FIG. 29 is a schematic diagram of a structure of a terminal device according to this disclosure; and

FIG. 30 is a schematic diagram of a structure of a terminal device according to this disclosure.

## DETAILED DESCRIPTION

The following describes examples of this disclosure in detail with reference to accompanying drawings.

The following explains and describes some terms used in this disclosure. It should be noted that the explanations are intended for ease of understanding by a person skilled in the art, but do not constitute a limitation on this disclosure.

1. Near-eye display

Display is performed near an eye. This is a display mode of an AR display device or a VR display device.

2. Virtual image location

After light emitted by an object is refracted or reflected, an optical path changes. When a human eye sees refracted or reflected light, the human eye may feel that the light comes from a location at which reverse extension lines of the light intersect. An image formed through intersection of the reverse extension lines is a virtual image. A location of the virtual image is referred to as a virtual image location. A plane on which the virtual image is located is referred to as a virtual image plane. A distance between the location of the virtual image and the human eye is a focusing depth. It should be understood that no actual object exists and no light converges at the location of the virtual image. For example, images formed by a plane mirror and glasses are all virtual images.

3. Multi-focal plane display

A virtual object (namely, a virtual image) is correspondingly projected to two or more locations based on a distance and a location of the virtual object (namely, the virtual image) in virtual space, and may be displayed in a time division multiplexing mode.

4. Adaptive focal plane display

The adaptive focal plane display means that, a refractive adjustment process and a binocular vergence and accommodation process that occur when human eyes observe objects at different distances can be automatically simulated.

5. Eye tracking device

Eye tracking means tracking eyeball movement by measuring a location of an eye fixation point or movement of an eyeball relative to a head. The eye tracking device is a device capable of tracking and measuring an eyeball location and eyeball movement information.

6. Presbyopia

The presbyopia means that a crystalline lens of an eyeball is gradually hardened and thickened, and an accommodation ability of eye muscles is also degraded correspondingly, leading to degradation of a zoom ability. Usually, maximum strength of the presbyopia is 3.0 diopters to 3.5 diopters.

7. Astigmatism

The astigmatism is a type of refractive error of an eye, and is related to a curvature of a cornea. The cornea is curved in an area at a specific angle and flat in areas at some other angles, and does not have a circularly symmetric curved surface.

8. Semi-transparent and semi-reflective mirror (semi-transparent and semi-reflective mirror)

The semi-transparent and semi-reflective mirror may also be referred to as a beam splitter mirror, a beam splitter, or a semi-reflective and semi-transparent mirror, and is an optical element obtained by plating optical glass with a semi-reflective film or plating an optical surface of a lens with a semi-transparent and semi-reflective film to change an original transmission-to-reflection ratio of an incident light beam. Through film plating, transmission can be enhanced to increase light intensity, or reflection can be enhanced to reduce light intensity. For example, the semi-transparent and semi-reflective mirror may transmit and reflect incident light at a ratio of 50:50. That is, a transmittance and a reflectivity of the semi-transparent and semi-reflective mirror each are 50%. When the incident light passes through the semi-transparent and semi-reflective mirror, intensity of transmitted light and intensity of reflected light each account for 50%. Certainly, the reflectivity and the transmittance may be selected according to an actual requirement. For example, the reflectivity may be higher than 50%, and the transmittance is lower than 50%; or the reflectivity may be lower than 50%, and the transmittance is higher than 50%.

9. Focal power (focal power)

The focal power is equal to a difference between an image-side beam convergence degree and an object-side beam convergence degree, and represents a light deflection ability of an optical system. The focal power is usually denoted as a letter $\varphi$. A focal power $\varphi$ of a refractive spherical surface is equal to $(n' - n)/r = n'/p' = -n/q$, where n' indicates an image-side refractive index, n indicates an object-side refractive index, r indicates a radius of the spherical surface, p indicates an image distance, and q indicates an object distance. Usually, the focal power is expressed as a reciprocal of an image-side focal length (it is considered that a refractive index of the air is approximately 1). A unit of the focal power is a diopter (D), and 1 diopter (D) is equal to 1 $m^{-1}$. For example, strength of glasses is equal to diopters $\times$ 100.

10. Quarter-wave plate

The quarter-wave plate is a birefringent optical device, and includes two optical axes: a fast axis and a slow axis. The quarter-wave plate may be configured to generate a phase difference of $\pi/2$ between linearly polarized light passing through the quarter-wave plate along the fast axis and linearly polarized light passing through the quarter-wave plate along the slow axis.

11. Reflective polarizer (reflective polarizer, RP)

The reflective polarizer may be configured to transmit light in a polarization state and reflect light in another polarization state. For example, the reflective polarizer may be a polarizer with a plurality of layers of dielectric films or a polarizer with a metal wire grating.

The foregoing describes some terms used in this disclosure, and the following describes technical features of this disclosure. It should be noted that the explanations are intended for ease of understanding by a person skilled in the art, but do not constitute a limitation on this disclosure.

The following separately describes a focusing principle, a principle of a triangular ranging laser radar, and a vergence and accommodation conflict (vergence and accommodation conflict, VAC) in this disclosure.

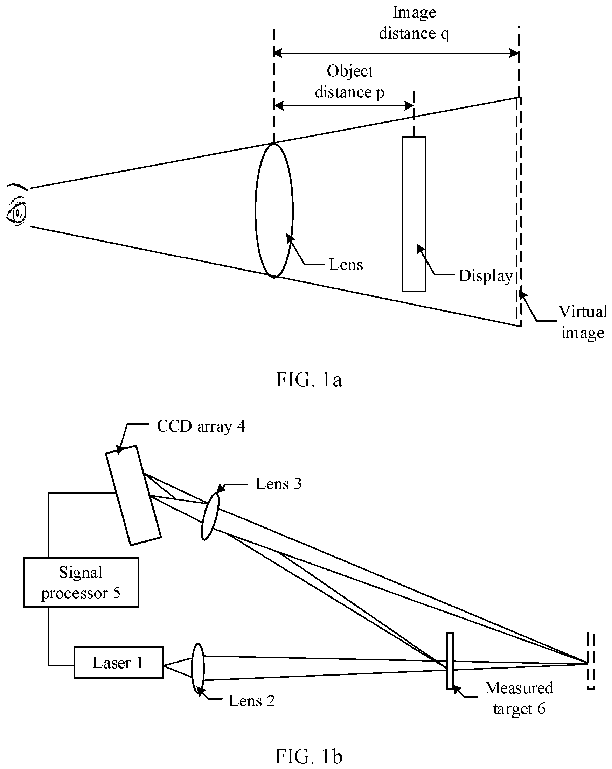

As shown in FIG. 1a, a distance between a center of an optical imaging assembly and a center of a display is referred to as an object distance p, a distance between a center of an imaging lens group and a virtual image is referred to as an image distance q, and an equivalent focal length of the optical imaging assembly is f, where the object distance p, the image distance q, and the equivalent focal length f meet the following formula (1):

$$q = \frac{fp}{p-f} \qquad (1)$$

When the object distance p and/or the equivalent focal length f change, the image distance q may change. $\Delta p$ is a variation of the object distance p, and $\Delta q$ is a variation of the image distance q. Differentials may be calculated on both sides of the formula (1) to obtain the following formula (2):

$$\Delta q \cong \frac{q^2}{f^2}\Delta f - \frac{q^2}{p^2}\Delta p \qquad\qquad (2)$$

A triangular ranging laser radar deduces a distance of a measured target by using a trigonometric formula and based on a triangle formed by an exit path and a reflection path of measured light. An operating principle of the triangular ranging laser radar is as follows: A laser transmitter transmits a laser signal, the laser signal is reflected by a measured target and then received by a laser receiver, and an image is formed on a location sensor (for example, a charge-coupled device (charge-coupled device, CCD)). There is a distance between the laser transmitter and the laser receiver. Therefore, images are formed at different locations on the CCD for objects at different distances based on an optical path, and then a distance of the measured target is deduced through calculation based on the trigonometric formula, as shown in FIG. 1b. A laser beam transmitted by a laser 1 is focused by a lens 2 to a measured target 6. Reflected light reflected by the measured target 6 converges to a CCD array 4 through a lens 3. A signal processor 5 calculates displacement of a light spot on the CCD array 4 based on a trigonometric function, to obtain a moving distance of the measured target.

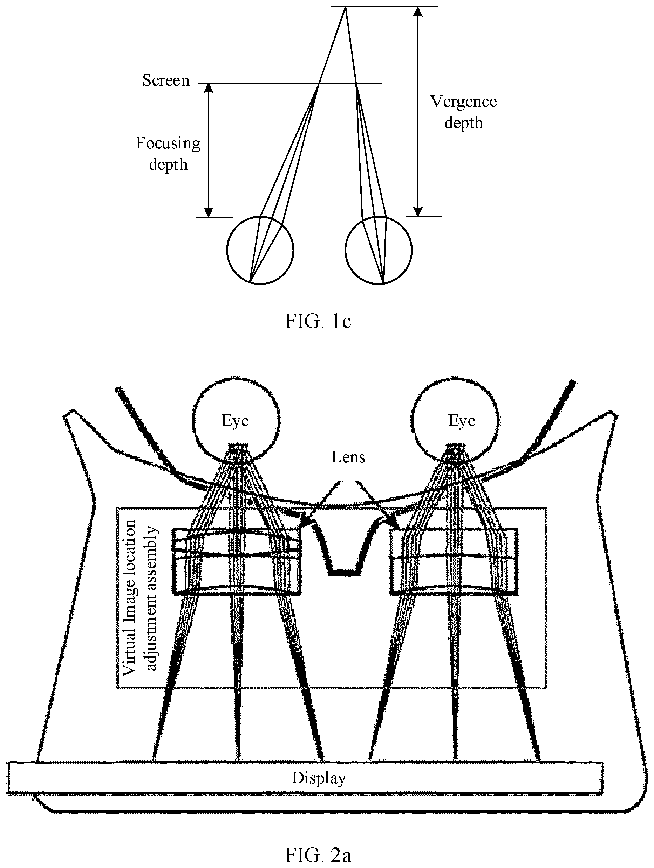

FIG. 1c shows a principle of a vergence and accommodation conflict as an example. A cause of the vergence and accommodation conflict is as follows: When human eyes are observing three-dimensional (three dimensional, 3D) content, correct crystalline lens focusing depths of both eyes are always fixed on a screen. However, vergences of both eyes converge at a target distance defined by a parallax, and a convergence point may be in front of the screen or behind the screen. A mismatch between a focusing depth and a vergence depth causes the vergence and accommodation conflict.

Based on the foregoing content, the following describes a possible scenario to which a display module in this disclosure is applicable.

In this disclosure, the display module may be applied to a near-eye display (near eye display, NED) device, for example, VR glasses or a VR helmet. For example, a user wears an NED device (refer to FIG. 2a) to play a game, watch a movie (or a TV series), participate in a virtual conference, participate in video education, or participate in video shopping.

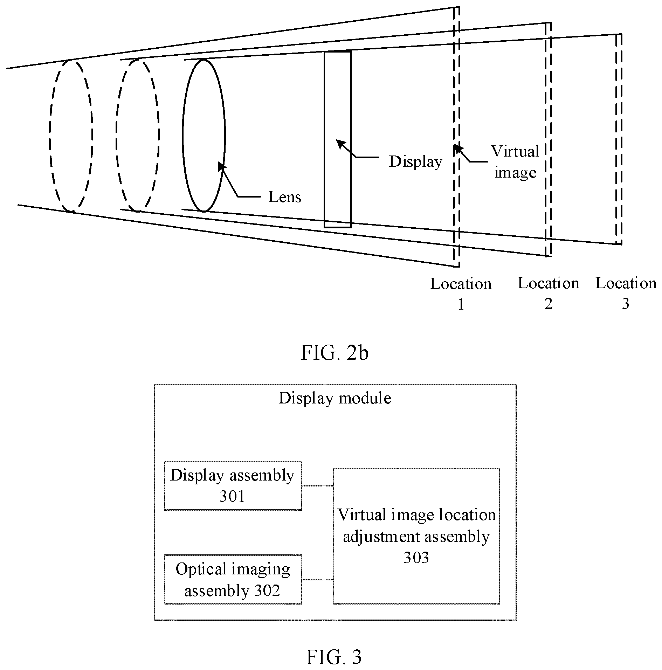

Target locations of virtual images may vary with different preset scene types. As shown in FIG. 2b, a target location of a virtual image corresponding to a preset scene type 1 is a location 1, a target location of a virtual image corresponding to a preset scene type 2 is a location 2, and a target location of a virtual image corresponding to a preset scene type 3 is a location 3. When a virtual image is at a target location, focusing depths of human eyes are basically the same as vergence depths of both eyes. This helps alleviate a vergence and accommodation conflict. That is, to minimize the vergence and accommodation conflict, a location of the virtual image needs to be adjusted. This may also be understood as multi-focal plane display in different preset scenes.

In view of this, this disclosure provides a display module. The display module can accurately adjust a location of a virtual image, so that the virtual image is formed at a target location, to help alleviate a vergence and accommodation conflict.

The following describes in detail the display module provided in this disclosure with reference to FIG. 3 to FIG. 19.

FIG. 3 is a schematic diagram of a structure of a display module according to this disclosure. The display module may include a display assembly 301, an optical imaging assembly 302, and a virtual image location adjustment assembly 303. The display assembly 301 is configured to display an image. The optical imaging assembly 302 is configured to form a virtual image based on the image. The virtual image location adjustment assembly 303 is configured to adjust at least one of the optical imaging assembly 302 and the display assembly 301, to adjust the virtual image to a target location, where the target location of the virtual image is related to a preset scene type to which the image belongs.

The preset scene type to which the image belongs is a preset scene type to which content of the image belongs. That is, a location of the virtual image may be set with respect to the preset scene type to which the content of the image belongs.

Alternatively, the preset scene type to which the image belongs may be a preset scene type to which an object corresponding to the image belongs. An application corresponding to the image may be understood as that the image is an image displayed when the application is started. Further, different virtual image locations may alternatively be set with respect to different image content of a same object. This may also be understood as that, after an object is selected and image content of the object is displayed, a preset scene type to which the image content belongs may be further determined. For example, after a game application is selected, preset scene types to which different image content belongs are further set in the game application. Therefore, a preset scene type to which image content belongs may be further determined after the game application is started.

According to this solution, the virtual image location adjustment assembly adjusts the optical imaging assembly and/or the display assembly, so that virtual images in different preset scene types can be accurately adjusted to corresponding target locations, and a user can clearly see the image displayed by the display module. A location of the virtual image is automatically adjusted based on different preset scene types (that is, the display module can perform adaptive focal plane display). This helps alleviate a vergence and accommodation conflict.

When the image belongs to different preset scene types, the display module presents the virtual image at different target locations. It should be understood that, when the image belongs to different preset scene types, the display module may alternatively present the virtual image at a same target location.

The preset scene type is an office scene type, a reading scene type, a conference scene type, an interactive game scene type, or a video scene type. Further, optionally, when the preset scene type is the office scene type, a range of a distance between the optical imaging assembly and the target location at which the display module presents the virtual image is [0.1, 10] diopters D; when the preset scene type is the reading scene type, a range of a distance between the optical imaging assembly and the target location at which the head-mounted display device presents the virtual image is [0.5, 10] diopters D; when the preset scene type is the conference scene type, a distance between the optical imaging assembly and the target location at which the head-mounted display device presents the virtual image is 0.1-7.1 D; when the preset scene type is the interactive game scene type, a distance between the optical imaging assembly and the target location at which the head-mounted display device presents the virtual image is 0.5-7.5 diopters D; or when the preset scene type is the video scene type, a distance between the optical imaging assembly and the target location at which the head-mounted display device presents the virtual image is 0.1-7 diopters D.

Herein, the preset scene type may be pre-obtained through division according to a specific rule. For example, content of some images may be classified as one type of preset scene according to a rule; or some objects (for example, applications) may be classified as one type of preset scene according to a rule. For example, applications such as Tencent Video®, iQIYI®, Bilibili®, and Youku® may be classified as a video scene type, and applications such as JD®, Taobao®, and Tmall® may be classified as a shopping scene type.

It should be noted that, when the virtual image is at the target location, an absolute value of a difference between a focal length depth and a vergence depth of the virtual image at the target location is less than a threshold. This may also be understood as that an absolute value of a difference that is between a binocular convergence depth of human eyes and a distance between the target location of the virtual image and the human eyes is less than a threshold. Further, optionally, a range of the threshold is [0 diopters D, 1 diopter D]. It should be understood that the threshold may be determined based on tolerance of the human eyes to the VAC.

The following separately describes the functional assemblies and structure shown in FIG. 3, to provide specific implementation solutions as examples. For ease of description, no reference numerals are added to the display assembly, the optical imaging assembly, and the virtual image location adjustment assembly in the following descriptions.

1. Display assembly

In a possible implementation, the display assembly serves as an image source, and may provide display content for the display module, for example, may provide 3D display content and an interaction picture. That is, the display assembly may perform spatial intensity modulation on incident light to generate light carrying image information. The light carrying the image information may be propagated (for example, refracted) through the optical imaging assembly to human eyes for imaging. When the human eyes see refracted light, the human eyes feel that the light comes from a location at which reverse extension lines of the light intersect. An image formed through intersection of the reverse extension lines is a virtual image.

For example, the display assembly may be a liquid crystal display (liquid crystal display, LCD), an organic light emitting diode (organic light emitting diode, OLED), a micro light emitting diode (micro light emitting diode, micro-LED), an active-matrix organic light emitting diode (active-matrix organic light emitting diode, AMOLED), a flexible light emitting diode (flex light-emitting diode, FLED), or a quantum dot light emitting diode (quantum dot light emitting diodes, QLED). The OLED has high light emitting efficiency and high contrast. The mini-LED display has high light emitting brightness, and may be used in a scenario in which high light emitting brightness is required.

For example, the display assembly may alternatively be a reflective display, for example, a liquid crystal on silicon (liquid crystal on silicon, LCOS) display, or a reflective display based on a digital micro-mirror device (digital micro-mirror device, DMD). The LCOS and the DMD have reflective structures, and therefore have a high resolution or aperture opening ratio.

In a possible implementation, the display assembly may be further configured to display a first interface, and the first interface may include a plurality of objects. Further, optionally, the objects include but are not limited to an application.

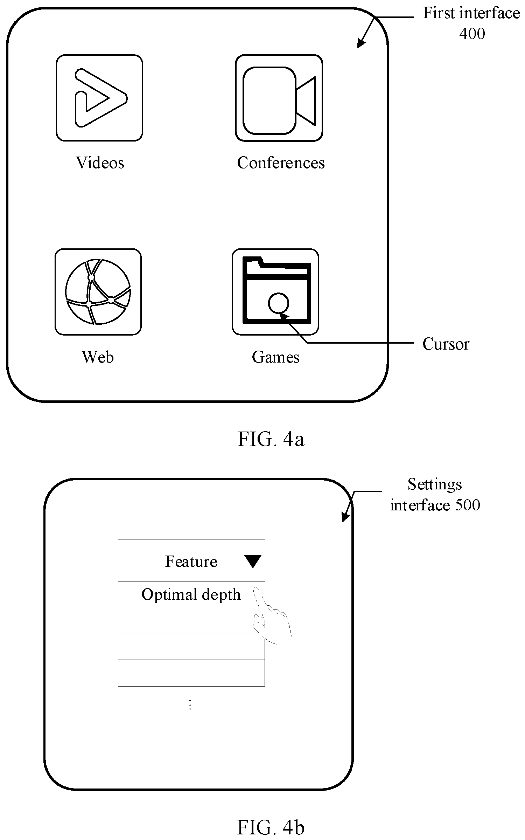

FIG. 4a is a schematic diagram of an example first interface according to this disclosure. For example, a plurality of objects displayed on the first interface 400 are icons of four applications: Videos, Conferences, Web, and Games. The first interface may alternatively be a desktop launcher (Launcher) interface of an Android system.

Further, optionally, the first interface 400 may further include a cursor used to select an object. Refer to FIG. 4a. A user may select an object by performing an operation on the cursor. For example, the cursor may be moved to a first object to be selected, and a touch handle or another independent button is tapped (or double-tapped) to select the first object. Correspondingly, after detecting the first object selected by a finger of the user (or a stylus, or the like), the display module may trigger, in response to the operation of selecting the first object, the virtual image location adjustment assembly to adjust a location of a virtual image.

It should be noted that an object may alternatively be selected in another manner. For example, the object may be selected in response to an operation of the user, such as a quick gesture operation (for example, three-finger swipe-up, or two consecutive knocks on a display with a knuckle) or a speech instruction. This is not limited in this disclosure.

In a possible implementation, after detecting that the first object is selected, the display module further needs to obtain a target location corresponding to the first object. The following describes three implementations of determining the target location as examples. It should be noted that the three implementations may be performed by a control assembly.

Implementation 1: A target location corresponding to a preset scene type to which the first object belongs is determined based on an obtained correspondence between a preset scene type and a virtual image location.

According to the implementation 1, different preset scenes have appropriate virtual image locations (namely, target locations). When a virtual image is at a target location, human eyes can clearly see an image displayed by the display module.

In a possible implementation, M preset scene types and virtual image locations respectively corresponding to the M preset scene types may be obtained; statistics are collected on a distribution relationship between the M preset scene types and the virtual image locations respectively corresponding to the M preset scene types; and the correspondence between a preset scene type and a virtual image location is determined based on the distribution relationship, where M is an integer greater than 1. Further, optionally, the distribution relationship may conform to Gaussian distribution, and the target location of the virtual image may be an expected value of the Gaussian distribution.

In another possible implementation, M preset scene types and virtual image locations respectively corresponding to the M preset scene types may be obtained; and the M preset scene types and the virtual image locations respectively corresponding to the M preset scene types are input to an artificial intelligence algorithm, to obtain the correspondence between a preset scene type and a virtual image location.

Further, optionally, virtual image locations that correspond to M preset scenes and that are input by the user may be received; or binocular parallaxes for images in M preset scenes are obtained, and virtual image locations corresponding to the M preset scenes are respectively determined based on the binocular parallaxes for the images in the M preset scenes. For example, based on locations of same elements in content of two images, depths of the images are calculated, to determine a location of a virtual image.

For example, a developer or a display module manufacturer may obtain a correspondence between a preset scene type and a virtual image location. This may also be understood that the correspondence between a preset scene type and a virtual image location may be set by the developer or the display module manufacturer.

According to the implementation 1, the obtained correspondence between a preset scene type and a virtual image location may be prestored in the display module or a memory outside the display module. It should be understood that the correspondence may be stored in a form of a table. Table 1 shows an example correspondence between a preset scene type and a virtual image location. In Table 1, a target distance range of a virtual image is a range of a distance between the optical imaging assembly and a location at which the head-mounted display device presents the virtual image, and an optimal target distance of a virtual image is an optimal distance between the optical imaging assembly and a target location at which the head-mounted display device presents the virtual image.

**Table 1 Correspondence between a preset scene type and a virtual image location**

| Preset scene type | Target distance range of a virtual image | Optimal target distance of a virtual image |
|---|---|---|
| Office | [0.1, 10] diopters D | 1 D (namely, 1 m) |
| Reading | [0.5, 10] diopters D | 2 D (namely, 0.5 m) |
| Conference | [0.1, 7.1] diopters D | 0.583 D (namely, 1.714 m) |
| Interactive game | [0.5, 7.5] diopters D | 1 D (namely, 1 m) |
| Videos/Music/Livestreaming | [0.1, 7] diopters D | 0.5 D (namely, 2 m) |

As shown in Table 1, for the preset office scene type, a target distance range of a virtual image is [0.1, 10] diopters D, and an optimal target distance is 1 D (namely, 1 m); for the preset reading scene type, a target distance range of a virtual image is [0.5, 10] diopters D, and an optimal target distance is 2D (namely, 1.714 m); for the preset conference scene type, a target distance range of a virtual image is [0.1, 7.1] diopters D, and an optimal target distance is 0.583 D (namely, 0.5 m); for the preset interactive game scene type, a target distance range of a virtual image is [0.5, 7.5] diopters D, and an optimal target distance is 1 D (namely, 1 m); and for preset scene types such as videos, music, and livestreaming, a target distance range of a virtual image is [0.1, 7] diopters D, and an optimal target distance is 0.5 D (namely, 2 m). This may also be understood that different preset scene types have appropriate virtual image location ranges.

Further, optionally, when the preset scene type to which the image belongs is the conference scene type, a range of a distance between the optical imaging assembly and the target location at which the head-mounted display device presents the virtual image is [0.1, 3.0] diopters D; when the preset scene type to which the image belongs is the interactive game scene type, a range of a distance between the optical imaging assembly and the target location at which the head-mounted display device presents the virtual image is [3.0, 5.0] diopters D; or when the preset scene type to which the image belongs is the video scene type, a range of a distance between the optical imaging assembly and the target location at which the head-mounted display device presents the virtual image is (5.0, 7] diopters D.

In a possible implementation, a distance between the optical imaging assembly and a target location of the virtual image that corresponds to the video scene type is greater than a distance between the optical imaging assembly and a target location of the virtual image that corresponds to the conference scene type; and/or the distance between the optical imaging assembly and the target location of the virtual image that corresponds to the conference scene type is greater than a distance between the optical imaging assembly and a target location of the virtual image that corresponds to the reading scene type.

In another possible implementation, a distance between the optical imaging assembly and a target location of the virtual image that corresponds to the video scene type is greater than a distance between the optical imaging assembly and a target location of the virtual image that corresponds to the conference scene type; and/or the distance between the optical imaging assembly and the target location of the virtual image that corresponds to the conference scene type is greater than a distance between the optical imaging assembly and a target location of the virtual image that corresponds to the office scene type; and/or the distance between the optical imaging assembly and the target location of the virtual image that corresponds to the office scene type is greater than a distance between the optical imaging assembly and a target location of the virtual image that corresponds to the reading scene type. It should be noted that the distance between the optical imaging assembly and the target location of the virtual image that corresponds to the office scene type is close to a distance between the optical imaging assembly and a target location of the virtual image that corresponds to the interactive game scene type.

Implementation 2: The user defines a target location of a virtual image corresponding to the first object.

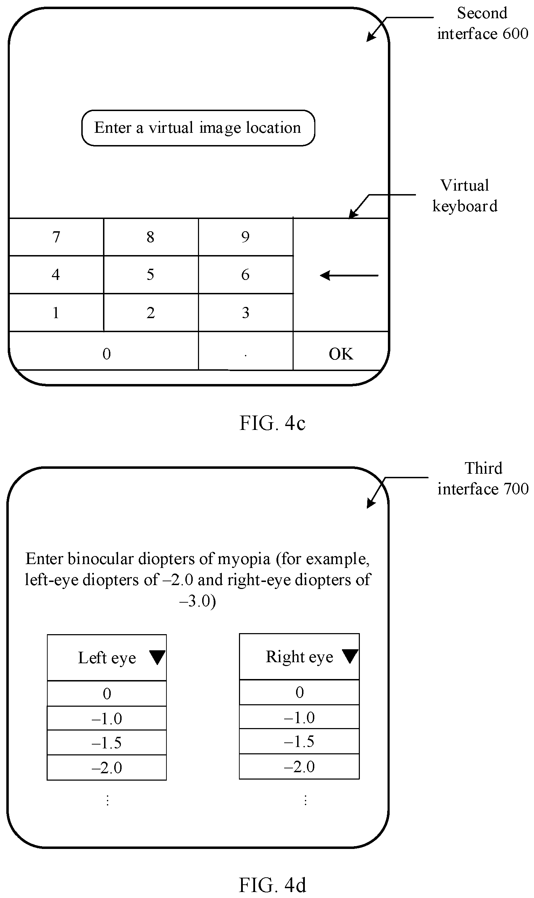

In a possible implementation, the user may input the user-defined target location of the virtual image in an interactive manner, for example, through speech or a virtual button. This may also be understood as that, after selecting the first object, the user further needs to input the user-defined target location of the virtual image corresponding to the first object. With reference to FIG. 4a, after selecting the first object, the user may enter a settings interface 500 of the first object. As shown in FIG. 4b, the settings interface 500 may be used to set features of the first object (for example, the target location, a minimum frame rate, and a minimum resolution of the virtual image). The user may select an "optimal depth (namely, the target location of the virtual image)" feature on the settings interface 500. Then a dialog box for inputting the target location of the virtual image is displayed. The user may input a user-defined target location of the virtual image in the displayed dialog box through a virtual keyboard, speech, or the like, and confirm the input. Alternatively, the user may select an "optimal depth (namely, the target location of the virtual image)" feature on the settings interface 500 to enter a second interface 600 (refer to FIG. 4c), and the user may input a user-defined target location of the virtual image on the second interface 600 through a virtual keyboard, speech, or the like, and confirm the input.

Implementation 3: A target location of a virtual image corresponding to the first object is determined based on an eye tracking assembly.

In a possible implementation, the display module may further include the eye tracking assembly. The eye tracking assembly is configured to determine a convergence depth of both eyes focused on the image. The virtual image location adjustment assembly is configured to drive, based on the convergence depth, the optical imaging assembly and/or the display assembly to move, to adjust the virtual image to the target location.

For example, the eye tracking assembly may be configured to determine a convergence depth of both eyes focused on an image displayed upon triggering by the selection of the first object, and may determine a location at the convergence depth as the target location of the virtual image.

In a possible implementation, the display assembly may be further configured to display a third interface 700, and the third interface 700 may be used to input binocular vision parameters. FIG. 4d is a schematic diagram of an example third interface according to this disclosure. For example, the binocular vision parameters on the third interface 700 are diopters of myopia. The third interface 700 may display an option box for diopters of myopia of a left eye and an option box for diopters of myopia of a right eye. The binocular vision parameters may be selected from a drop-down list of the option box for diopters of myopia of the left eye and a drop-down list of the option box for diopters of myopia of the right eye.

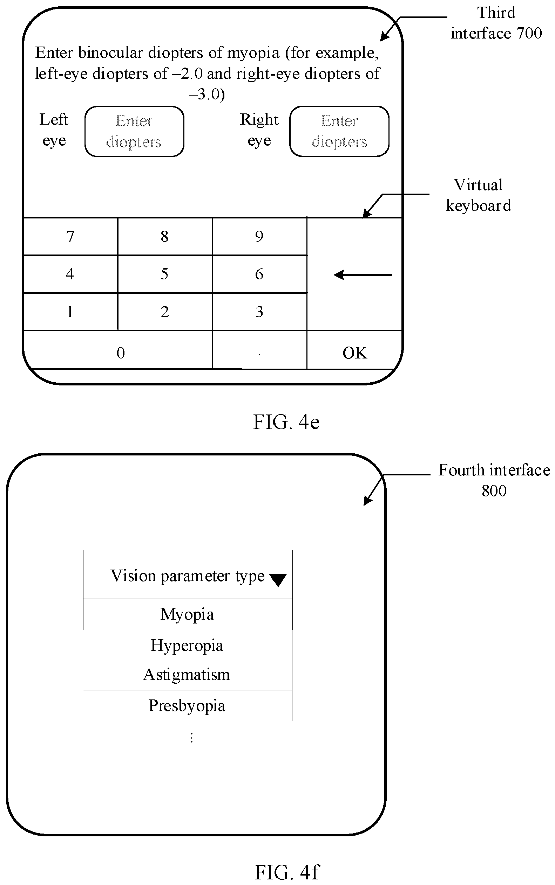

FIG. 4e is a schematic diagram of another example third interface according to this disclosure. The third interface 700 may display a virtual keyboard, an input box for diopters of myopia of a left eye, and an input box for diopters of myopia of a right eye. The user may input a left-eye vision parameter in the left-eye vision box through the virtual keyboard, and input a right-eye vision parameter in the right-eye vision box through the virtual keyboard.

Correspondingly, after detecting the binocular vision parameters, the display module may trigger the virtual image location adjustment assembly to correspondingly adjust a location of a virtual image. For example, the display module may correspondingly determine the location of the virtual image based on a correspondence between a vision parameter and a virtual image location. It should be understood that a correspondence between binocular vision parameters and a virtual image location may be prestored in a memory. For example, binocular diopters of 3.0 correspond to a virtual image location, binocular diopters of 3.5 correspond to another virtual image location, and left-eye diopters of 3.0 and right-eye diopters of 4.0 correspond to still another location.

It should be noted that the display assembly may display a fourth interface 800 before displaying the third interface 700. The fourth interface 800 may include a vision parameter type selection box, as shown in FIG. 4f. Vision parameter types include but are not limited to diopters of myopia, diopters of astigmatism, diopters of presbyopia, or diopters of hyperopia. The user may select a vision parameter type as required. In addition, a vision parameter usually needs to be set when the display module is used for the first time.

It should be noted that, before the display assembly displays an image, a rendering operation further needs to be performed on a picture. For example, the control assembly may perform rendering. For the control assembly, refer to the following related descriptions. Details are not described herein.

2. Optical imaging assembly

In a possible implementation, the optical imaging assembly may be configured to form a virtual image in virtual space based on an image displayed by the display assembly, and project the image displayed on the display assembly to human eyes.

The following describes 10 structures of the optical imaging assembly as examples.

Structure 1: The optical imaging assembly is a first lens.

In a possible implementation, the first lens may be a single spherical lens or aspheric lens, or may be a combination of a plurality of spherical or aspheric lenses. Through combination of a plurality of spherical or aspheric lenses, imaging quality of a system can be improved, and aberration of the system can be reduced. The spherical lens and the aspheric lens may be Fresnel lenses, and the Fresnel lenses can reduce a size and mass of a module.

Further, optionally, the spherical lens or the aspheric lens may be made of a glass material or a resin material. The resin material can reduce mass of a module, and the glass material has high imaging quality.

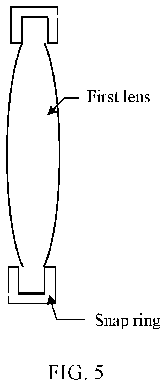

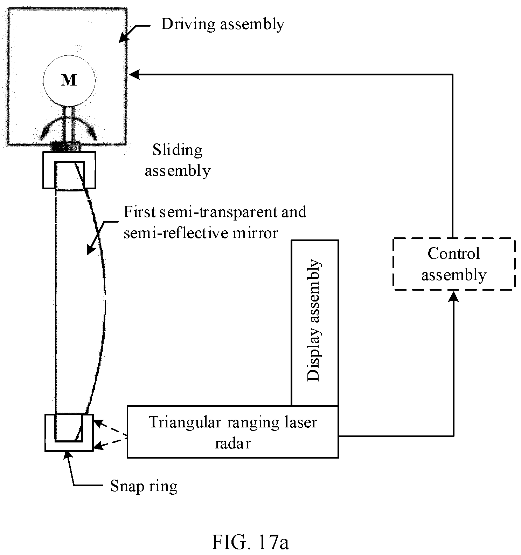

Based on the structure 1, the first lens may be fastened by a snap ring. FIG. 5 is a schematic diagram of a first lens fastened by a snap ring according to this disclosure. The snap ring includes at least one opening, and one end of the first lens is embedded into the snap ring from the opening of the snap ring. A first surface of the snap ring is a flat surface, and can scatter a received laser beam. That is, the first surface of the snap ring is a flat surface, and has a specific scattering characteristic. The first surface of the snap ring faces a direction of a laser beam transmitted by a triangular ranging laser radar (refer to FIG. 17a below). This helps improve beam utilization.

Structure 2: The optical imaging assembly includes an optical assembly with a folded optical path.

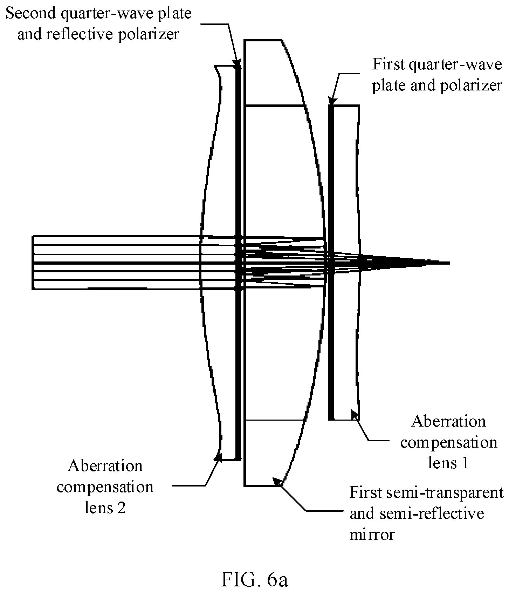

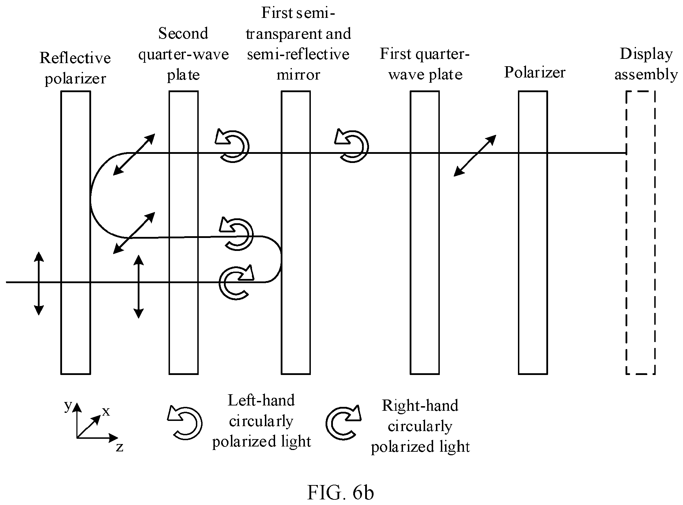

FIG. 6a is a schematic diagram of a structure of an optical imaging assembly according to this disclosure. The optical imaging assembly sequentially includes a polarizer, a first quarter-wave plate, a first semi-transparent and semi-reflective mirror, a second quarter-wave plate, and a reflective polarizer along a direction of a principal optical axis of the first semi-transparent and semi-reflective mirror. For an optical path based on the optical imaging assembly in FIG. 6a, refer to FIG. 6b. The polarizer is configured to filter light with different polarization states that comes from the display assembly and that forms an image into light with a same polarization state (that is, referred to as first linearly polarized light), for example, filter the light into horizontally linearly polarized light or vertically linearly polarized light. The polarizer may be absorptive or reflective. The first linearly polarized light may be, for example, P polarized light or S polarized light. The first quarter-wave plate is configured to convert the first linearly polarized light that comes from the polarizer into first circularly polarized light, and transmit the first circularly polarized light to the first semi-transparent and semi-reflective mirror. The first semi-transparent and semi-reflective mirror is configured to transmit the first circularly polarized light that comes from the first quarter-wave plate to the second quarter-wave plate. The second quarter-wave plate is configured to convert the received first circularly polarized light into second linearly polarized light. A polarization direction of the second linearly polarized light is the same as that of the first linearly polarized light. The reflective polarizer is configured to reflect the second linearly polarized light that comes from the second quarter-wave plate to the second quarter-wave plate. The second quarter-wave plate is further configured to convert the received second linearly polarized light into second circularly polarized light, where a rotation direction of the second circularly polarized light is the same as that of the first circularly polarized light. In FIG. 6b, left-hand circularly polarized light is used as an example. The first semi-transparent and semi-reflective mirror is further configured to reflect the second circularly polarized light that comes from the second quarter-wave plate into third circularly polarized light, where a rotation direction of the third circular polarizing light is opposite to that of the second circularly polarized light. The second quarter-wave plate is further configured to convert the third circularly polarized light that comes from the semi-transparent and semi-reflective mirror into third linearly polarized light. The reflective polarizer is further configured to transmit the third linearly polarized light to human eyes to form an image.

Further, optionally, the optical assembly with a folded optical path may further include one or more aberration compensation lenses. The aberration compensation lenses may be configured to compensate for aberration, for example, may be configured to compensate for spherical aberration, coma aberration, astigmatism, distortion, and chromatic aberration during imaging by a spherical or aspheric lens. The aberration compensation lenses may be at any locations in a folded optical path. For example, the aberration compensation lenses may be located between the first semi-transparent and semi-reflective mirror and the reflective polarizer. In FIG. 6a, for example, an aberration compensation lens 1 and an aberration compensation lens 2 are included. The aberration compensation lens 1 is located between the polarizer and the display assembly, and the aberration compensation lens 2 is located between the reflective polarizer and human eyes. The aberration compensation lens may be a single spherical lens or aspheric lens, or may be a combination of a plurality of spherical lenses or aspheric lenses. Through combination of a plurality of spherical or aspheric lenses, imaging quality of a system can be improved, and aberration of the system can be reduced. The aberration compensation lens may be made of an optical resin material. The aberration compensation lens 1 and the aberration compensation lens 2 may be made of a same material or different materials.

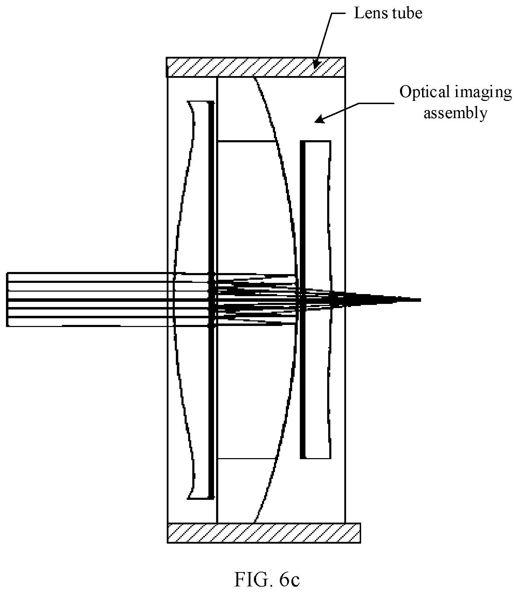

Based on the structure 2, the optical imaging assembly may be fastened in a lens tube. Refer to FIG. 6c. It should be understood that the optical imaging assembly with the structure 1 may also be fastened in the lens tube.

In the optical imaging assembly with the structure 2, an optical path can be folded. This helps shorten an optical path for imaging, and therefore helps reduce a size of the optical imaging assembly, and further helps reduce a size of a display module including the optical imaging assembly.

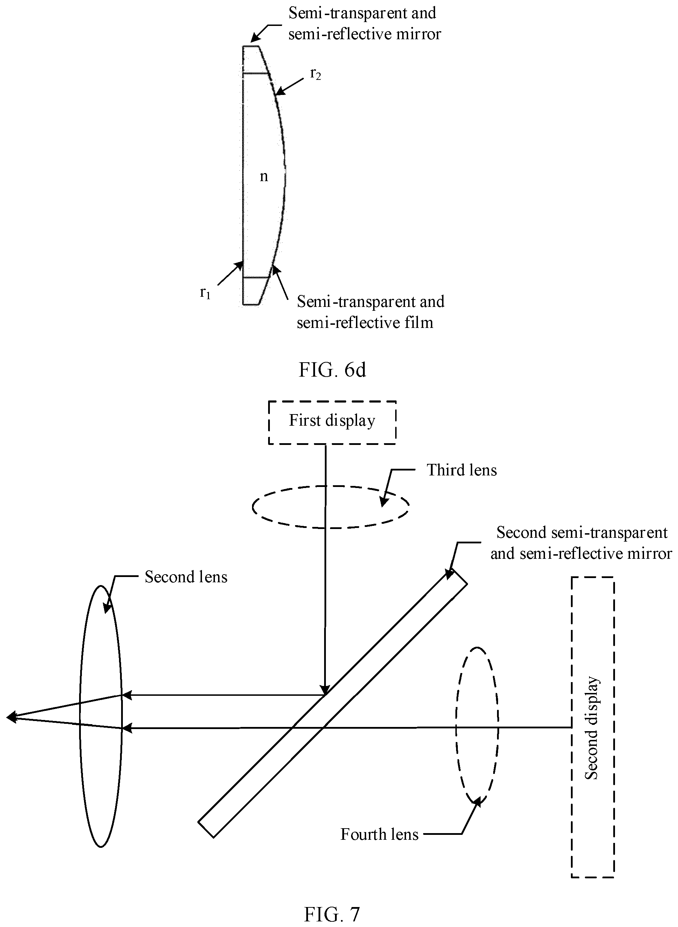

FIG. 6d is a schematic diagram of a structure of a semi-transparent and semi-reflective mirror according to this disclosure. A most approximate spherical radius of a refracting surface of the semi-transparent and semi-reflective mirror is r1, where r1 being a negative number indicates a concave surface, and r1 being a positive number indicates a convex surface. A most approximate spherical radius of a semi-transparent and semi-reflective surface of the semi-transparent and semi-reflective mirror is r2, where r2 being a negative number indicates a convex surface, and r2 being a positive number indicates a concave surface. A refractive index of a material of the semi-transparent and semi-reflective mirror is n.

Structure 3: The optical imaging assembly includes a second semi-transparent and semi-reflective mirror and a second lens. Based on the structure 3, the display assembly may include a first display and a second display, and a resolution of the first display is higher than that of the second display.

FIG. 7 is a schematic diagram of a structure of another optical imaging assembly according to this disclosure. The optical imaging assembly includes a second semi-transparent and semi-reflective mirror and a second lens. The first display is configured to display a center area of an image. The second display is configured to display an edge area of the image. The second semi-transparent and semi-reflective mirror is configured to reflect the center area of the image that comes from the first display to the second lens, and transmit the edge area of the image that comes from the second display to the second lens. The second lens is configured to combine the center area of the image and the edge area of the image that come from the second semi-transparent and semi-reflective mirror into an image, project the image to human eyes, and form a complete virtual image at a target location.

The optical imaging assembly can simulate a real status of human eyes, and implement a real feeling similar to that of human eyes by using a small quantity of pixels. It should be understood that a human eye has a high resolution of 1' in a center concave area (approximately 3°), and a resolution in a surrounding field of view decreases to approximately 10'.

Further, optionally, the optical imaging assembly may further include a third lens and a fourth lens. The third lens is configured to converge the center area of the image that comes from the first display, and propagate a converged center area of the image to the second semi-transparent and semi-reflective mirror. The fourth lens is configured to converge the edge area of the image that comes from the first display, and propagate a converged edge region of the image to the second semi-transparent and semi-reflective mirror.

Based on the structure 3, the optical imaging assembly may be fastened in a lens tube, and is connected to the virtual image location adjustment assembly through a component such as a cam or a screw.

Structure 4: The optical imaging assembly includes a multi-channel lens.

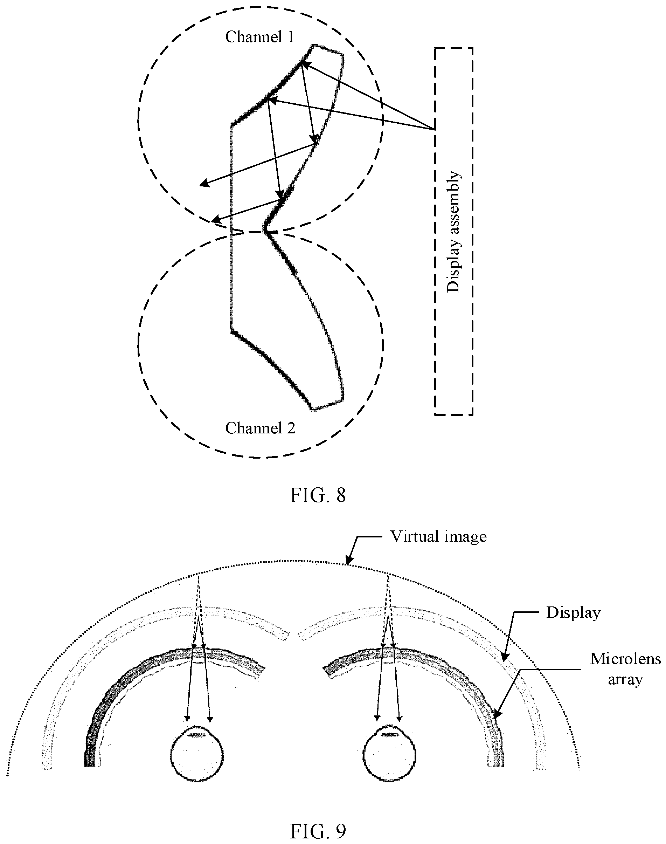

FIG. 8 is a schematic diagram of a structure of still another optical imaging assembly according to this disclosure. The optical imaging assembly is a multi-channel lens. The multi-channel lens is formed by sequentially connecting free-form lenses that each include M pairs of reflective surfaces, where M is an integer greater than 1. In FIG. 8, for example, two channels (that is, a channel 1 and a channel 2) are included. Each channel in the multi-channel lens may correspond to a small field of view (field of view, FOV). To be specific, the multi-channel lens may divide a large FOV into a combination of a plurality of small FOVs, and one small FOV corresponds to one channel.

Imaging quality in an edge FOV of a large FOV is difficult to control, and a combination of a plurality of lenses usually needs to be used to correct aberration in the edge FOV. According to the optical imaging assembly, the multi-channel lens can divide a large FOV into a plurality of small FOVs. This helps improve imaging quality in the edge FOV. In addition, a diameter of a required optical imaging lens can be reduced, and a lens for correcting aberration in the edge FOV is not required. This helps reduce a size of the optical imaging assembly.

Based on the structure 4, the optical imaging assembly may be fastened in a lens tube, and is connected to the virtual image location adjustment assembly through a component such as a cam or a screw.

Structure 5: The optical imaging assembly includes a microlens array (Microlens array, MLA).

FIG. 9 is a schematic diagram of a structure of still another optical imaging assembly according to this disclosure. The optical imaging assembly may include two microlens arrays. Each microlens in the microlens array may correspond to a small FOV, and imaging may be performed for each small FOV through one microlens. That is, the microlens array may divide a large FOV into a combination of a plurality of small FOVs.

Imaging quality in an edge FOV of a large FOV is difficult to control, and a combination of a plurality of lenses usually needs to be used to correct aberration in the edge FOV. According to the optical imaging assembly, the microlens array can divide a large FOV into a plurality of small FOVs. This helps improve imaging quality in the edge FOV. In addition, according to the optical imaging assembly, a diameter of a required optical imaging lens can be reduced, and a lens for correcting aberration in the edge FOV is not required. This helps reduce a size of the optical imaging assembly.

In a possible implementation, the display module may include two microlens arrays, and each microlens array corresponds to one display. Refer to FIG. 9.

Based on the structure 5, the optical imaging assembly may be fastened in a lens tube, and is connected to the virtual image location adjustment assembly through a component such as a cam or a screw.

Structure 6: The optical imaging assembly includes an Alvarez lens (Alvarez lenses).

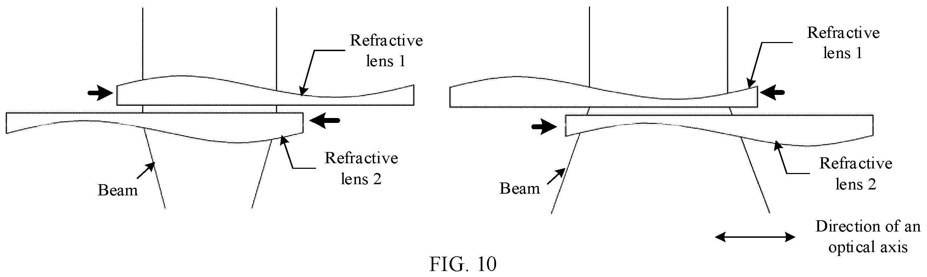

FIG. 10 is a schematic diagram of a structure of still another optical imaging assembly according to this disclosure. The optical imaging assembly includes an Alvarez lens. The Alvarez lens includes two or more refractive lenses (or referred to as free-form lenses). Every two refractive lenses form a group, which may be referred to as a refractive lens group. In FIG. 10, for example, the Alvarez lens includes a refractive lens 1 and a refractive lens 2.

Structure 7: The optical imaging assembly includes a Morie lens (Morie lens)

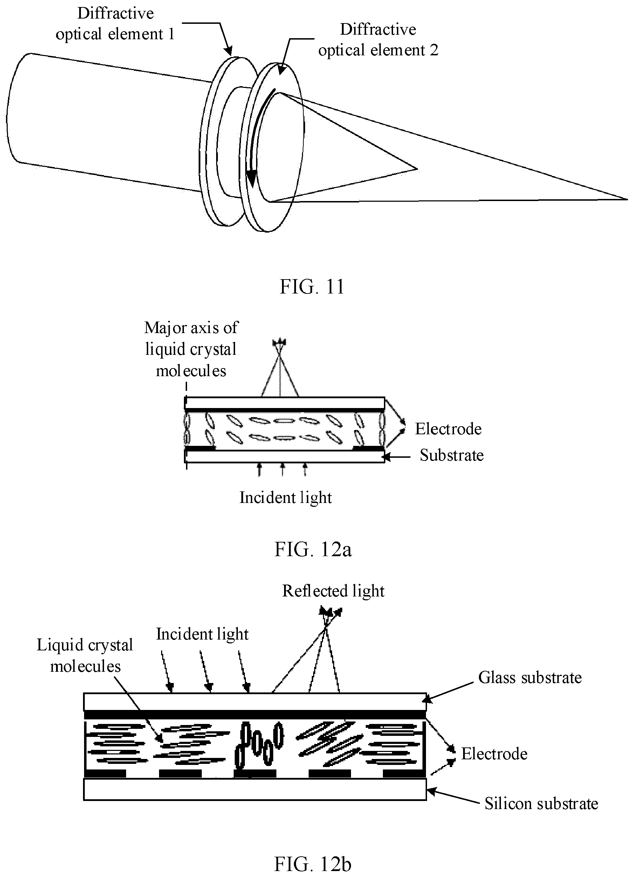

FIG. 11 is a schematic diagram of a structure of still another optical imaging assembly according to this disclosure. The optical imaging assembly includes a Morie lens, and the Morie lens may include two or more cascaded diffractive optical elements. In FIG. 11, for example, the Morie lens includes a diffractive optical element 1 and a diffractive optical element 2 that are cascaded. Structure 8: The optical imaging assembly is a liquid crystal lens.

FIG. 12a is a schematic diagram of a structure of a liquid crystal lens according to this disclosure. The liquid crystal lens is a common liquid crystal lens, and an external electric field applied to the liquid crystal lens may be changed, to change a direction of a major axis of liquid crystal molecules, so as to achieve optical anisotropy and dielectric anisotropy, and obtain a tunable refractive index. Therefore, an equivalent phase of the liquid crystal lens can be changed, to change a focal length of the liquid crystal lens. The equivalent phase of the liquid crystal lens may be a phase of a common lens that is implemented by applying a voltage signal or a current signal, or may be a phase of a Fresnel lens.

FIG. 12b is a schematic diagram of a structure of another liquid crystal lens according to this disclosure. The liquid crystal lens may alternatively be a reflective liquid crystal on silicon (liquid crystal on silicon, LCOS), and an external voltage signal or current signal that is applied to the liquid crystal lens may be changed, to change a direction of a major axis of liquid crystal molecules, so as to change a refractive index of light passing through the liquid crystal lens, and change a focal length of the liquid crystal lens.

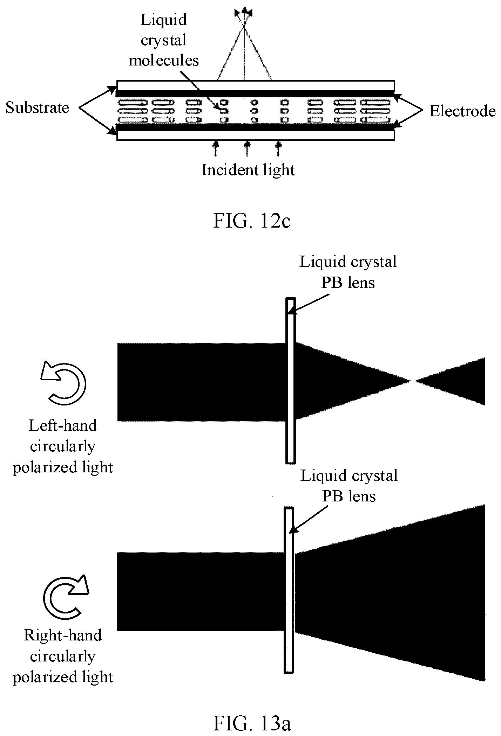

FIG. 12c is a schematic diagram of a structure of still another liquid crystal lens according to this disclosure. The liquid crystal lens may alternatively be a liquid crystal geometric phase (pancharatnam berry, PB) lens, and performs a lens function based on a geometric phase. A direction of a major axis of liquid crystal molecules in the liquid crystal PB lens or a polarization state of incident light entering the liquid crystal PB lens may be changed, to change a focal length of the liquid crystal PB lens.

Further, optionally, liquid crystal PB lenses may be classified into two types: an active type and a passive type. An active liquid crystal PB lens is mainly made of a liquid crystal material in a liquid crystal state. The liquid crystal material in the liquid crystal state has fluidity. A voltage signal or a current signal may be applied to the active liquid crystal PB lens to change a direction of a major axis of liquid crystal molecules, so as to implement zooming.

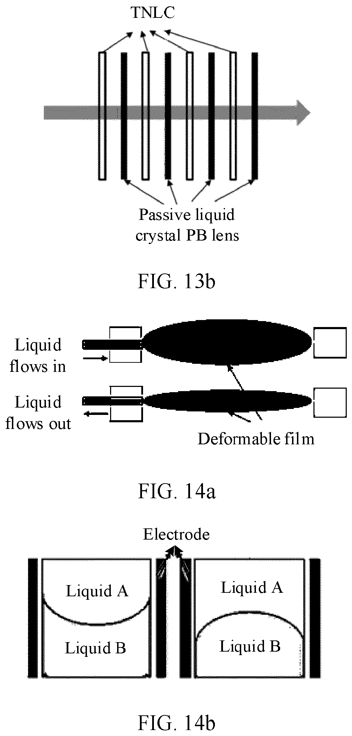

A passive liquid crystal PB lens has high thermal stability and a high resolution. The passive liquid crystal PB lens is mainly made of a liquid crystal polymer material. A solid-state polymer (Polymer) may be formed through aggregation in an exposure manner or the like, and a polarization state of incident light may be changed to implement zooming. For example, when incident light is parallel, a focal length of a left-hand circularly polarized light is 1 m, and a focal length of a right-hand circularly polarized light is -1 m. Refer to FIG. 13a. A polarization state of the incident light may be changed by using an electronically controlled half-wave plate or an electronically controlled twisted nematic liquid crystal (twisted nematic liquid crystal, TNLC). Refer to FIG. 13b. Because a zoom ability of the liquid crystal PB lens is discrete, discrete virtual image adjustment can be implemented by using the liquid crystal PB lens, and approximately continuous virtual image adjustment can be implemented by stacking a plurality of liquid crystal PB lenses (as shown in FIG. 13b). For example, if virtual image adjustment precision is 0.25 D and a virtual image adjustment range (namely, an adjustment ability) is 0 D to 4 D, 16 (4 D/0.25 D) virtual image locations are required, and four passive liquid crystal PB lenses may be combined four TNLCs. The TNLCs are configured to adjust polarization states, and one TNLC may obtain two polarization states (as shown in FIG. 13a) through adjustment.

Structure 9: The optical imaging assembly is a liquid lens.

FIG. 14a is a schematic diagram of a structure of a liquid lens according to this disclosure. A voltage signal or a current signal that is applied to the liquid lens may be changed, to change a shape of a film material. In addition, a liquid is injected into or flows out of the liquid lens, to change a focal length of the liquid lens.

FIG. 14b is a schematic diagram of a structure of another liquid lens according to this disclosure. According to an electro-infiltration principle, a voltage signal or a current signal that is applied to the liquid lens may be changed, to change a surface form of a boundary surface between two liquids that do not mix with each other, so as to change a focal length of the liquid lens.

Structure 10: The optical imaging assembly is a deformable reflector.

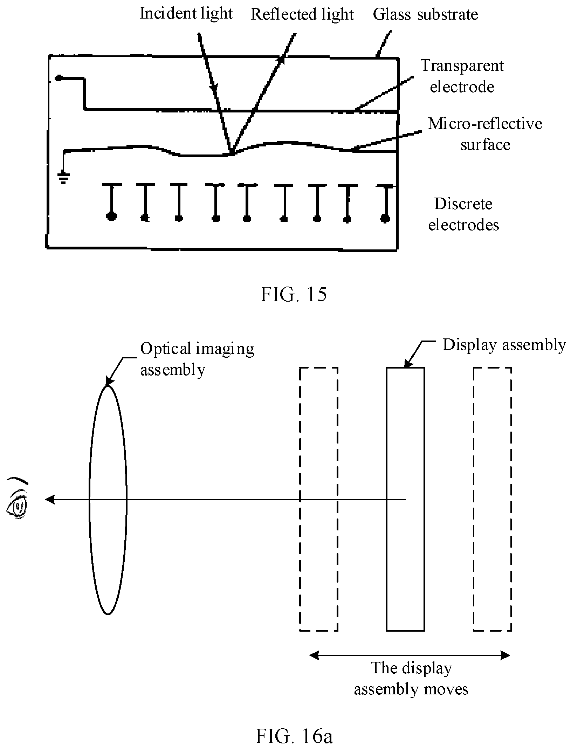

FIG. 15 is a schematic diagram of a structure of a deformable reflector according to this disclosure. The deformable reflector may have discrete micro-reflective surfaces or a continuous micro-reflective surface. An electrostatic force or an electromagnetic force is used to drive the micro-reflective surface to be deformed or displaced, and voltage signals or current signals of discrete electrodes are adjusted to implement different reflective surface forms, so as to implement zooming. It should be noted that the reflective surface may be a concave reflector, a curvature of the concave reflector may be adjusted by using a voltage signal or a current signal, and concave reflectors with different curvatures have different focal lengths.

In addition to the foregoing common optical structures, a user may alternatively use another more computation-oriented optical structure, for example, a computational display, digital zoom, or holographic display method, to adjust a location of a virtual image. This is not limited in this disclosure.

It should be noted that, for a user with astigmatism, a cylindrical lens and a rotary driving assembly are required for correcting the astigmatism, and the rotary driving assembly is configured to change an optical axis of the cylindrical lens. The cylindrical lens may be located between the optical imaging assembly and the display assembly, or located on a side, away from the display assembly, of the optical imaging assembly, that is, located between the optical imaging assembly and human eyes.

By using the foregoing optical imaging assemblies with various structures, a virtual image can be formed at a target location based on an image. For an optical path for forming the virtual image, refer to the optical path in FIG. 2b.

3. Virtual image location adjustment assembly

In a possible implementation, the virtual image location adjustment assembly may be configured to adjust the optical imaging assembly and/or the display assembly, to adjust the virtual image to the target location. The following describes two cases.

Case 1: The virtual image location adjustment assembly adjusts the optical imaging assembly and/or the display assembly in a mechanical adjustment manner.

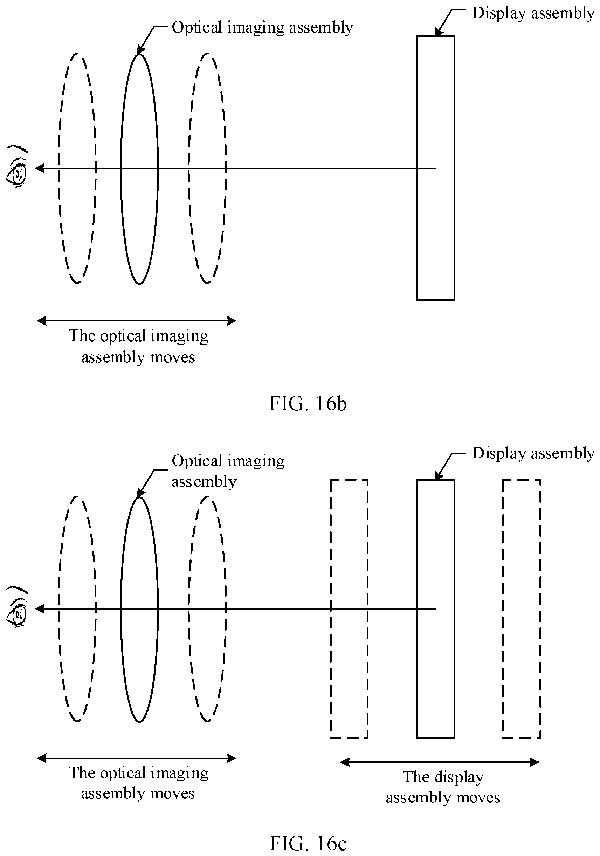

In a possible implementation, the virtual image location adjustment assembly may drive the optical imaging assembly and/or the display assembly to move, to adjust the virtual image to the target location. Specifically, the virtual image location adjustment assembly may be configured to move the display assembly, and the optical imaging assembly remains stationary, as shown in FIG. 16a; or the virtual image location adjustment assembly may be configured to move the optical imaging assembly, and the display assembly remains stationary, as shown in FIG. 16b; or the virtual image location adjustment assembly may be configured to move the display assembly and the optical imaging assembly, as shown in FIG. 16c. It should be understood that the optical imaging assemblies in FIG. 16a, FIG. 16b, and FIG. 16c are shown as lenses.

Based on the case 1, the adjusting the optical imaging assembly and/or the display assembly in a mechanical adjustment manner may be further divided into an automatic adjustment mode and a manual adjustment mode.

Case 1.1: automatic adjustment mode

Based on the case 1.1, in a possible implementation, the virtual image location adjustment assembly may include a driving assembly, and the driving assembly is configured to drive the optical imaging assembly and/or the display assembly to move, to adjust the virtual image to the target location.

For example, the driving assembly may drive, based on received to-move distances of the display assembly and/or the optical imaging assembly, the display assembly and/or the optical imaging assembly to move, to adjust the virtual image to the target location.

In another possible implementation, the virtual image location adjustment assembly may include a driving assembly and a location sensing assembly. In a possible implementation, the location sensing assembly is configured to determine locations of the optical imaging assembly and/or the display assembly. Further, the location sensing assembly may send the determined locations of the optical imaging assembly and/or the display assembly to a control assembly. Correspondingly, the control assembly may determine a first distance between the display assembly and the optical imaging assembly based on the locations of the optical imaging assembly and/or the display assembly; determine, based on the first distance, to-move distances by which the optical imaging assembly and/or the display assembly are to move; and send the to-move distances to the driving assembly. For example, the to-move distances may be carried in a control instruction sent by the control assembly to the driving assembly. Alternatively, the location sensing assembly is configured to determine a first distance between the optical imaging assembly and/or the display assembly, and send the first distance to the control assembly. The control assembly may determine, based on the first distance and the target location of the virtual image, to-move distances by which the optical imaging assembly and/or the display assembly are to move; and send the to-move distances to the driving assembly. For example, the to-move distances may be carried in a control instruction sent by the control assembly to the driving assembly.

In a possible implementation, the driving assembly is configured to drive, based on the to-move distances, the optical imaging assembly and/or the display assembly to move, to adjust the virtual image to the target location.

Further, optionally, the driving assembly may be a motor and a driving element. The motor may be configured to drive the driving element to rotate. The driving element may be configured to drive, under the action of the motor, the display assembly and/or the optical imaging assembly to move.

In a possible implementation, motors may be classified into an open loop (open loop) motor and a closed loop motor (close loop motor) based on functions. Open loop and closed loop are two concepts in automatic control. The open loop means that a current signal is input to a motor and displacement is output by the motor. No feedback control is performed, and therefore this is referred to as the open loop. The closed loop motor can accurately adjust the optical imaging assembly and/or the display assembly by using a closed loop system through location feedback. Usually, the closed loop motor includes a location sensor, for example, a Hall effect sensor, that is mounted at a location on a carrier of the optical imaging assembly. A Hall effect chip senses a magnetic flux of a surrounding magnet, and then an actual location of the optical imaging assembly is deduced. After the Hall effect chip is introduced, control over the motor can be changed from inputting a current signal and outputting displacement to inputting displacement and outputting displacement. The motor can continuously adjust a location of the motor based on a feedback of the Hall effect chip.

For example, the motor may be a stepper motor, a direct current motor, a silent motor, a servo motor, a voice coil motor, or the like. The servo motor is a closed loop motor. The stepper motor, the direct current motor, the silent motor, and the voice coil motor are usually open loop motors. The stepper motor and the silent motor can improve driving precision.

For example, the silent motor is an ultrasonic motor (ultrasonic motor, USM). The ultrasonic motor drives a piezoelectric material through an ultrasonic signal, so that the piezoelectric material is deformed. Then the deformation of the piezoelectric material is transferred to a rotor or a rotation ring through friction and mechanical movement, to produce rotational movement. There are two types of ultrasonic motors. One type is a ring USM that can be sleeved on a lens tube and directly driven without a reduction transmission gear, but a diameter of the lens tube is limited. The other type is a micro USM. Like a common stepper motor, the micro USM needs a driving element to drive a structure (for example, a lens tube or a snap ring) that fastens the optical imaging assembly. However, a size of the micro USM is smaller, and a diameter of the lens tube is not limited. The USM motor can reduce noise, and have a high speed, a large torque, and a wide operating temperature range.

The voice coil motor is also referred to as a voice coil motor (voice coil motor, VCM). A main operating principle is as follows: In a permanent magnetic field, strength of a direct current signal of a coil in the voice coil motor is changed, to convert a current signal into a mechanical force, so as to control a stretching location of a spring in the voice coil motor, and drive an object fastened to the spring to move. The voice coil motor is not aware of when movement is to start or where movement is to end, and a driver is required for processing and control. Usually, there is a driver chip (Driver IC) matching the voice coil motor. The driver chip receives a control instruction (for example, a first control instruction, a second control instruction, or a third control instruction in the following descriptions) sent by the control assembly, to output a current signal to the voice coil motor, so as to drive the voice coil motor to move. A voice coil motor equipped with a location sensor is aware of a location of a coil.

For example, the driving element may be a screw, a bolt, a gear, or a cam cylinder. The screw is, for example, a ball screw, and may convert rotational movement into linear movement, or convert linear movement into rotational movement. The screw has high precision, reversibility, and high efficiency.

In a possible implementation, the location sensing assembly may be a triangular ranging laser radar (refer to the foregoing descriptions of the triangular ranging laser radar) or a location encoder. The location encoder may be, for example, a grating ruler or a magnetic encoder. The location encoder may convert angular displacement into an electrical signal, for example, may be an angle encoder; or may convert linear displacement into an electrical signal.

Based on the foregoing content, the following provides specific implementations of the display module with reference to specific hardware structures, to further understand a process of adjusting the optical imaging assembly and/or the display assembly by the virtual image location adjustment assembly.

For ease of description of solutions, description is provided below by using an example in which the virtual image location adjustment assembly is configured to move the optical imaging assembly, the optical imaging assembly has the structure 2, and further, the first semi-transparent and semi-reflective mirror in the structure 2 is moved.

When the location sensing assembly is a triangular ranging laser radar, refer to FIG. 17a. FIG. 17a is a schematic diagram of a structure of a display module according to this disclosure. The triangular ranging laser radar may be fastened to the display assembly. For example, the triangular ranging laser radar may be fastened to a substrate on which the display assembly is located, and the first semi-transparent and semi-reflective mirror may be fastened by a snap ring. The triangular ranging laser radar may be configured to transmit a laser beam to a first surface of the snap ring. The first surface of the snap ring may be used to reflect the laser beam. The triangular ranging laser radar may determine a first distance between the first semi-transparent and semi-reflective mirror and the display assembly based on a received reflected beam and the transmitted laser beam. For a specific measurement principle, refer to the descriptions of FIG. 1b. Details are not described herein again.

Further, optionally, the triangular ranging laser radar may send location information to the control assembly, where the location information includes the first distance that is between the display assembly and the first semi-transparent and semi-reflective mirror and that is measured by the triangular ranging laser radar. Correspondingly, the control assembly may be configured to receive the location information from the triangular ranging laser radar, where the location information is used to indicate the first distance between the display assembly and the first semi-transparent and semi-reflective mirror. The control assembly may determine a to-move distance of the first semi-transparent and semi-reflective mirror based on the location information and the target location of the virtual image, generate a first control instruction based on the to-move distance, and send the first control instruction to the driving assembly. The first control instruction is used to instruct the driving assembly to drive the snap ring to move, so as to drive the first semi-transparent and semi-reflective mirror to move along a direction of a principal optical axis. Further, optionally, the control assembly may be configured to determine a to-move distance of the first semi-transparent and semi-reflective mirror based on a correspondence between the first distance and a location of the virtual image.

For example, the control assembly may be configured to determine a distance B between the display assembly and the optical imaging assembly when the virtual image is at the target location based on a distance A (namely, the first distance) that is between the display assembly and the optical imaging assembly and that is carried in the location information and based on the correspondence between the first distance and the location of the virtual image (as shown in Table 2); determine an absolute value of a difference between the distance B and the distance A as a to-move distance S of the first semi-transparent and semi-reflective mirror; and generate the first control instruction based on the to-move distance S. It should be noted that the correspondence between the location of the virtual image and the first distance may be prestored in the control assembly, or may be prestored in a memory, and the control assembly may read the correspondence from the memory after receiving the first distance.

**Table 2 Correspondence between the location of the virtual image and the first distance**

| Target location of the virtual image | First distance |
|---|---|
| 1.3 m | 5 mm |

In a possible implementation, the first control instruction may include the to-move distance S of the first semi-transparent and semi-reflective mirror. The driving assembly may be configured to drive, according to the received first control instruction, the snap ring to move by the distance S. The snap ring may drive the first semi-transparent and semi-reflective mirror to move by the distance S, to adjust the virtual image to the target location.

To improve precision for adjusting the location of the virtual image, the location sensing assembly may re-measure an actual distance Y between the optical imaging assembly and the display assembly after the optical imaging assembly moves by the distance S. That is, the location sensing assembly can measure locations of the optical imaging assembly and the display assembly in real time, to determine whether the virtual image is formed at the target location. Further, the location sensing assembly may be configured to send the actual distance Y to the control assembly. The control assembly may be configured to determine, based on a theoretical distance X and the actual distance Y, whether the optical imaging assembly needs to be further adjusted. It should be understood that, after the first semi-transparent and semi-reflective mirror moves by the distance S, a theoretical distance between the optical imaging assembly and the display assembly is X. However, the actual distance Y between the optical imaging assembly and the display assembly may be different from X due to a driving error of the driving assembly (refer to the following related descriptions).

Further, optionally, if $|Y - X| < \frac{1}{10000} \times \left(\frac{r1r2}{(1-n) \times r1 + 2n \times r2}\right)^2$, the location sensing assembly may be configured to feed back a first indication signal to the control assembly, where the first indication signal is used to indicate that no further adjustment is required; or if $|Y - X| \geq \frac{1}{10000} \times \left(\frac{r1r2}{(1-n) \times r1 + 2n \times r2}\right)^2$, the location sensing assembly may be configured to feed back a third control instruction to the control assembly, where the third control instruction may include a distance $|Y - X|$ by which movement needs to be further performed. Correspondingly, the control assembly may be configured to send a third control instruction to the driving assembly according to the received third control instruction. Correspondingly, the driving assembly may be configured to drive, according to the received third control instruction, the first semi-transparent and semi-reflective mirror to further move by $|Y - X|$, and so on, until $|Y - X| < \frac{1}{10000} \times \left(\frac{r1r2}{(1-n) \times r1 + 2n \times r2}\right)^2$.

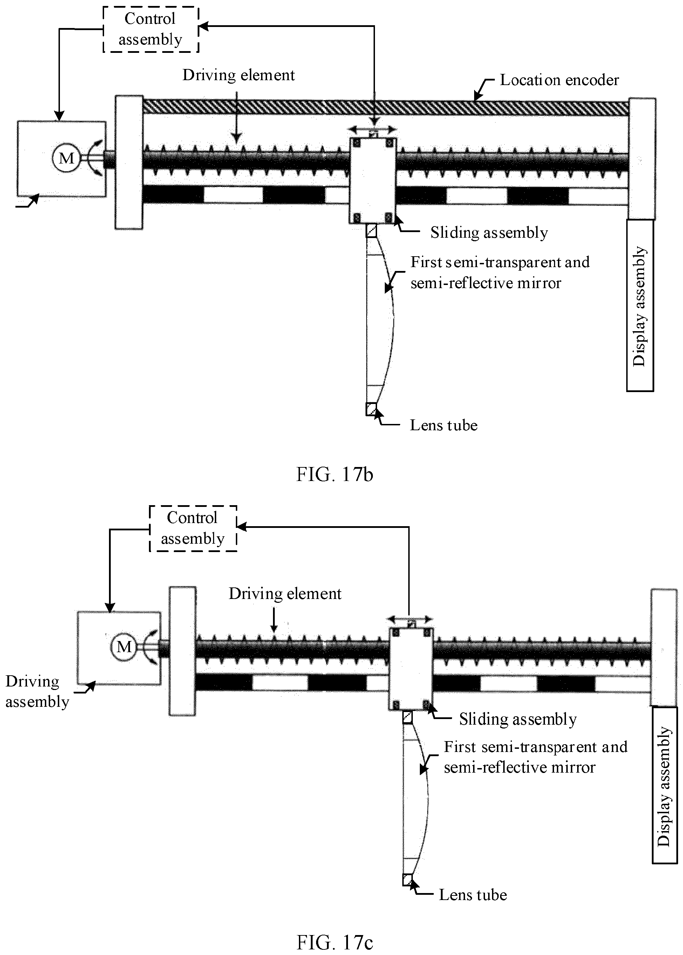

When the location sensing assembly is a location encoder, refer to FIG. 17b. FIG. 17b is a schematic diagram of a structure of another display module according to this disclosure. The location encoder may be fastened to a substrate on which the display assembly is located. The optical imaging assembly may be fastened by a lens tube. The lens tube is fastened to a sliding assembly. When the sliding assembly moves, the first semi-transparent and semi-reflective mirror may be driven to move. The location encoder may determine a location of the first semi-transparent and semi-reflective mirror by measuring a location of the sliding assembly. The sliding assembly may be a sliding block.

Further, optionally, the location encoder may send location information to the control assembly, where the location information includes the location, measured by the location encoder, of the first semi-transparent and semi-reflective mirror. Correspondingly, the control assembly may be configured to receive the location information from the location encoder, where the location information is used to indicate the location of the first semi-transparent and semi-reflective mirror; determine a first distance between the display assembly and the first semi-transparent and semi-reflective mirror based on the location information; determine a to-move distance of the first semi-transparent and semi-reflective mirror based on the first distance and the target location of the virtual image; generate a first control instruction based on the to-move distance; and send the first control instruction to the driving assembly. The first control instruction is used to instruct the driving assembly to drive the driving element to rotate, so as to drive the sliding assembly to move, and further drive the first semi-transparent and semi-reflective mirror to move. Further, optionally, the control assembly may be configured to determine a to-move distance of the first semi-transparent and semi-reflective mirror based on a correspondence between the first distance and a location of the virtual image. It should be understood that the first semi-transparent and semi-reflective mirror moves along a direction of a principal optical axis of the first semi-transparent and semi-reflective mirror.

In a possible implementation, the location sensing assembly and the driving assembly may be integrated. Refer to FIG. 17c.

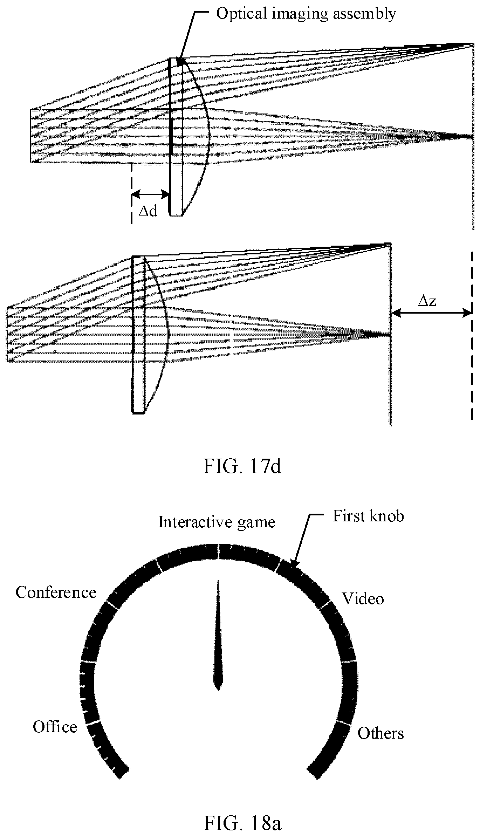

It should be noted that, when the optical imaging assembly moves by a distance $\Delta d$, the virtual image formed by the optical imaging assembly based on the image displayed by the display assembly may move by a distance $\Delta z$. Refer to FIG. 17d. It should be noted that $\Delta z$ is a function related to $\Delta d$, that is, $\Delta z = f(\Delta d)$. It should be understood that the optical imaging assembly is shown as a semi-transparent and semi-reflective mirror in FIG. 17d.

In a possible implementation, when the optical imaging assembly has the structure 6, with reference to FIG. 10, the location sensing assembly may be configured to determine a first distance between two refractive optical elements (for example, a distance between centers of the refractive lens 1 and the refractive lens 2) in a direction perpendicular to a principal optical axis of the refractive lenses (that is, a horizontal direction shown in FIG. 10). Further, optionally, the location sensing assembly may send location information to the control assembly, where the location information includes the first distance between the two refractive lenses that is measured by the location sensing assembly. Correspondingly, the control assembly may be configured to receive the location information from the location sensing assembly, where the location information is used to indicate the first distance between the two refractive lenses. The control assembly may determine to-move distances of the two refractive lenses based on the location information and the target location of the virtual image, generate a first control instruction based on the to-move distances, and send the first control instruction to the driving assembly. The first control instruction is used to instruct the driving assembly to drive at least one of the two refractive lenses to move along a direction perpendicular to an optical axis of the refractive lens. Correspondingly, the driving assembly may be configured to drive, according to the received first control instruction, at least one of the two refractive lenses to move along a direction perpendicular to an optical axis of the refractive lens.

When the optical imaging assembly has the structure 7, the location sensing assembly is configured to determine relative angles of the diffractive optical element 1 and the diffractive optical element 2. Further, optionally, the location sensing assembly may send location information to the control assembly, where the location information includes the relative angles of the diffractive optical element 1 and the diffractive optical element 2. Correspondingly, the control assembly may be configured to receive the location information from the location sensing assembly, where the location information is used to indicate the relative angles of the diffractive optical element 1 and the diffractive optical element 2. The control assembly may determine, based on the location information and the target location of the virtual image, to-rotate angles of the two diffractive optical elements, generate a first control instruction based on the to-rotate angles, and send the first control instruction to the driving assembly. The first control instruction is used to instruct the driving assembly to drive the diffractive optical element 1 and the diffractive optical element 2 to rotate along opposite directions, or is used to instruct the driving assembly to drive one of the diffractive optical element 1 and the diffractive optical element 2 to rotate. Correspondingly, the driving assembly may be configured to drive, according to the received first control instruction, the diffractive optical element 1 and the diffractive optical element 2 to rotate along opposite directions, or drive one of the diffractive optical element 1 and the diffractive optical element 2 to rotate. Further, optionally, the control assembly may be configured to determine a to-rotate angle based on a correspondence between the relative angles and a location of the virtual image.

It should be noted that, when the virtual image is at the target location, the to-move distances or the to-rotate angles of the optical imaging assembly and/or the display assembly may be pre-obtained through simulation and stored in a memory of the display module or an external memory that can be invoked by the display module.

In a possible implementation, the virtual image location adjustment assembly has specific adjustment precision and a specific adjustment range when adjusting the optical imaging assembly and/or the display assembly. The following describes in detail the adjustment precision and the adjustment range of the virtual image location adjustment assembly.

In a possible implementation, the adjustment range of the virtual image location adjustment assembly is determined based on a driving range of the driving assembly and a measurement range of the location sensing assembly. Further, optionally, both the driving range of the driving assembly and the measurement range of the location sensing assembly are related to an optical parameter of the optical imaging assembly.

With reference to FIG. 6d, to ensure that the adjustment range of the virtual image location adjustment assembly is not less than 5 D, the driving range should meet the following condition: the driving range $\geq \frac{1}{300} \times \left( \frac{r1r2}{(1-n) \times r1 + 2n \times r2} \right)^2$.

Further, optionally, the driving range of the driving assembly should meet the following condition: the driving range $\geq \frac{1}{200} \times \left( \frac{r1r2}{(1-n) \times r1 + 2n \times r2} \right)^2$, The measurement range of the location sensing assembly should meet the following condition: the measurement range = $x_{range}$, where $\left| x_{range} \right| \geq 2 \times \frac{1}{300} \times \left( \frac{r1r2}{(1-n) \times r1 + 2n \times r2} \right)^2$. Further, optionally, $\left| x_{range} \right| \geq 2 \times \frac{1}{200} \times \left( \frac{r1r2}{(1-n) \times r1 + 2n \times r2} \right)^2$.

In a possible implementation, the adjustment precision of the virtual image location adjustment assembly is determined based on a driving error of the driving assembly and a location measurement error of the location sensing assembly. Further, optionally, both the driving error of the driving assembly and the location measurement error of the location sensing assembly are related to an optical parameter of the optical imaging assembly.

With reference to FIG. 6d, to ensure that the adjustment precision of the virtual image location adjustment assembly is not greater than 0.2 D, the driving error of the driving assembly should meet the following condition: the driving error < $\frac{1}{4000} \times \left( \frac{r1r2}{(1-n) \times r1 + 2n \times r2} \right)^2$. Further, optionally, to ensure that the adjustment precision of the virtual image location adjustment assembly is not less than 0.1 D, the driving error of the driving assembly should meet the following condition: the driving error < $\frac{1}{20000} \times \left( \frac{r1r2}{(1-n) \times r1 + 2n \times r2} \right)^2$. To ensure that virtual image location adjustment precision is not greater than 0.2 D, the location measurement error of the location sensing assembly should meet the following condition: the location measurement error < $\frac{1}{10000} \times \left( \frac{r1r2}{(1-n) \times r1 + 2n \times r2} \right)^2$. Further, optionally, to ensure that virtual image location adjustment precision is not less than 0.1 D, the location measurement error of the location sensing assembly should meet the following condition: the location measurement error < $\frac{1}{80000} \times \left( \frac{r1r2}{(1-n) \times r1 + 2n \times r2} \right)^2$.

Case 1.2: manual adjustment mode

In a possible implementation, the cam focusing mechanism may include a first knob, and the first knob is configured to select a preset scene type to which the first object belongs. In FIG. 18a, four preset scene types are used as examples: an office scene type, a conference scene type, an interactive game scene type, and a video scene type. A user may rotate the first knob to rotate a pointer to a specific location, where an object indicated by the pointer is a selected preset scene type.

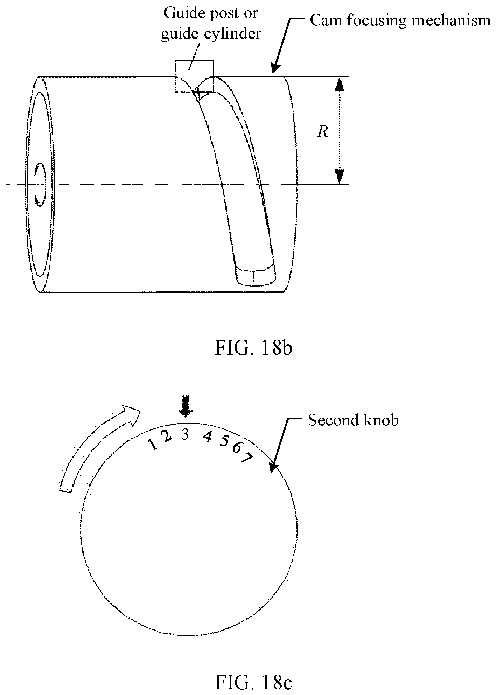

In a possible implementation, the cam focusing mechanism may further include a guide post (or a guide cylinder). Refer to FIG. 18b. The first knob may be connected to one end of the guide post (or the guide cylinder) through a mechanical structure, and the other end of the guide post (or the guide cylinder) is connected to the optical imaging assembly. When the first knob is rotated to select the preset scene type to which the first object belongs, the guide post (or the guide cylinder) may be driven to drive the optical imaging assembly to move, so as to form the virtual image at the target location.

Further, optionally, the cam focusing mechanism may further include a second knob, and the second knob is configured to adjust a vision parameter. Refer to FIG. 18c. Corresponding scales may be further marked on the second knob, and the scales identify the vision parameter. For example, scales 1 to 7 indicate 1.0 diopter to 7.0 diopters. The user may rotate the second knob to make an arrow point to a specific location, and the location to which the arrow points is a selected value of the vision parameter. The second knob may also be referred to as a vision diopter adjustment knob.

The cam focusing mechanism is used to select the preset scene type to which the first object belongs, set the vision parameter, and drive the optical imaging assembly to move. In this case, a manual adjustment mechanism is used, and no driving assembly (for example, a motor) is required for driving. This helps reduce costs of the display module.

Case 2: non-mechanical focusing mode

Based on the case 2, the optical imaging assembly includes a zoom lens, which may be, for example, the zoom lens described in the structure 8 to the structure 10.

In a possible implementation, the virtual image location adjustment assembly includes a driving assembly, and the driving assembly is configured to change a voltage signal or a current signal that is applied to the zoom lens, to change a focal length of the zoom lens, so as to adjust the virtual image to the target location.

In another possible implementation, the virtual image location adjustment assembly may include a driving assembly and a location sensing assembly. The location sensing assembly may be configured to determine a first focal length of the zoom lens, where the first focal length is used to determine a focal length adjustment amount of the zoom lens. The driving assembly may be configured to change, based on the focal length adjustment amount, a voltage signal or a current signal that is applied to the zoom lens, to adjust the virtual image to the target location. It should be understood that the first focal length of the zoom lens includes a current focal length of the zoom lens.

With reference to the active liquid crystal PB lens in FIG. 12a, FIG. 12b, and FIG. 12c in the structure 8, and the optical imaging assembly described in the structure 9, the virtual image location adjustment assembly may change a voltage signal or a current signal that is applied to the zoom lens, to change a focal length of the zoom lens, so as to adjust the virtual image to the target location. It should be understood that a relationship between a focal length of the zoom lens and a voltage signal or a current signal may be determined by the control assembly.

In another possible implementation, the virtual image location adjustment assembly may be an electronically controlled half-wave plate or a TNLC. With reference to the optical imaging assembly, namely, the passive liquid crystal PB lens, in FIG. 12c in the structure 8, the electronically controlled half-wave plate or the TNLC may change a polarization state of incident light, to change a focal length of the zoom lens, so as to adjust the virtual image to the target location. It should be understood that a relationship between a focal length of the zoom lens and a polarization state of incident light may be determined by the control assembly.

In still another possible implementation, the virtual image location adjustment assembly may include a driving assembly and a location sensing assembly. The driving assembly is a set of circuit boards that can generate a specific voltage signal or current signal. The location sensing assembly is another set of circuit boards that can be used to measure a voltage signal or a current signal that is applied to the optical imaging assembly. With reference to the optical imaging assembly described in the structure 10, the driving assembly may change an electrostatic force or an electromagnetic force that is applied to the zoom lens, to change a focal length of the zoom lens, so as to adjust the virtual image to the target location. It should be understood that a relationship between a focal length of the zoom lens and an electrostatic force (or an electromagnetic force) may be determined by the control assembly. The virtual image location adjustment assembly adjusts the location of the virtual image, so that the user can clearly see the image displayed by the display assembly. In addition, this can help alleviate the vergence and accommodation conflict.

In this disclosure, the display module may further include the control assembly.

4. Control assembly

In a possible implementation, the control assembly may be, for example, a processor, a microprocessor, a controller, or another control assembly. For example, the control assembly may be a general-purpose central processing unit (central processing unit, CPU), a general-purpose processor, digital signal processing (digital signal processor, DSP), an application-specific integrated circuit (application specific integrated circuits, ASIC), a field programmable gate array (field programmable gate array, FPGA) or another programmable logic device, a transistor logic device, a hardware component, or any combination thereof.

In a possible implementation, for a function performed by the control assembly, refer to the foregoing related descriptions. Details are not described herein again.

The location of the virtual image may be determined in normal vision based on the image displayed on the display assembly or the first object selected on the first interface; and further, the target location of the virtual image is determined based on the obtained vision parameter. This may also be understood as that the location of the virtual image is first adjusted based on the image displayed by the display assembly or the first object selected on the first interface, and then the virtual image is finely adjusted to the target location based on the vision parameter.

It should be noted that, to adapt to users in various vision statuses, the following shows four implementations of vision adjustment as examples.

Implementation a: The display module does not have a vision adjustment function, and may provide a large eye relief (eye relief). A user may wear glasses to use the display module.

Implementation b: The display module does not have a vision adjustment function, and provides proper space for a user to place a customized lens, for example, myopia correction lenses with different diopters.

Implementation c: The display module can correct myopia by using a passive liquid crystal PB lens. For example, a focal power of approximately 7 D is required for myopia correction, zoom lenses need to provide a zoom capability (namely, a measurement range) of 11 D in total, and adjustment precision of a virtual image plane is 0.25 D. In this case, 44 virtual image locations need to be provided, and correspondingly, six passive liquid crystal PB lenses are required.

In a possible implementation, a control assembly may be integrated into the display module, that is, the control assembly and the display module constitute an integrated device; or a control assembly of a terminal device in which the display module is located may be used separately.

It should be noted that the display module may include a control assembly and a memory, and may be referred to as an all-in-one machine; or the display module may not include a control assembly or a memory, and may be referred to as a split machine; or the display module does not include a control assembly or a memory but includes a micro processing unit, and may also be referred to as a split machine.

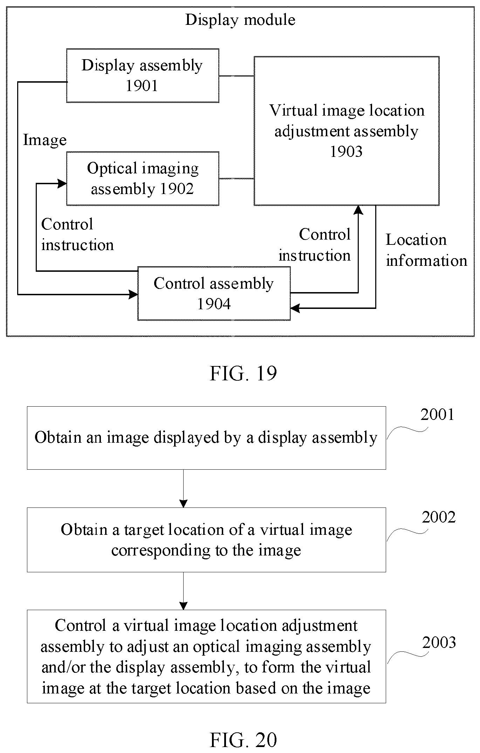

FIG. 19 is a schematic diagram of a structure of still another display module according to this disclosure. The display module includes a display assembly 1901, an optical imaging assembly 1902, a virtual image location adjustment assembly 1903, and a control assembly 1904. For the display assembly 1901, the optical imaging assembly 1902, the virtual image location adjustment assembly 1903, and the control assembly 1904, refer to the foregoing related descriptions. Details are not described herein again. Based on the structures and the functional principles of the display modules described above, this disclosure may further provide a head-mounted display device. The head-mounted display device may include a control assembly and the display module in any one of the foregoing examples. It can be understood that the head-mounted display device may further include other components, such as a wireless communication apparatus, a sensor, and a memory.

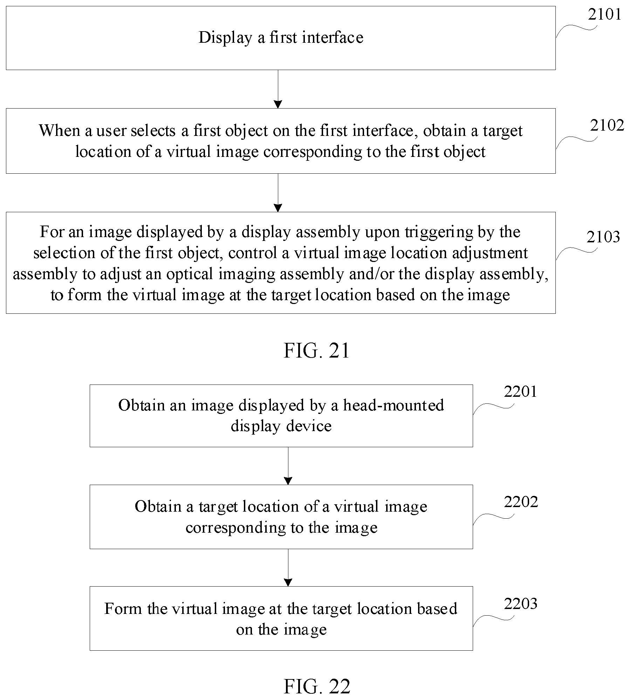

Based on the foregoing content and a same concept, this disclosure provides a virtual image location adjustment method. Refer to descriptions of FIG. 20 and FIG. 21. The virtual image location adjustment method may be applied to the display module described in any one of the examples of FIG. 3 to FIG. 19. This may also be understood as that the virtual image location adjustment method may be implemented based on the display module described in any one of the examples of FIG. 3 to FIG. 19. The following separately provides description based on whether a target location of a virtual image is determined based on a preset scene type to which a displayed image belongs or is determined based on a preset scene type to which an object selected by a user belongs.

Case A: A location of a virtual image is adaptively adjusted based on a preset scene type to which an image belongs.

FIG. 20 is a schematic flowchart of a virtual image location adjustment method according to this disclosure. The method includes the following steps.

Step 2001: Obtain an image displayed by a display assembly.

Herein, for the image displayed by the display assembly, refer to the foregoing related descriptions of the display assembly. Details are not described herein again.

Step 2002: Obtain a target location of a virtual image corresponding to the image.

Herein, for a possible implementation of obtaining the target location of the virtual image, refer to the foregoing implementation 1, implementation 2, and implementation 3.

The target location of the virtual image is related to a preset scene type to which the image belongs. For details, refer to the foregoing related descriptions. Details are not described herein again.

Step 2003: Control a virtual image location adjustment assembly to adjust an optical imaging assembly and/or the display assembly, to form the virtual image at the target location based on the image.

For step 2003, refer to the foregoing related descriptions of adjusting the optical imaging assembly and/or the display assembly. Details are not described herein again.

It should be noted that step 2001 to step 2003 may be performed by a control assembly in the display module. In other words, the display module to which the virtual image location adjustment method shown in FIG. 20 is applied includes a control assembly. Case B: A location of a virtual image is adjusted based on a preset scene type to which an object selected by a user belongs.

FIG. 21 is a schematic flowchart of another virtual image location adjustment method according to this disclosure. The method includes the following steps.

Step 2101: Display a first interface.

With reference to the display module in any one of the examples of FIG. 3 to FIG. 19, step 2101 may be performed by a display assembly in the display module. For details, refer to the foregoing related descriptions of displaying the first interface by the display assembly. Details are not described herein again.

Step 2102: When a user selects a first object on the first interface, obtain a target location of a virtual image corresponding to the first object.

The target location of the virtual image is related to a preset scene type to which the first object belongs. Refer to the foregoing related descriptions. Details are not described herein again. For manners of selecting the first object by the user on the first interface and obtaining the target location of the virtual image corresponding to the first object, refer to the foregoing related descriptions. Herein, based on whether a head-mounted display device includes a control assembly, two manners of obtaining the target location corresponding to the first object may be described as examples.

Manner a: The head-mounted display device includes a control assembly.

Based on the manner a, the obtaining the target location corresponding to the first object may include the following steps.

Step A: The control assembly obtains a second preset scene type to which the first object belongs.

For example, the control assembly may receive a second preset scene type to which the first object belongs and that is sent by a terminal device, or the control assembly may determine a second preset scene type to which the first object belongs.

Step B: The control assembly obtains a correspondence between a preset scene type and a virtual image location.

For the step B, refer to related descriptions of step b in FIG. 22. Details are not described herein.

Step C: The control assembly determines, based on the correspondence between a preset scene type and a virtual image location, a target location corresponding to the second preset scene type.

Herein, a location corresponding to the second preset scene type may be found in the correspondence between a preset scene type and a virtual image location, and the location is the target location.

Manner b: The head-mounted display device does not include a control assembly.

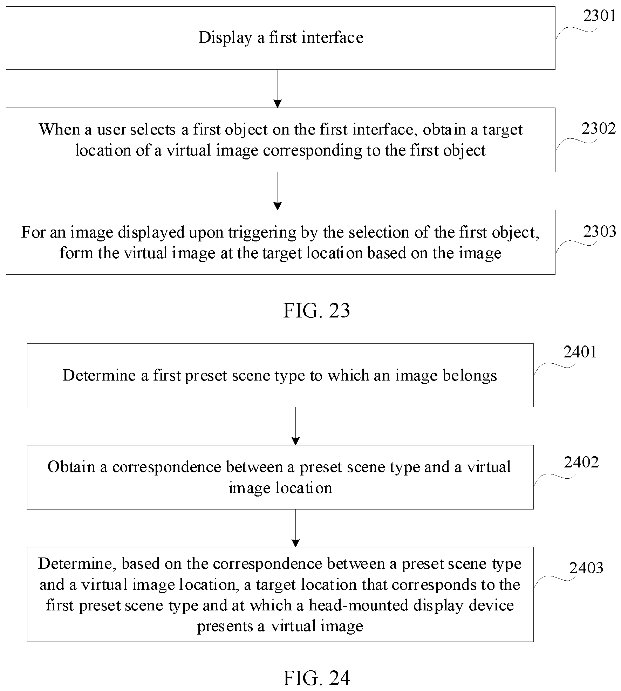

Based on the manner b, the head-mounted display device may receive a target location, sent by a terminal device, of the virtual image corresponding to the first object. For determining, by the terminal device, the target location of the virtual image corresponding to the first object, refer to related descriptions of FIG. 24. Details are not described herein.

Step 2103: For an image displayed by the display assembly upon triggering by the selection of the first object, control a virtual image location adjustment assembly to adjust an optical imaging assembly and/or the display assembly, to form the virtual image at the target location based on the image.

For step 2103, refer to the foregoing related descriptions of adjusting the optical imaging assembly and/or the display assembly. Details are not described herein again. It should be noted that step 2103 may be performed by the control assembly of the display module, or may be performed by the terminal device.

Based on the foregoing content and a same idea, this disclosure provides another virtual image location adjustment method. Refer to descriptions of FIG. 22 and FIG. 23. The virtual image location adjustment method may be applied to a head-mounted display device. The following separately provides description based on the case A and the case B.

Based on the case A, this disclosure provides a virtual image location adjustment method. Refer to descriptions of FIG. 22. The virtual image location adjustment method may be applied to a head-mounted display device.

FIG. 22 is a schematic flowchart of a virtual image location adjustment method according to this disclosure. The method includes the following steps.

Step 2201: Obtain an image displayed by the head-mounted display device.

Herein, an image sent by a terminal device may be received, or an image transmitted by a projection system in the head-mounted display device may be received.

Step 2202: Obtain a target location of a virtual image corresponding to the image.

The target location of the virtual image is related to a preset scene type to which the image belongs. When the image belongs to different preset scene types, the head-mounted display device presents the virtual image at different target locations. For example, when the preset scene type to which the image belongs is a conference scene type, a distance between an optical imaging assembly and the target location at which the head-mounted display device presents the virtual image is 0.583 D; when the preset scene type to which the image belongs is an interactive game scene type, a distance between the optical imaging assembly and the target location at which the head-mounted display device presents the virtual image is 1 D; or when the preset scene type to which the image belongs is a video scene type, a distance between the optical imaging assembly and the target location at which the head-mounted display device presents the virtual image is 0.5 D.

Further, optionally, the preset scene type to which the image belongs may be a preset scene type to which content of the image belongs, or may be a preset scene type to which an object corresponding to the image belongs. An application corresponding to the image may be understood as that the image is an image displayed after the application is started.

Based on whether the head-mounted display device includes a control assembly, two manners of obtaining the target location corresponding to the image are described below as examples.

Manner A: based on that the head-mounted display device includes a control assembly

In the manner A, the obtaining the target location corresponding to the image may include the following steps.

Step a: The control assembly obtains a first preset scene type to which the image displayed by the head-mounted display device belongs.

Herein, a first preset scene type to which the image belongs and that is sent by the terminal device may be received, or the head-mounted display device may determine a first preset scene type to which the image belongs (for a specific determining process, refer to the foregoing related descriptions, and details are not described herein again).

Step b: The control assembly obtains a correspondence between a preset scene type and a virtual image location.

Further, optionally, the head-mounted display device may further include a memory, and the correspondence between a preset scene type and a virtual image location may be stored in the memory of the head-mounted display device. In other words, the head-mounted display device may include the control assembly and the memory, that is, is an all-in-one machine. For a more detailed process of obtaining the target location in step b, refer to related descriptions in the implementation 1.

It should be understood that the head-mounted display device may alternatively not include a memory. The correspondence between a preset scene type and a virtual image location may be stored in a memory outside the head-mounted display device, for example, in a memory of the terminal device. The head-mounted display device may obtain the correspondence between a preset scene type and a virtual image location by invoking the memory of the terminal device.

Step c: The control assembly determines, based on the correspondence between a preset scene type and a virtual image location, a target location corresponding to the first preset scene type.

Herein, a location corresponding to the first preset scene type may be found in the correspondence between a preset scene type and a virtual image location, and the location is the target location.

Manner B: based on that the head-mounted display device does not include a control assembly

In the manner B, a target location, sent by the terminal device, of the virtual image corresponding to the image may be received. For a process of determining, by the terminal device, the target location of the virtual image corresponding to the image, refer to related descriptions of FIG. 24. Details are not described herein.

Step 2203: Form the virtual image at the target location based on the image.

In a possible implementation, step 2203 may be implemented by the control assembly in the head-mounted display device by controlling a virtual image location adjustment assembly, or may be implemented by the terminal device by controlling the virtual image location adjustment assembly.

The following describes four possible implementations of forming the virtual image at the target location based on the image as examples.

Implementation 1: The head-mounted display device determines to-move distances of a display assembly and/or the optical imaging assembly.

Based on the implementation 1, the head-mounted display device includes the display assembly and the optical imaging assembly. Specifically, a first distance between the display assembly and the optical imaging assembly may be obtained; the to-move distances of the display assembly and/or the optical imaging assembly are determined based on the first distance and the target location; and then the display assembly and/or the optical imaging assembly are driven based on the to-move distances to move, to adjust the virtual image to the target location. For more detailed descriptions, refer to the foregoing related descriptions. Details are not described herein again.

Implementation 2: The head-mounted display device receives to-move distances, sent by the terminal device, of a display assembly and/or the optical imaging assembly.

Based on the implementation 2, the head-mounted display device includes the display assembly and the optical imaging assembly. Specifically, the to-move distances, sent by the terminal device, of the display assembly and/or the optical imaging assembly may be received; and the display assembly and/or the optical imaging assembly are driven based on the to-move distances to move, to adjust the virtual image to the target location. For determining, by the terminal device, the to-move distances of the display assembly and/or the optical imaging assembly, refer to related descriptions of FIG. 24. For more detailed descriptions, refer to the foregoing related descriptions. Details are not described herein again.

Implementation 3: The head-mounted display device determines a focal length adjustment amount of a zoom lens.

Based on the implementation 3, the head-mounted display device includes a display assembly and the optical imaging assembly, and the optical imaging assembly includes the zoom lens. Specifically, a first focal length of the zoom lens may be first determined; the focal length adjustment amount of the zoom lens is determined based on the first focal length and the target location; and a voltage signal or a current signal that is applied to the zoom lens is changed based on the focal length adjustment amount, to adjust the virtual image to the target location.

Implementation 4: The head-mounted display device receives a focal length adjustment amount, sent by the terminal device, of a zoom lens.

Based on the implementation 4, the head-mounted display device includes a display assembly and the optical imaging assembly, and the optical imaging assembly includes the zoom lens. The focal length adjustment amount, sent by the terminal device, of the zoom lens may be received; and a voltage signal or a current signal that is applied to the zoom lens is changed based on the focal length adjustment amount, to adjust the virtual image to the target location.

Based on the case B, this disclosure provides another virtual image location adjustment method. Refer to descriptions of FIG. 23. The virtual image location adjustment method may be applied to a head-mounted display device.

FIG. 23 is a schematic flowchart of another virtual image location adjustment method according to this disclosure.

The method includes the following steps.

Step 2301: Display a first interface.

For step 2301, refer to the descriptions of step 2101. Details are not described herein again.

Step 2302: When a user selects a first object on the first interface, obtain a target location of a virtual image corresponding to the first object.

Herein, the target location of the virtual image is related to a preset scene type to which the first object belongs. For step 2302, refer to related descriptions of step 2102. Details are not described herein again.

Step 2303: For an image displayed upon triggering by the selection of the first object, form the virtual image at the target location based on the image.

For step 2303, refer to the descriptions of step 2203. Details are not described herein again.

It should be noted that step 2303 may be performed by a control assembly of a display module, or may be performed by a terminal device.

Based on FIG. 22, when the head-mounted display device does not include a control assembly, the terminal device may control the head-mounted display device to adjust a location of the virtual image. FIG. 24 shows still another virtual image location adjustment method according to this disclosure. The method may be applied to a terminal device. The method may include the following steps. Step 2401: Determine a first preset scene type to which an image displayed by a head-mounted display device belongs.

The image displayed by the head-mounted display device may be transmitted by the terminal device to the head-mounted display device. This may also be understood as that the terminal device may transmit, to the head-mounted display device, a beam carrying image information, so that the head-mounted display device displays the image. For a specific possible implementation of determining, refer to the foregoing related descriptions. Details are not described herein again.

Step 2402: Obtain a correspondence between a preset scene type and a virtual image location.

In a possible implementation, if the correspondence between a preset scene type and a virtual image location is stored in a memory of the head-mounted display device, the terminal device may receive the correspondence that is between a preset scene type and a virtual image location and that is sent by the head-mounted display device, that is, the terminal device may invoke the correspondence between a preset scene type and a virtual image location from the head-mounted display device. If the correspondence between a preset scene type and a virtual image location is stored in the terminal device, the terminal device may directly read the correspondence from a memory of the terminal device. For the correspondence between a preset scene type and a virtual image location, refer to the foregoing related descriptions. Details are not described herein again.

Step 2403: Determine, based on the correspondence between a preset scene type and a virtual image location, a target location that corresponds to the first preset scene type and at which the head-mounted display device presents a virtual image.

The target location of the virtual image is related to a preset scene type to which the image belongs. For more detailed descriptions, refer to the foregoing related descriptions. Details are not described herein again.

Step 2404: Control, based on the target location, the head-mounted display device to form the virtual image at the target location based on the image.

The following describes two methods for controlling the head-mounted display device to form the virtual image at the target location based on the image as examples.

Method 1.1: A first control instruction is sent to the head-mounted display device.

In a possible implementation, a first distance between a display assembly and an optical imaging assembly in the head-mounted display device is obtained; to-move distances of the display assembly and/or the optical imaging assembly are determined based on the first distance and the target location; and the first control instruction is generated based on the to-move distances, and the first control instruction is sent to the head-mounted display device, where the first control instruction is used to control the display assembly and/or the optical imaging assembly to move, to adjust the virtual image to the target location.

Further, optionally, locations, sent by a virtual image location adjustment assembly in the head-mounted display device, of the optical imaging assembly and/or the display assembly may be received, and the first distance is determined based on the locations of the optical imaging assembly and/or the display assembly (refer to FIG. 17b and FIG. 17c); or the first distance between the display assembly and the optical imaging assembly may be directly determined (refer to FIG. 17a).

Method 1.2: A second control instruction is sent to the head-mounted display device.

In a possible implementation, a first focal length of an optical imaging assembly in the head-mounted display device is obtained; a focal length adjustment amount of the optical imaging assembly is determined based on the first focal length and the target location; and the second control instruction is generated based on the focal length adjustment amount, and the second control instruction is sent to the head-mounted display device, where the second control instruction is used to control a voltage signal or a current signal that is applied to the optical imaging assembly, to adjust a focal length of the optical imaging assembly, so as to adjust the virtual image to the target location.

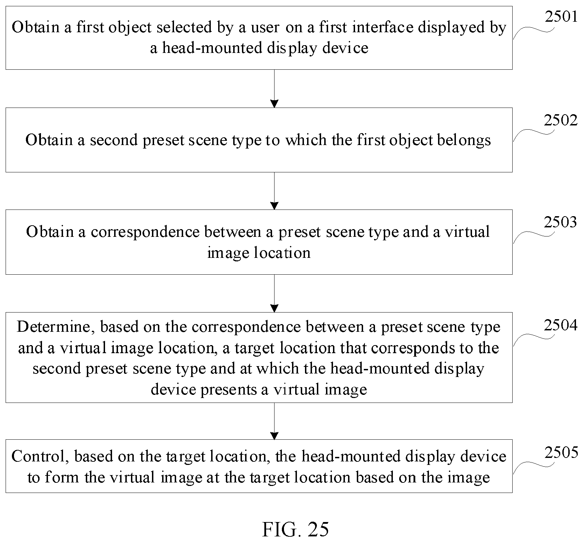

Based on FIG. 23, when the head-mounted display device does not include a control assembly, the terminal device may control the head-mounted display device to adjust a location of the virtual image. FIG. 25 shows still another virtual image location adjustment method according to this disclosure. The method may be applied to a terminal device. The method may include the following steps. Step 2501: Obtain a first object selected by a user on a first interface displayed by a head-mounted display device.

In a possible implementation, after detecting that a user selects the first object on the first interface, the head-mounted display device may send an identifier of the selected first object to the terminal device. The identifier of the first object may be pre-agreed upon by the terminal device and the head-mounted display device, or may be indicated by the head-mounted display device to the terminal device; or a correspondence between an object identifier and an object may be prestored in the terminal device.

Step 2502: Obtain a second preset scene type to which the first object belongs.

In a possible implementation, a relationship between an object and a preset scene type may be prestored, so that the second preset scene type to which the first object belongs may be determined from the correspondence between an object and a preset scene. Step 2503: Obtain a correspondence between a preset scene type and a virtual image location.

In a possible implementation, if the correspondence between a preset scene type and a virtual image location is stored in a memory of the head-mounted display device, the terminal device may receive the correspondence sent by the head-mounted display device, and determine, from the correspondence, the second preset scene type to which the first object belongs. If the correspondence between a preset scene type and a virtual image location is stored in the terminal device, the terminal device may directly read the correspondence from a memory of the terminal device, and determine, from the correspondence, the second preset scene type to which the first object belongs. For the correspondence between a preset scene type and a virtual image location, refer to the foregoing related descriptions. Details are not described herein again.

Step 2504: Determine, based on the correspondence between a preset scene type and a virtual image location, a target location that corresponds to the second preset scene type and at which the head-mounted display device presents a virtual image.

The target location of the virtual image is related to a preset scene type to which the first object belongs. For step 2504, refer to related descriptions of step 2302.

Step 2505: Control, based on the target location, the head-mounted display device to form the virtual image at the target location based on the image.

For step 2505, refer to related descriptions of step 2404. Details are not described herein again.

It should be understood that, when the head-mounted display device includes a control assembly, the image displayed by the head-mounted display device may alternatively be transmitted by the terminal device to the head-mounted display device.

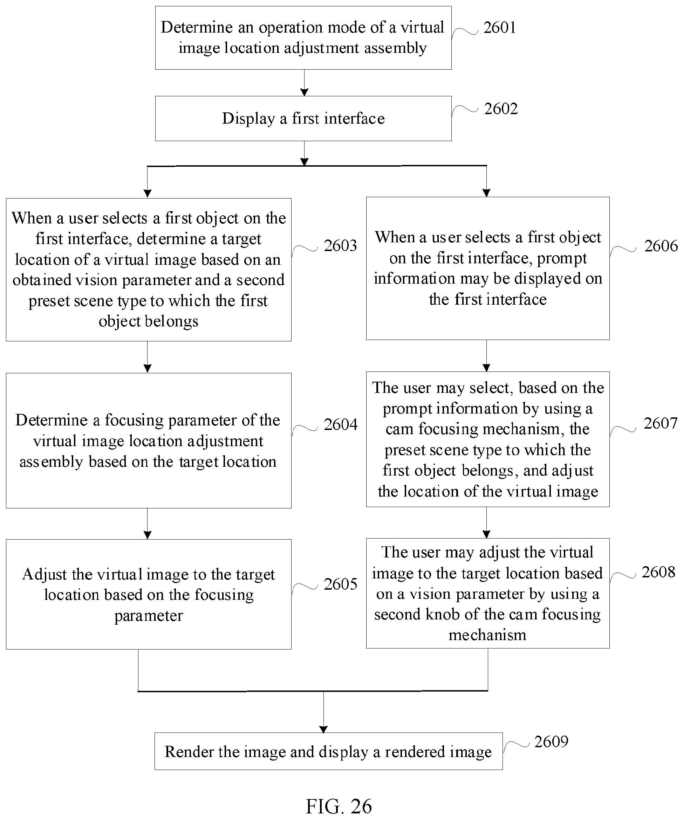

Based on the foregoing content and a same concept, this disclosure provides still another virtual image location adjustment method. Refer to FIG. 26. The virtual image location adjustment method may be applied to a head-mounted display device. The method includes the following steps.

Step 2601: Determine an operation mode of a virtual image location adjustment assembly. If the determined operation mode is an automatic mode, step 2603 to step 2605 are performed. If the determined operation mode is a manual mode, step 2606 to step 2608 are performed.

Step 2602: Display a first interface.

For step 2602, refer to the foregoing related descriptions. Details are not described herein again.

Step 2603: When a user selects a first object on the first interface, determine a target location of a virtual image based on an obtained vision parameter and a second preset scene type to which the first object belongs.

Step 2604: Determine a focusing parameter of the virtual image location adjustment assembly based on the target location.

The focusing parameter is, for example, the to-move distances of the optical imaging assembly and/or the display assembly, the voltage signal or the current signal that is applied to the zoom lens, the to-rotate angles of the first diffractive optical element and the second diffractive optical element, and the to-move distances of the first refractive optical element and the second refractive optical element along the direction perpendicular to the principal optical axis that are described above. For details, refer to the foregoing related descriptions. Details are not described herein again.

Step 2605: Adjust the virtual image to the target location based on the focusing parameter.

For step 2605, refer to the foregoing related descriptions. Details are not described herein again.

Step 2606: When a user selects a first object on the first interface, prompt information may be displayed on the first interface. The prompt information may be used to prompt the user to adjust a location of a virtual image. For example, the prompt information may indicate a preset scene type to which the first object belongs.

Step 2607: The user may select, based on the prompt information by using a cam focusing mechanism, the preset scene type to which the first object belongs, and adjust the location of the virtual image.

Herein, the user may rotate a first knob of the cam focusing mechanism to select the preset scene type. When the first knob is rotated to select the preset scene type to which the first object belongs, a guide post (or a guide cylinder) may be driven to drive an optical imaging assembly to move, so as to adjust the location of the virtual image.

Step 2608: The user may adjust the virtual image to the target location based on a vision parameter by using a second knob of the cam focusing mechanism.

For more detailed descriptions of step 2607 and step 2608, refer to the foregoing related content. Details are not described herein again.

Step 2609: Render the image and display a rendered image.

It can be understood that, to implement the functions in the foregoing examples, the head-mounted display device and the terminal device include corresponding hardware structures and/or software modules for performing the functions. A person skilled in the art should be easily aware that this disclosure can be implemented by hardware or a combination of hardware and computer software in combination with the modules and the method steps in the examples described in examples disclosed in this disclosure. Whether a function is performed by hardware or hardware driven by computer software depends on particular application scenarios and design constraints of technical solutions.

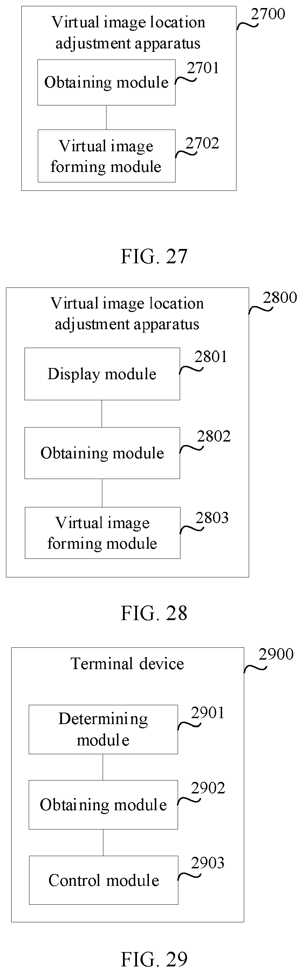

Based on the foregoing content and a same concept, FIG. 27 and FIG. 28 are schematic diagrams of structures of possible virtual image location adjustment apparatuses according to this disclosure. The virtual image location adjustment apparatuses may be configured to implement the functions of the display module in the foregoing method examples, and therefore can also achieve the beneficial effects of the foregoing method examples. In this disclosure, the virtual image location adjustment apparatus may include the display module in FIG. 3 to FIG. 18c, and the virtual image location adjustment apparatus may be used in a head-mounted display device.

As shown in FIG. 27, the virtual image location adjustment apparatus 2700 includes an obtaining module 2701 and a virtual image forming module 2702. When the virtual image location adjustment apparatus 2700 is configured to implement the functions of the display module in the method example shown in FIG. 22, the obtaining module 2701 is configured to obtain an image displayed by the head-mounted display device, and obtain a target location of a virtual image corresponding to the image, where the target location of the virtual image is related to a preset scene type to which the image belongs; and the virtual image forming module 2702 is configured to form the virtual image at the target location based on the image.

For more detailed descriptions of the obtaining module 2701 and the virtual image forming module 2702, refer to related descriptions in the method example shown in FIG. 22. Details are not described herein again.

As shown in FIG. 28, the virtual image location adjustment apparatus 2800 includes a display module 2801, an obtaining module 2802, and a virtual image forming module 2803. When the virtual image location adjustment apparatus 2800 is configured to implement the functions of the display module in the method example shown in FIG. 23, the display module 2801 is configured to display a first interface; the obtaining module 2802 is configured to: when a user selects a first object on the first interface, obtain a target location of a virtual image corresponding to the first object, where the target location of the virtual image is related to a preset scene type to which the first object belongs; and the virtual image forming module 2803 is configured to: for an image displayed upon triggering by the selection of the first object, form the virtual image at the target location based on the image.

For more detailed descriptions of the display module 2801, the obtaining module 2802, and the virtual image forming module 2803, refer to related descriptions in the method example shown in FIG. 23. Details are not described herein again.

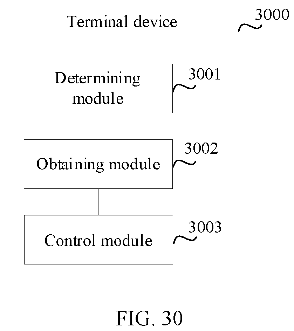

Based on the foregoing content and a same concept, FIG. 29 and FIG. 30 are schematic diagrams of structures of possible terminal devices according to this disclosure. The terminal devices may be configured to implement the functions of the terminal device in the foregoing method examples, and therefore can also achieve the beneficial effects of the foregoing method examples.

FIG. 29 is a schematic diagram of a structure of a terminal device according to this disclosure. As shown in FIG. 29, the terminal device 2900 includes a determining module 2901, an obtaining module 2902, and a control module 2903. When the terminal device 2900 is configured to implement the functions of the terminal device in the method example shown in FIG. 24, the determining module 2901 is configured to determine a first preset scene type to which an image belongs, where the image is displayed by a head-mounted display device; the obtaining module 2902 is configured to obtain a correspondence between a preset scene type and a virtual image location; the determining module 2901 is further configured to determine, based on the correspondence between a preset scene type and a virtual image location, a target location that corresponds to the first preset scene type and at which the head-mounted display device presents a virtual image, where the target location of the virtual image is related to a preset scene type to which the image belongs; and the control module 2903 is configured to control, based on the target location, the head-mounted display device to form the virtual image at the target location based on the image.

For more detailed descriptions of the determining module 2901, the obtaining module 2902, and the control module 2903, refer to related descriptions in the method example shown in FIG. 24. Details are not described herein again.

FIG. 30 is a schematic diagram of a structure of a terminal device according to this disclosure. As shown in FIG.

30, the terminal device 3000 includes a determining module 3001, an obtaining module 3002, and a control module 3003. When the terminal device 3000 is configured to implement the functions of the terminal device in the method example shown in FIG. 25, the obtaining module 3002 is configured to obtain a first object selected by a user on a first interface displayed by a head-mounted display device, obtain a second preset scene type to which the first object belongs, and obtain a correspondence between a preset scene type and a virtual image location; the determining module 3001 is configured to determine, based on the correspondence between a preset scene type and a virtual image location, a target location that corresponds to the second preset scene type and at which the head-mounted display device presents a virtual image, where the target location of the virtual image is related to a preset scene type to which the first object belongs; and the control module 3003 is configured to control, based on the target location, the head-mounted display device to form the virtual image at the target location based on the image.

For more detailed descriptions of the determining module 3001, the obtaining module 3002, and the control module 3003, refer to related descriptions in the method example shown in FIG. 25. Details are not described herein again.

In a possible implementation, the terminal device may be a mobile phone, a tablet computer, or the like.

The method steps in examples of this disclosure may be implemented by hardware, or may be implemented by a processor executing software instructions. The software instructions may include corresponding software modules. The software modules may be stored in a random access memory (random access memory, RAM), a flash memory, a read-only memory (read-only memory, ROM), a programmable read-only memory (Programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a head-mounted display device or a terminal device. Certainly, the processor and the storage medium may alternatively exist in the head-mounted display device or the terminal device as discrete components.

All or some of the foregoing examples may be implemented by software, hardware, firmware, or any combination thereof. When software is used to implement the examples, all or some of the examples may be implemented in a form of a computer program product. The computer program product includes one or more computer programs or instructions. When the computer programs or instructions are loaded and executed on a computer, all or some of the processes or the functions in examples of this disclosure are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

In examples of this disclosure, unless otherwise stated or there is a logic conflict, terms and/or descriptions in different examples are consistent and may be mutually referenced, and technical features in different examples may be combined based on an internal logical relationship thereof, to form a new example.

In this disclosure, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. "At least one of the following" or a similar expression thereof indicates any combination of the items, including any combination of one or more of the items. For example, at least one of a, b, or c may indicate a, b, c, a and b, a and c, b and c, or a, b, and c, where a, b, and c may be singular or plural. In the text descriptions of this disclosure, the character "/" usually indicates an "or" relationship between the associated objects. In the formulas of this disclosure, the character "/" indicates a "division" relationship between the associated objects. In this disclosure, the symbol "(a, b)" indicates an open interval with a range greater than a and less than b, "[a, b]" indicates a closed interval with a range greater than or equal to a and less than or equal to b, "(a, b]" indicates a half-open and half-closed interval with a range greater than a and less than or equal to b, and "[a, b)" indicates a half-open and half-closed interval with a range greater than or equal to a and less than b. In addition, in this disclosure, the term "example" is used to represent giving an example, an illustration, or a description. Any example or design solution described as an "example" in this disclosure should not be construed as being more preferred or more advantageous than other examples or design solutions. Alternatively, this may be understood as that the term "example" is used to present a concept in a specific manner, and does not constitute a limitation on this disclosure.

It can be understood that various numbers in this disclosure are merely used for differentiation for ease of description, and are not intended to limit the scope of this disclosure. Sequence numbers of the foregoing processes do not mean execution sequences. The execution sequences of the processes should be determined based on functions and internal logic of the processes. The terms "first" and "second" and similar expressions are intended to distinguish between similar objects but do not necessarily indicate a specific order or sequence. In addition, terms "comprise", "include", and any variants thereof are intended to cover a non-exclusive inclusion. For example, a series of steps or units are included.

**Claims**

1. A display module, comprising a display assembly (301, 1901), an optical imaging assembly (302, 1902), a control assembly (304, 1904) and a virtual image location adjustment assembly (303, 1903), wherein

   the display assembly (301, 1901) is configured to display an image;
   the optical imaging assembly (302, 1902) is configured to form a virtual image based on the image;
   the virtual image location adjustment assembly (303, 1903) is configured to adjust the optical imaging assembly (302, 1902) and/or the display assembly (301, 1901), to adjust the virtual image to a target location; and
   the control assembly (304, 1904) is configured to obtain the target location of the virtual image, and control the virtual image location adjustment assembly (303, 1903) to adjust the optical imaging assembly (302, 1902) and/or the display assembly (301, 1901), to adjust the virtual image to the target location,
   wherein the target location of the virtual image is related to a preset scene type to which content of the image or an object corresponding to the image belongs, the preset scene type being an office scene type, a reading scene type, a conference scene type, an interactive game scene type, or a video scene type,
   wherein the control assembly (304, 1904) is configured to: obtain a vision parameter; obtain a first preset scene type to which the image displayed by the display assembly (301, 1901) belongs; obtain a correspondence between one preset scene type and one virtual image location; and then
   determine, based on the vision parameter and the correspondence between the one preset scene type and the one virtual image location, one target location corresponding to the first preset scene type by finely adjusting the one virtual image location based on the obtained vision parameter, and
   wherein when the image belongs to different preset scene types, the display module presents the virtual image at different target locations.

2. The display module according to claim 1, wherein the vision parameter comprises binocular vision parameters.

3. The display module according to claim 1 or 2, wherein vision parameter types of the vision parameter include: diopters of myopia, diopters of astigmatism, diopters of presbyopia, or diopters of hyperopia.

4. The display module according to any one of claims 1 to 3, wherein the virtual image location adjustment assembly (303, 1903) comprises a driving assembly; and
   the driving assembly is configured to drive the optical imaging assembly (302, 1902) and/or the display assembly (301, 1901) to move, to adjust the virtual image to the target location.

5. The display module according to any one of claims 1 to 3, wherein the virtual image location adjustment assembly (303, 1903) comprises a driving assembly and a location sensing assembly;
   the location sensing assembly is configured to:

   determine locations of the optical imaging assembly (302, 1902) and/or the display assembly (301, 1901), wherein the locations of the optical imaging assembly (302, 1902) and/or the display assembly (301, 1901) are used to determine a first distance between the display assembly (301, 1901) and the optical imaging assembly (302, 1902), and the first distance is used to determine to-move distances of the optical imaging assembly (302, 1902) and/or the display assembly (301, 1901); or determine a first distance between the optical imaging assembly (302, 1902) and/or the display assembly (301, 1901); and
   the driving assembly is configured to:
   drive, based on the to-move distances, the optical imaging assembly (302, 1902) and/or the display assembly (301, 1901) to move, to adjust the virtual image to the target location.

6. The display module according to claim 5, wherein
   adjustment precision of the virtual image location adjustment assembly (303, 1903) is determined based on a driving error of the driving assembly and a location measurement error of the location sensing assembly.

7. The display module according to claim 5, wherein
an adjustment range of the virtual image location adjustment assembly (303, 1903) is determined based on a driving range of the driving assembly and a measurement range of the location sensing assembly.

8. A virtual image location adjustment method, wherein the method is applied to a head-mounted display device, and the method comprises:

obtaining an image displayed by the head-mounted display device;
obtaining a target location of a virtual image corresponding to the image, wherein the target location of the virtual image is related to a preset scene type to which content of the image or an object corresponding to the image belongs, the preset scene type being an office scene type, a reading scene type, a conference scene type, an interactive game scene type, or a video scene type; and
forming the virtual image at the target location based on the image, wherein when the image belongs to different preset scene types, the head-mounted display device presents the virtual image at different target locations, wherein the obtaining a target location of a virtual image corresponding to the image comprises:

obtaining a vision parameter;
obtaining a first preset scene type to which the image displayed by the display assembly belongs;
obtaining a correspondence between a preset scene type and a virtual image location; and then
determining, based on the vision parameter and the correspondence between a preset scene type and a virtual image location, the target location corresponding to the first preset scene type by finely adjusting the one virtual image location based on the obtained vision parameter.

9. The method according to claim 8, wherein the obtaining a first preset scene type to which the image displayed by the head-mounted display device belongs comprises:
receiving the first preset scene type to which the image belongs and that is sent by a terminal device (2900, 3000).

10. The method according to claim 8, wherein the obtaining a first preset scene type to which the image displayed by the head-mounted display device belongs comprises:
determining the first preset scene type to which the content of the image belongs or the object corresponding to the image belongs.

11. The method according to claim 8, wherein the obtaining a target location of a virtual image corresponding to the image comprises:
receiving the target location, sent by a terminal device (2900, 3000), of the virtual image corresponding to the image.

12. The method according to any one of claims 8 to 11, wherein the head-mounted display device comprises a display assembly and an optical imaging assembly; and
the forming the virtual image at the target location based on the image comprises:

obtaining a first distance between the display assembly and the optical imaging assembly;
determining to-move distances of the display assembly and/or the optical imaging assembly based on the first distance and the target location; and
driving, based on the to-move distances, the display assembly and/or the optical imaging assembly to move, to adjust the virtual image to the target location.

13. The method according to claim 8, wherein the head-mounted display device comprises a display assembly and an optical imaging assembly; and
the forming the virtual image at the target location based on the image comprises:

receiving to-move distances, sent by a terminal device (2900, 3000), of the display assembly and/or the optical imaging assembly; and
driving, based on the to-move distances, the display assembly and/or the optical imaging assembly to move, to adjust the virtual image to the target location.

14. The method according to any one of claims 8 to 13, wherein the vision parameter comprises binocular vision parameters.

15. The method according to any one of claims 8 to 14, wherein vision parameter types of the vision parameter include: diopters of myopia, diopters of astigmatism, diopters of presbyopia, or diopters of hyperopia.

**Patentansprüche**

1. Displaymodul, umfassend eine Displayanordnung (301, 1901), eine optische Bildgebungsanordnung (302, 1902), eine Steueranordnung (304, 1904) und eine Abstimmungsanordnung für die Position eines virtuellen Bildes (303, 1903), wobei

die Displayanordnung (301, 1901) ausgestaltet ist, um ein Bild anzuzeigen;
die optische Bildgebungsanordnung (302, 1902) ausgestaltet ist, um basierend auf dem Bild ein virtuelles Bild zu bilden;
die Abstimmungsanordnung für die Position des virtuellen Bildes (303, 1903) ausgestaltet ist, um die optische Bildgebungsanordnung (302, 1902) und/oder die Displayanordnung (301, 1901) abzustimmen, um das virtuelle Bild auf eine Zielposition abzustimmen; und
die Steueranordnung (304, 1904) ausgestaltet ist, um die Zielposition des virtuellen Bildes zu erhalten und die Abstimmungsanordnung für die Position des virtuellen Bildes (303, 1903) so zu steuern, dass die optische Bildgebungsanordnung (302, 1902) und/oder die Displayanordnung (301, 1901) so abgestimmt werden, dass das virtuelle Bild auf die Zielposition abgestimmt wird,
wobei die Zielposition des virtuellen Bildes mit einem vorgegebenen Szenetyp in Beziehung steht, zu dem Inhalt des Bildes oder ein Objekt, welches dem Bild entspricht, gehört, wobei der vorgegebene Szenetyp ein Büro-Szenetyp, ein Lese-Szenetyp, ein Konferenz-Szenetyp, ein Szenetyp eines interaktiven Spiels oder ein Video-Szenetyp ist,
wobei die Steueranordnung (304, 1904) ausgestaltet ist zum: Erhalten eines Sehparame-ters; Erhalten eines ersten vorgegebenen Szenetyps, zu dem das durch die Displayanordnung (301, 1901) angezeigte Bild gehört; Erhalten einer Entsprechung zwischen einem vorgegebenen Szenetyp und einer virtuellen Bildposition; und dann
Bestimmen einer Zielposition entsprechend dem ersten vorgegebenen Szenetyp basierend auf dem Sehparameter und der Entsprechung zwischen dem einen vorgegebenen Szenetyp und der einen virtuellen Bildposition, indem die eine virtuelle Bildposition basierend auf dem erhaltenen Sehparameter fein abgestimmt wird, und wobei das Displaymodul, wenn das Bild zu unterschiedlichen vorgegebenen Szenetypen gehört, das virtuelle Bild an unterschiedlichen Zielpositionen präsentiert.

2. Displaymodul gemäß Anspruch 1, wobei der Sehparameter binokulare Sehparameter umfasst.

3. Displaymodul gemäß Anspruch 1 oder 2, wobei Sehparametertypen des Sehparameters einschließen: Dioptrien von Myopie, Dioptrien von Astigmatismus, Dioptrien von Presbyopie oder Dioptrien von Hyperopie.

4. Displaymodul gemäß einem der Ansprüche 1 bis 3, wobei die Abstimmungsanordnung für die Position des virtuellen Bildes (303, 1903) eine Antriebsanordnung umfasst; und
die Antriebsanordnung ausgestaltet ist, um die optische Bildgebungsanordnung (302, 1902) und/oder die Displayanordnung (301, 1901) zur Bewegung anzutreiben, um das virtuelle Bild auf eine Zielposition abzustimmen.

5. Displaymodul gemäß einem der Ansprüche 1 bis 3, wobei die Abstimmungsanordnung für die Position des virtuellen Bildes (303, 1903) eine Antriebsanordnung und eine Positionsabfühlanordnung umfasst;
wobei die Positionsabfühlanordnung ausgestaltet ist zum:

Bestimmen von Positionen der optischen Bildgebungsanordnung (302, 1902) und/oder der Displayanordnung (301, 1901), wobei die Positionen der optischen Bildgebungsanordnung (302, 1902) und/oder der Displayanordnung (301, 1901) verwendet werden, um einen ersten Abstand zwischen der Displayanordnung (301, 1901) und der optischen Bildgebungsanordnung (302, 1902) zu bestimmen, und der erste Abstand verwendet wird, um zu bewegende Abstände der optischen Bildgebungsanordnung (302, 1902) und/oder der Displayanordnung (301, 1901) zu bestimmen; oder einen ersten Abstand zwischen der optischen Bildgebungsanordnung (302, 1902) und/oder der Displayanordnung (301, 1901) zu bestimmen; und
wobei die Antriebsanordnung ausgestaltet ist zum:

Antreiben der optischen Bildgebungsanordnung (302, 1902) und/oder der Displayanordnung (301, 1901) zur Bewegung basierend auf den zu bewegenden Abständen, um das virtuelle Bild auf eine Zielposition abzustimmen.

6. Displaymodul gemäß Anspruch 5, wobei
die Abstimmungsgenauigkeit der Abstimmungsanordnung für die Position des virtuellen Bildes (303, 1903) basierend auf einem Antriebsfehler der Antriebsanordnung und einem Positionsmessfehler der Positionsabfühlanordnung bestimmt wird.

7. Displaymodul gemäß Anspruch 5, wobei
ein Abstimmungsbereich der Abstimmungsanordnung für die Position des virtuellen Bildes (303, 1903) basierend auf einem Antriebsbereich der Antriebsanordnung und einem Messbereich der Positionsabfühlanordnung bestimmt wird.

8. Abstimmungsverfahren für die Position eines virtuellen Bildes, wobei das Verfahren auf ein "Head-Mounted"-Displaygerät angewendet wird und das Verfahren umfasst:

Erhalten eines Bildes, das durch das "Head-Mounted"-Displaygerät angezeigt wird;
Erhalten einer Zielposition eines virtuellen Bildes entsprechend dem Bild, wobei die Zielposition des virtuellen Bildes mit einem vorgegebenen Szenetyp in Beziehung steht, zu dem Inhalt des Bildes oder ein Objekt, welches dem Bild entspricht, gehört, wobei der vorgegebene Szenetyp ein Büro-Szenetyp, ein Lese-Szenetyp, ein Konferenz-Szenetyp, ein Szenetyp eines interaktiven Spiels oder ein Video-Szenetyp ist, und
Bilden des virtuellen Bildes an der Zielposition basierend auf dem Bild, wobei das "Head-Mounted"-Displaygerät, wenn das Bild zu unterschiedlichen vorgegebenen Szenetypen gehört, das virtuelle Bild an unterschiedlichen Zielpositionen präsentiert,
wobei das Erhalten einer Zielposition eines virtuellen Bildes entsprechend dem Bild umfasst:

Erhalten eines Sehparameters;
Erhalten eines ersten vorgegebenen Szenetyps, zu dem das durch die Displayanordnung angezeigte Bild gehört;
Erhalten einer Entsprechung zwischen einem vorgegebenen Szenetyp und einer virtuellen Bildposition; und dann
Bestimmen der Zielposition, die dem ersten vorgegebenen Szenetyp entspricht, basierend auf dem Sehparameter und der Entsprechung zwischen einem vorgegebenen Szenetyp und einer virtuellen Bildposition, indem die eine virtuelle Bildposition basierend auf dem erhaltenen Sehparameter fein abgestimmt wird.

9. Verfahren gemäß Anspruch 8, wobei das Erhalten eines ersten vorgegebenen Szenetyps, zu dem das durch das "Head-Mounted"-Displaygerät angezeigte Bild gehört, umfasst: Empfangen des ersten vorgegebenen Szenetyps, zu dem das Bild gehört, und der durch ein Endgerät (2900, 3000) gesendet wird.

10. Verfahren gemäß Anspruch 8, wobei das Erhalten eines ersten vorgegebenen Szenetyps, zu dem das durch das "Head-Mounted"-Displaygerät angezeigte Bild gehört, umfasst: Bestimmen des ersten vorgegebenen Szenetyps, zu dem der Inhalt des Bildes gehört oder das Objekt, das dem Bild entspricht, gehört.

11. Verfahren gemäß Anspruch 8, wobei das Erhalten einer Zielposition eines virtuellen Bildes entsprechend dem Bild umfasst:
Empfangen der Zielposition des virtuellen Bildes entsprechend dem Bild, welche durch ein Endgerät (2900, 3000) gesendet wurde.

12. Verfahren gemäß einem der Ansprüche 8 bis 11, wobei das "Head-Mounted"-Displaygerät eine Displayanordnung und eine optische Bildgebungsanordnung umfasst; und
das Bilden des virtuellen Bildes an der Zielposition basierend auf dem Bild umfasst:

Erhalten eines ersten Abstands zwischen der Displayanordnung und der optischen Bildgebungsanordnung;
Bestimmen von zu bewegenden Abständen der Displayanordnung und/oder der optischen Bildgebungsanordnung basierend auf dem ersten Abstand und der Zielposition; und
Antreiben der Displayanordnung und/oder der optischen Bildgebungsanordnung zur Bewegung basierend auf den zu bewegenden Abständen, um das virtuelle Bild auf eine Zielposition abzustimmen.

13. Verfahren gemäß Anspruch 8, wobei das "Head-Mounted"-Displaygerät eine Displayanordnung und eine optische Bildgebungsanordnung umfasst; und
das Bilden des virtuellen Bildes an der Zielposition basierend auf dem Bild umfasst:

Empfangen von zu bewegenden Abständen der Displayanordnung und/oder der optischen Bildgebungsanordnung, welche von einem Endgerät (2900, 3000) gesendet wurden; und
Antreiben der Displayanordnung und/oder der optischen Bildgebungsanordnung zur Bewegung basierend auf den zu bewegenden Abständen, um das virtuelle Bild auf die Zielposition abzustimmen.

14. Verfahren gemäß einem der Ansprüche 8 bis 13, wobei der Sehparameter binokulare Sehparameter umfasst.

15. Verfahren gemäß einem der Ansprüche 8 bis 14, wobei Sehparametertypen des Sehparameters einschließen: Dioptrien von Myopie, Dioptrien von Astigmatismus, Dioptrien von Presbyopie oder Dioptrien von Hyperopie.

## Revendications

1. Module d'affichage, comprenant un ensemble d'affichage (301, 1901), un ensemble d'imagerie optique (302, 1902), un ensemble de commande (304, 1904) et un ensemble de réglage de position d'image virtuelle (303, 1903),

l'ensemble d'affichage (301, 1901) étant configuré pour afficher une image ;
l'ensemble d'imagerie optique (302, 1902) étant configuré pour former une image virtuelle sur la base de l'image ;
l'ensemble de réglage de position d'image virtuelle (303, 1903) étant configuré pour régler l'ensemble d'imagerie optique (302, 1902) et/ou l'ensemble d'affichage (301, 1901), pour régler l'image virtuelle à une position cible ; et
l'ensemble de commande (304, 1904) étant configuré pour obtenir la position cible de l'image virtuelle, et commander l'ensemble de réglage de position d'image virtuelle (303, 1903) pour régler l'ensemble d'imagerie optique (302, 1902) et/ou l'ensemble d'affichage (301, 1901), pour régler l'image virtuelle à la position cible,
la position cible de l'image virtuelle étant liée à un type de scène prédéfini auquel le contenu de l'image ou un objet correspondant à l'image appartient, le type de scène prédéfini étant un type de scène de bureau, un type de scène de lecture, un type de scène de conférence, un type de scène de jeu interactif ou un type de scène vidéo,
l'ensemble de commande (304, 1904) étant configuré pour : obtenir un paramètre de vision ; obtenir un premier type de scène prédéfini auquel l'image affichée par l'ensemble d'affichage (301, 1901) appartient ; obtenir une correspondance entre un type de scène prédéfini et une position d'image virtuelle ; et ensuite
déterminer, sur la base du paramètre de vision et de la correspondance entre le type de scène prédéfini et la position d'image virtuelle, une position cible correspondant au premier type de scène prédéfini en réglant finement la position d'image virtuelle sur la base du paramètre de vision obtenu, et
lorsque l'image appartient à des types de scène prédéfinis différents, le module d'affichage présentant l'image virtuelle à des positions cibles différentes.

2. Module d'affichage selon la revendication 1, le paramètre de vision comprenant des paramètres de vision binoculaire.

3. Module d'affichage selon la revendication 1 ou 2, les types de paramètres de vision du paramètre de vision incluant : des dioptries de myopie, des dioptries d'astigmatisme, des dioptries de presbytie ou des dioptries d'hypermétropie.

4. Module d'affichage selon l'une quelconque des revendications 1 à 3, l'ensemble de réglage de position d'image virtuelle (303, 1903) comprenant un ensemble d'entraînement ; et l'ensemble d'entraînement étant configuré pour entraîner l'ensemble d'imagerie optique (302, 1902) et/ou l'ensemble d'affichage (301, 1901) à se déplacer, pour régler l'image virtuelle à la position cible.

5. Module d'affichage selon l'une quelconque des revendications 1 à 3, l'ensemble de réglage de position d'image virtuelle (303, 1903) comprenant un ensemble d'entraînement et un ensemble de détection de position ;
l'ensemble de détection de position étant configuré pour :

déterminer des positions de l'ensemble d'imagerie optique (302, 1902) et/ou de l'ensemble d'affichage (301, 1901), les positions de l'ensemble d'imagerie optique (302, 1902) et/ou de l'ensemble d'affichage (301, 1901) étant utilisées pour déterminer une première distance entre l'ensemble d'affichage (301, 1901) et l'ensemble d'imagerie optique (302, 1902), et la première distance étant utilisée pour déterminer des distances de déplacement de l'ensemble d'imagerie optique (302, 1902) et/ou de l'ensemble d'affichage (301, 1901) ; ou déterminer une première distance entre l'ensemble d'imagerie optique (302, 1902) et/ou l'ensemble d'affichage (301, 1901) ; et

l'ensemble d'entraînement étant configuré pour :

entraîner, sur la base des distances de déplacement, l'ensemble d'imagerie optique (302, 1902) et/ou l'ensemble d'affichage (301, 1901) à se déplacer, pour régler l'image virtuelle à la position cible.

6. Module d'affichage selon la revendication 5,
une précision de réglage de l'ensemble de réglage de position d'image virtuelle (303, 1903) étant déterminée sur la base d'une erreur d'entraînement de l'ensemble d'entraînement et d'une erreur de mesure de position de l'ensemble de détection de position.

7. Module d'affichage selon la revendication 5,
une plage de réglage de l'ensemble de réglage de position d'image virtuelle (303, 1903) étant déterminée sur la base d'une plage d'entraînement de l'ensemble d'entraînement et d'une plage de mesure de l'ensemble de détection de position.

8. Procédé de réglage de position d'image virtuelle, le procédé étant appliqué à un dispositif d'affichage monté sur la tête, et le procédé comprenant :

l'obtention d'une image affichée par le dispositif d'affichage monté sur la tête ;
l'obtention d'une position cible d'une image virtuelle correspondant à l'image, la position cible de l'image virtuelle étant liée à un type de scène prédéfini auquel le contenu de l'image ou un objet correspondant à l'image appartient, le type de scène prédéfini étant un type de scène de bureau, un type de scène de lecture, un type de scène de conférence, un type de scène de jeu interactif ou un type de scène vidéo ; et
la formation de l'image virtuelle à la position cible sur la base de l'image, lorsque l'image appartient à des types de scène prédéfinis différents, le dispositif d'affichage monté sur la tête présentant l'image virtuelle à des positions cibles différentes,
l'obtention d'une position cible d'une image virtuelle correspondant à l'image comprenant :

l'obtention d'un paramètre de vision ;
l'obtention d'un premier type de scène prédéfini auquel l'image affichée par l'ensemble d'affichage appartient ;
l'obtention d'une correspondance entre un type de scène prédéfini et une position d'image virtuelle ; et ensuite la détermination, sur la base du paramètre de vision et de la correspondance entre un type de scène prédéfini et une position d'image virtuelle, de la position cible correspondant au premier type de scène prédéfini par le réglage fin de la position d'image virtuelle sur la base du paramètre de vision obtenu.

9. Procédé selon la revendication 8, l'obtention d'un premier type de scène prédéfini auquel l'image affichée par le dispositif d'affichage monté sur la tête appartient comprenant :
la réception du premier type de scène prédéfini auquel l'image appartient et qui est envoyé par un dispositif terminal (2900, 3000).

10. Procédé selon la revendication 8, l'obtention d'un premier type de scène prédéfini auquel l'image affichée par le dispositif d'affichage monté sur la tête appartient comprenant :
la détermination du premier type de scène prédéfini auquel le contenu de l'image appartient ou l'objet correspondant à l'image appartient.

11. Procédé selon la revendication 8, l'obtention d'une position cible d'une image virtuelle correspondant à l'image comprenant :
la réception de la position cible, envoyée par un dispositif terminal (2900, 3000), de l'image virtuelle correspondant à l'image.

12. Procédé selon l'une quelconque des revendications 8 à 11, le dispositif d'affichage monté sur la tête comprenant un ensemble d'affichage et un ensemble d'imagerie optique ; et
la formation de l'image virtuelle à la position cible sur la base de l'image comprenant :

l'obtention d'une première distance entre l'ensemble d'affichage et l'ensemble d'imagerie optique ;

la détermination de distances de déplacement de l'ensemble d'affichage et/ou de l'ensemble d'imagerie optique sur la base de la première distance et de la position cible ; et

l'entraînement, sur la base des distances de déplacement, de l'ensemble d'affichage et/ou de l'ensemble d'imagerie optique à se déplacer, pour régler l'image virtuelle à la position cible.

13. Procédé selon la revendication 8, le dispositif d'affichage monté sur la tête comprenant un ensemble d'affichage et un ensemble d'imagerie optique ; et

la formation de l'image virtuelle à la position cible sur la base de l'image comprenant :

la réception de distances de déplacement, envoyées par un dispositif terminal (2900, 3000), de l'ensemble d'affichage et/ou de l'ensemble d'imagerie optique ; et

l'entraînement, sur la base des distances de déplacement, de l'ensemble d'affichage et/ou de l'ensemble d'imagerie optique à se déplacer pour régler l'image virtuelle à la position cible.

14. Procédé selon l'une quelconque des revendications 8 à 13, le paramètre de vision comprenant des paramètres de vision binoculaire.

15. Procédé selon l'une quelconque des revendications 8 à 14, les types de paramètres de vision du paramètre de vision incluant :

des dioptries de myopie, des dioptries d'astigmatisme, des dioptries de presbytie ou des dioptries d'hypermétropie.

FIG. 1a

FIG. 1b

FIG. 1c

FIG. 2a

Location    Location    Location
1           2           3

FIG. 2b

Display module

Display assembly
301

Optical imaging
assembly 302

Virtual image location
adjustment assembly
303

FIG. 3

First interface
400

Videos

Conferences

Web

Games

Cursor

FIG. 4a

Settings
interface 500

Feature ▼

Optimal depth

⋮

FIG. 4b

Second
interface 600

Enter a virtual image location

Virtual
keyboard

| 7 | 8 | 9 | |
|---|---|---|---|
| 4 | 5 | 6 | ← |
| 1 | 2 | 3 | |
| 0 | | . | OK |

FIG. 4c

Third
interface 700

Enter binocular diopters of myopia (for example,
left-eye diopters of –2.0 and right-eye diopters of
–3.0)

| Left eye ▼ | Right eye ▼ |
|---|---|
| 0 | 0 |
| –1.0 | –1.0 |
| –1.5 | –1.5 |
| –2.0 | –2.0 |
| ⋮ | ⋮ |

FIG. 4d

Third
interface 700

Enter binocular diopters of myopia (for example,
left-eye diopters of –2.0 and right-eye diopters of
–3.0)

| Left eye | Enter diopters | Right eye | Enter diopters |
|---|---|---|---|

Virtual
keyboard

| 7 | 8 | 9 | |
|---|---|---|---|
| 4 | 5 | 6 | ← |
| 1 | 2 | 3 | |
| 0 | | · | OK |

FIG. 4e

Fourth interface
800

| Vision parameter type ▼ |
|---|
| Myopia |
| Hyperopia |
| Astigmatism |
| Presbyopia |

⋮

FIG. 4f

First lens

Snap ring

FIG. 5

Second quarter-wave plate
and reflective polarizer

First quarter-wave
plate and polarizer

Aberration
compensation
lens 1

Aberration
compensation
lens 2

First semi-transparent
and semi-reflective
mirror

FIG. 6a

FIG. 6b

Lens tube

Optical imaging
assembly

FIG. 6c

Semi-transparent and
semi-reflective mirror

r₂

n

r₁

Semi-transparent and
semi-reflective film

FIG. 6d

First display

Third lens

Second semi-transparent
and semi-reflective mirror

Second lens

Second display

Fourth lens

FIG. 7

FIG. 8

FIG. 9

FIG. 10

Diffractive
optical element 1

Diffractive
optical element 2

FIG. 11

Major axis of
liquid crystal
molecules

Electrode

Substrate

Incident light

FIG. 12a

Reflected light

Liquid crystal
molecules

Incident light

Glass substrate

Electrode

Silicon substrate

FIG. 12b

FIG. 12c

FIG. 13a

FIG. 13b

FIG. 14a

FIG. 14b

FIG. 15

FIG. 16a

Optical imaging assembly

Display assembly

The optical imaging
assembly moves

FIG. 16b

Optical imaging
assembly

Display assembly

The optical imaging
assembly moves

The display
assembly moves

FIG. 16c

FIG. 17a

FIG. 17b

FIG. 17c

FIG. 17d

FIG. 18a

Guide post or
guide cylinder

Cam focusing mechanism

$R$

FIG. 18b

Second knob

1 2 3 4 5 6 7

FIG. 18c

Display module

Display assembly
1901

Image

Optical imaging
assembly 1902

Virtual image location
adjustment assembly
1903

Control
instruction

Control
instruction

Location
information

Control assembly
1904

FIG. 19

Obtain an image displayed by a display assembly

2001

Obtain a target location of a virtual image
corresponding to the image

2002

Control a virtual image location adjustment
assembly to adjust an optical imaging assembly
and/or the display assembly, to form the virtual
image at the target location based on the image

2003

FIG. 20

Display a first interface · 2101

When a user selects a first object on the first interface, obtain a target location of a virtual image corresponding to the first object · 2102

For an image displayed by a display assembly upon triggering by the selection of the first object, control a virtual image location adjustment assembly to adjust an optical imaging assembly and/or the display assembly, to form the virtual image at the target location based on the image · 2103

FIG. 21

Obtain an image displayed by a head-mounted display device · 2201

Obtain a target location of a virtual image corresponding to the image · 2202

Form the virtual image at the target location based on the image · 2203

FIG. 22

Display a first interface 2301

When a user selects a first object on the first interface, obtain a target location of a virtual image corresponding to the first object 2302

For an image displayed upon triggering by the selection of the first object, form the virtual image at the target location based on the image 2303

FIG. 23

Determine a first preset scene type to which an image belongs 2401

Obtain a correspondence between a preset scene type and a virtual image location 2402

Determine, based on the correspondence between a preset scene type and a virtual image location, a target location that corresponds to the first preset scene type and at which a head-mounted display device presents a virtual image 2403

FIG. 24

Obtain a first object selected by a user on a first interface displayed by a head-mounted display device 2501

Obtain a second preset scene type to which the first object belongs 2502

Obtain a correspondence between a preset scene type and a virtual image location 2503

Determine, based on the correspondence between a preset scene type and a virtual image location, a target location that corresponds to the second preset scene type and at which the head-mounted display device presents a virtual image 2504

Control, based on the target location, the head-mounted display device to form the virtual image at the target location based on the image 2505

FIG. 25

Determine an operation mode of a virtual image location adjustment assembly $\sim$ 2601

Display a first interface $\sim$ 2602

When a user selects a first object on the first interface, determine a target location of a virtual image based on an obtained vision parameter and a second preset scene type to which the first object belongs $\sim$ 2603

When a user selects a first object on the first interface, prompt information may be displayed on the first interface $\sim$ 2606

Determine a focusing parameter of the virtual image location adjustment assembly based on the target location $\sim$ 2604

The user may select, based on the prompt information by using a cam focusing mechanism, the preset scene type to which the first object belongs, and adjust the location of the virtual image $\sim$ 2607

Adjust the virtual image to the target location based on the focusing parameter $\sim$ 2605

The user may adjust the virtual image to the target location based on a vision parameter by using a second knob of the cam focusing mechanism $\sim$ 2608

Render the image and display a rendered image $\sim$ 2609

FIG. 26

Virtual image location
adjustment apparatus 2700

Obtaining module 2701

Virtual image
forming module 2702

FIG. 27

Virtual image location
adjustment apparatus 2800

Display module 2801

Obtaining module 2802

Virtual image
forming module 2803

FIG. 28

Terminal device 2900

Determining
module 2901

Obtaining module 2902

Control module 2903

FIG. 29

Terminal device 3000

Determining module 3001

Obtaining module 3002

Control module 3003

FIG. 30

# EP 4 258 039 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019293942 A1
- US 2013241805 A1